# EUROPEAN PATENT APPLICATION

(11) **EP 4 672 502 A1**
(43) Date of publication of application: **31.12.2025**
(21) Application number: 24778267.5
(22) Date of filing: 29.03.2024
(51) Int. Cl.: H01Q 13/18

(54) **CAVITY ANTENNA, LAPTOP, AND TERMINAL**

(30) Priority: 31.03.2023 CN 202310382875; 07.03.2024 CN 202410271318
(71) Applicant: Huawei Technologies Co., Ltd., Shenzhen, Guangdong 518129 (CN)
(72) Inventor: LAI, Ben, Shenzhen, Guangdong 518129 (CN); TIAN, Feng, Shenzhen, Guangdong 518129 (CN); WANG, Chong, Shenzhen, Guangdong 518129 (CN); YOU, Jun, Shenzhen, Guangdong 518129 (CN); ZHANG, Yuzhen, Shenzhen, Guangdong 518129 (CN); XIE, Shuai, Shenzhen, Guangdong 518129 (CN)
(74) Representative: Pfenning, Meinig & Partner mbB
(86) International application number: PCT/CN2024/084989
(87) International publication number: WO 2024/199482

(57) **Abstract**

A cavity antenna, a notebook computer, and a terminal are disclosed. The cavity antenna includes a conductive housing provided with a plurality of dielectric spaces inside. The conductive housing includes a conductive surface. A plurality of dielectric slots are provided on the conductive surface. Each dielectric space corresponds to at least one of the plurality of dielectric slots. The cavity antenna may be used in a terminal device including a metal housing, and radiates an electromagnetic wave of an operating frequency band through a dielectric slot of the metal housing, to transmit a radio signal.

## Description

This application claims priorities to Chinese Patent Application No. 202310382875.1, filed with the China National Intellectual Property Administration on March 31, 2023 and entitled "CAVITY ANTENNA AND TERMINAL", and to Chinese Patent Application No. 202410271318.7, filed with the China National Intellectual Property Administration on March 7, 2024 and entitled "CAVITY ANTENNA, NOTEBOOK COMPUTER, AND TERMINAL", both of which are incorporated herein by reference in their entireties.

### TECHNICAL FIELD

This application relates to the field of antenna structure technologies, and in particular, to a cavity antenna, a notebook computer, and a terminal.

### BACKGROUND

A cavity antenna usually uses internal space of an entire system. A conductor encloses a cavity in a semi-sealed manner, and a slot of the cavity antenna is formed in a non-metallic region close to an appearance surface. An electromagnetic wave enters the cavity of the antenna from external space and is radiated to the external space through the slot.

The cavity antenna is characterized by low profile, integration, and the like, and may be used in a product with an all-metal housing. On the basis of improving perceived quality of the product, simplifying an architecture, and reducing an overall thickness, the metal housing is used to construct the cavity antenna, to implement multi-functional application of some structures in the product, and further implement device miniaturization of the product.

A conventional cavity antenna is designed by using a fundamental mode and a higher-order mode of an antenna. A slot is provided on a side based on a cavity, to form an antenna architecture. However, the current cavity antenna has insufficient bandwidth for signals on a plurality of frequency bands, for example, has insufficient bandwidth for a 2.4G frequency band and a 5G frequency band.

### SUMMARY

This application provides a cavity antenna, a notebook computer, and a terminal, to increase bandwidth of a cavity antenna through a dual-cavity antenna structure.

According to a first aspect, this application provides a cavity antenna, including a conductive housing. The conductive housing includes a conductive surface and a conductive enclosing surface. The conductive surface and the conductive enclosing surface jointly enclose a plurality of dielectric spaces. A plurality of dielectric slots are provided on the conductive surface. Each dielectric space corresponds to at least one of the plurality of dielectric slots.

An antenna pattern is provided on the conductive surface. The antenna pattern includes a first antenna pattern and a second antenna pattern. The plurality of dielectric spaces include a first dielectric space and a second dielectric space. The first antenna pattern and the conductive enclosing surface enclose the first dielectric space. The second antenna pattern and the conductive enclosing surface enclose the second dielectric space. A first dielectric slot is provided on the first antenna pattern. A second dielectric slot is provided on the second antenna pattern.

In the cavity antenna in this embodiment of this application, a conductive surface and a conductive enclosing surface can enclose a dielectric space, at least two conductive surfaces are provided to correspond to at least two dielectric slots, and antenna radiation and tuning are performed through different dielectric slots, to enable the cavity antenna to radiate electromagnetic waves on different frequency bands, and ensure good operating efficiency (for example, both operating efficiency within a frequency range of 2.4 GHz to 2.5 GHz and operating efficiency within a frequency range of 5.2 GHz to 5.8 GHz may be greater than -3 dB). In addition, the cavity antenna in this embodiment of this application may be combined with a ventilation structure of an electronic device, to improve utilization of a device space. An internal cavity space may be used as both a radiation cavity and a ventilation cavity.

In a possible implementation, at least a part of at least two of the plurality of dielectric slots are parallel to each other, so that different dielectric slots can radiate and receive electromagnetic waves of different frequencies in a same direction.

In a possible implementation, the cavity antenna further includes a feeding unit, and the feeding unit is configured to feed the first antenna pattern and the second antenna pattern, to implement feeding of the cavity antenna.

In a possible implementation, the feeding unit feeds the first antenna pattern through contact or coupling, and/or the feeding unit feeds the second antenna pattern through contact or coupling.

In a possible implementation, at least a part of adjacent antenna patterns are directly connected to each other, and/or there is a gap between at least a part of adjacent antenna patterns.

In a possible implementation, a single dielectric space of at least one of the plurality of dielectric spaces corresponds to at least two dielectric slots, and the at least two dielectric slots are arranged at spacings along a width direction. A plurality of dielectric slots are provided, and a specific quantity of suspended stubs are added, to reduce a directivity coefficient of the cavity antenna to radiate an electromagnetic wave, and improve product performance.

In a possible implementation, dielectric slots corresponding to at least two dielectric spaces are arranged in a staggered manner along a width direction of one of the dielectric slots.

In a possible implementation, the conductive housing includes at least a first conductive housing and a second conductive housing, and a dielectric slot on the first conductive housing and a dielectric slot on the second conductive housing are of a symmetric structure. In an embodiment, two independent cavity antennas may be formed by two symmetrically disposed conductive housings, to improve communication efficiency of an electronic device corresponding to the cavity antennas.

In a possible implementation, at least a part of the plurality of dielectric slots have different lengths, so that the cavity antenna can receive electromagnetic waves of different frequencies.

In a possible implementation, among the plurality of dielectric spaces, at least a part of adjacent dielectric spaces are in communication with each other, and/or there is a conductive spacer structure between at least a part of adjacent dielectric spaces.

In a possible implementation, the cavity antenna further includes the feeding unit, the feeding unit extends to a conductive surface corresponding to at least one dielectric space, and the feeding unit is configured to feed the conductive surface.

According to a second aspect, this application provides a notebook computer, including a display and a body. The display is rotatably connected to the body, and the cavity antenna according to any one of the foregoing implementations is disposed in the body. The cavity antenna may be combined with a ventilation structure of the notebook computer, and the ventilation structure may be disposed at a corresponding position on a hinge, to improve space utilization of the notebook computer.

In a possible implementation, the body and the display are rotatably connected through the hinge, the body has a hinge cover, the hinge is disposed in the hinge cover, and a conductive surface of the cavity antenna is arranged opposite to the hinge cover. The cavity antenna and the hinge cover are disposed opposite to each other, and the cavity antenna may be combined with the ventilation structure disposed at the hinge cover.

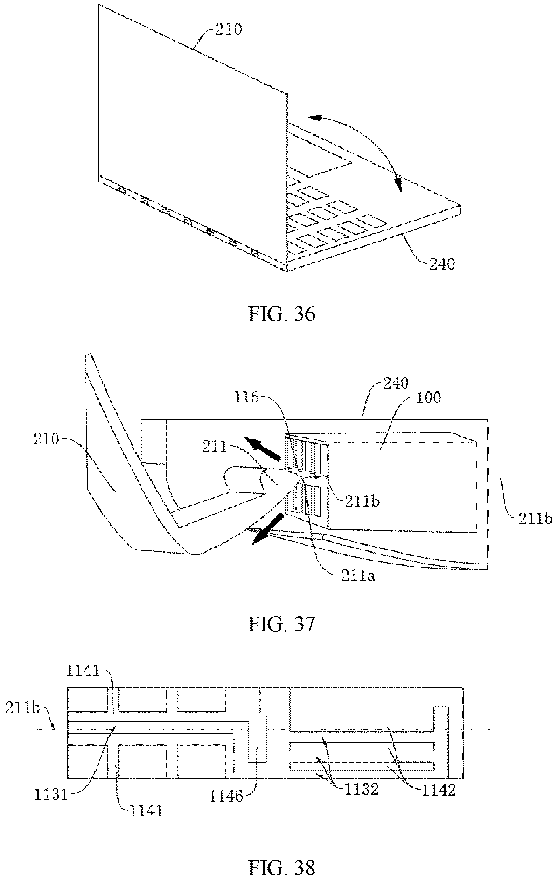

In a possible implementation, the hinge cover has an outer surface opposite to the cavity antenna, and a distance, along a width direction of at least one dielectric slot on the conductive surface, between the dielectric slot and a projection region, on the conductive surface along a shortest distance direction, of a position that is on the outer surface and that is closest to the conductive surface, is less than 1/15 of a wavelength of an electromagnetic wave radiated by the dielectric slot. In this embodiment, a relative positional relationship between a first dielectric slot and a projection of the hinge cover on the cavity antenna is set, to enable an electromagnetic wave radiated by the cavity antenna to be radiated to an upper side and a lower side relative to the hinge cover, as indicated by directions of arrows shown in FIG. 37, to increase a radiation range of the cavity antenna and increase a quantity of radiation directions.

In a possible implementation, the outer surface has an edge structure, an edge of the edge structure extends along an axial direction of the hinge, and the edge is the position that is on the outer surface and that is closest to the conductive surface.

In a possible implementation, a radio frequency chip is disposed in the notebook computer, a feeding unit is disposed on the cavity antenna, and the feeding unit is electrically connected to the radio frequency chip and a conductive surface of the cavity antenna, to implement feeding of the cavity antenna in the notebook computer.

According to a third aspect, this application provides a cavity antenna, including a conductive housing and a conductive spacer structure. A dielectric cavity is provided in the conductive housing, and a first dielectric slot is provided on the conductive housing. The conductive spacer structure divides the dielectric cavity into a first sub-cavity and a second sub-cavity. A second dielectric slot is provided on the conductive spacer structure. An extension direction of at least a part of the first dielectric slot is parallel to an extension direction of at least a part of the second dielectric slot. The first sub-cavity and the second sub-cavity have different sizes. In this implementation, the cavity antenna is constructed, an antenna cavity in the cavity antenna is divided into the first antenna sub-cavity and the second antenna sub-cavity by the spacer structure, and antenna sizes of the first antenna sub-cavity and the second antenna sub-cavity are adjusted to be different, to increase bandwidth of the cavity antenna.

In a possible implementation, a first direction is an extension direction of the part of the first dielectric slot and the part of the second dielectric slot that are parallel to each other, and the first sub-cavity and the second sub-cavity have different sizes along a direction perpendicular to the first direction.

In a possible implementation, the cavity antenna includes an adjustment member. A side surface, located in the dielectric cavity, of the adjustment member is a metal surface. The adjustment member is located in the first sub-cavity or the second sub-cavity. The side surface of the adjustment member is coupled to the conductive housing and the conductive spacer structure. The adjustment member is disposed, so that a size of a sub-cavity can be adjusted in an existing cavity structure. In addition, a size design of the conductive housing does not need to be adjusted based on the size of the sub-cavity, and a structure of an existing cavity antenna may be modified to form two sub-cavities with different sizes.

In a possible implementation, the cavity antenna further includes a feeding unit, a first through hole is provided on the conductive spacer structure, the first through hole is in communication with the first sub-cavity and the second sub-cavity, and the feeding unit is coupled to the conductive spacer structure at two side edges of the first through hole. During feeding through an intermediate layer between the first sub-cavity and the second sub-cavity, double resonances may occur, and compatibility between two higher-order-mode resonances of the cavity antenna on a corresponding frequency band is improved, without an efficiency notch.

In a possible implementation, the first dielectric slot is configured to radiate an electromagnetic wave in the first sub-cavity and an electromagnetic wave in the second sub-cavity, and the second dielectric slot is configured to radiate the electromagnetic wave in the second sub-cavity.

In a possible implementation, the first sub-cavity is configured to generate a first resonance, a frequency of the first resonance is related to a size of the first sub-cavity, the second sub-cavity is configured to generate a second resonance, and a frequency of the second resonance is related to a size of the second sub-cavity.

In a possible implementation, the conductive spacer structure includes a conductive spacer layer, the first sub-cavity and the second sub-cavity are located on two sides of the conductive spacer layer, and the conductive spacer layer may be a conductive coating applied onto a plate.

In a possible implementation, the cavity antenna includes an embedded conductive housing. The embedded conductive housing includes a first embedded portion and a second embedded portion. The first embedded portion and a part of the conductive housing jointly enclose the dielectric cavity. The second embedded portion is the conductive spacer structure for dividing the dielectric cavity into the first sub-cavity and the second sub-cavity. A space between the conductive housing and an outer wall surface of the second embedded portion is the first sub-cavity. An inner cavity enclosed by the first embedded portion and the second embedded portion is the second sub-cavity. A designed cavity antenna in an electronic device may be modified, to dispose an embedded conductive housing in an original dielectric cavity, to modify a single-band cavity antenna into a dual-band cavity antenna.

In a possible implementation, the second embedded portion includes a first housing plate, a dielectric structure is disposed between the first housing plate and the conductive housing, a dielectric slot is provided on the first housing plate, and the dielectric structure is configured to allow an electromagnetic wave to pass. The dielectric structure may be a circuit board, and the circuit board is disposed between the first housing plate and the conductive housing, to connect the first housing plate to the conductive housing, and allow an electromagnetic wave to pass. In this way, the electromagnetic wave can be transmitted through a bent channel in the cavity antenna, to form a cavity antenna structure with a bent channel. A size of a propagation path of the electromagnetic wave is increased, so that a size of the cavity antenna can be effectively reduced, to implement miniaturization of the cavity antenna and enable the cavity antenna to radiate and receive electromagnetic wave signals of more frequencies in a small electronic device.

In a possible implementation, a surface, attached to the first housing plate, of the dielectric structure is a first surface, a metal surface region is provided on the first surface, and the first housing plate is electrically connected to the metal surface region, to implement an electrical connection of the first housing plate.

In a possible implementation, a dielectric surface region is provided on the first surface, the dielectric surface region is adjacent to the metal surface region, and a dielectric slot on the first housing plate is arranged opposite to the dielectric surface region. An electromagnetic wave may be transmitted between the first sub-cavity and the second sub-cavity by sequentially passing through the dielectric surface and the dielectric slot.

In a possible implementation, a surface, attached to the first housing plate, of the dielectric structure is a first surface, a metal surface region is provided on the first surface, and the first housing plate is electrically connected to the metal surface region.

In a possible implementation, the first sub-cavity and the second sub-cavity are configured to generate a first resonance, and a frequency of the first resonance is related to both a size of the first sub-cavity and a size of the second sub-cavity.

In a possible implementation, a spacing distance between the first dielectric slot and the second dielectric slot is greater than a shortest distance between the first dielectric slot and the conductive spacer structure, and the first dielectric slot, the first sub-cavity, the second dielectric slot, and the second sub-cavity are sequentially in communication to form a bent channel of the dielectric cavity. After passing through the first dielectric slot, an electromagnetic wave is transmitted to the other side of the first sub-cavity, and then enters the second sub-cavity through the second dielectric slot. A size of a propagation path of the electromagnetic wave is increased, so that a size of the cavity antenna can be effectively reduced, to implement miniaturization of the cavity antenna and enable the cavity antenna to radiate and receive electromagnetic wave signals of more frequencies in a small electronic device.

In a possible implementation, the conductive spacer structure is electrically connected to an inner surface of the conductive housing, to form a conductive sub-cavity.

In a possible implementation, the cavity antenna further includes a supporting structure, and the supporting mechanism supports and fastens the conductive spacer structure and the conductive housing.

The supporting mechanism is located in the first sub-cavity, and/or the supporting mechanism is located in the second sub-cavity, to improve connection strength of the conductive spacer structure in the conductive housing.

In a possible implementation, the supporting mechanism includes a filler. The filler fills at least a partial space of the first sub-cavity, and/or the filler fills at least a partial space of the second sub-cavity.

The filler is in contact with the conductive spacer structure and/or the conductive housing. The filler may be made of a non-conductor or an insulator with a dielectric constant of 3 and a dielectric loss of 0.003, for example, plastic or epoxy resin. While supporting the conductive spacer layer, the filler can further transmit an electromagnetic wave, to ensure that the electromagnetic wave can be transmitted in the antenna cavity.

In a possible implementation, a fourth dielectric slot is further provided on the conductive housing, and a maximum size of the fourth dielectric slot is less than 1/2 of a wavelength of an electromagnetic wave radiated by the cavity antenna.

In a possible implementation, the conductive housing is provided with a metal conductive surface in both an extension direction of the first dielectric slot and a direction perpendicular to the extension direction of the first dielectric slot.

According to a fourth aspect, this application provides a notebook computer, including the cavity antenna according to any one of the foregoing implementations. A conductive housing of the cavity antenna includes a first computer housing and a second computer housing. The cavity antenna further includes an enclosing structure. The enclosing structure, the first computer housing, and the second computer housing enclose a dielectric cavity of the cavity antenna. A second ventilation gap is provided at a joint between the first computer housing and the second computer housing. The second ventilation gap is a first dielectric slot of the cavity antenna. The cavity antenna is constructed by using a housing of the notebook computer, an antenna cavity in the cavity antenna is divided into a first antenna sub-cavity and a second antenna sub-cavity by a spacer structure, and antenna sizes of the first antenna sub-cavity and the second antenna sub-cavity are adjusted to be different, to increase bandwidth of the cavity antenna.

In a possible implementation, the cavity antenna includes an embedded conductive housing. The embedded conductive housing includes a first embedded portion and a second embedded portion. The first embedded portion is located on a side, away from the second ventilation gap, of the second embedded portion. The first embedded portion is the enclosing structure. The second embedded portion is the conductive spacer structure for dividing the dielectric cavity into the first sub-cavity and the second sub-cavity. A space between the conductive housing and an outer wall surface of the second embedded portion is the first sub-cavity. An inner cavity enclosed by the first embedded portion and the second embedded portion is the second sub-cavity. At least one of the first computer housing and the second computer housing is electrically connected to the embedded conductive housing. A part of the embedded conductive housing and the housing of the notebook computer jointly enclose the dielectric cavity, to form the cavity antenna. The other part of the embedded conductive housing divides the dielectric cavity into two cavities, to form a dual-cavity structure, and modify a single-band cavity antenna into a dual-band cavity antenna.

In a possible implementation, a circuit board is disposed in the notebook computer, the second embedded portion includes a first housing plate, and at least a part of the circuit board is located between the first housing plate and the conductive housing. A surface, attached to the first housing plate, of the circuit board is a first surface. A metal surface region is provided on the first surface. The metal surface region is electrically connected to the first housing plate. A dielectric slot is provided on the first housing plate. The circuit board and the dielectric slot are configured to allow an electromagnetic wave to pass. The circuit board is disposed between the first housing plate and the conductive housing, to connect the first housing plate to the conductive housing, and allow an electromagnetic wave to pass. In this way, the electromagnetic wave can be transmitted through a bent channel in the cavity antenna, to form a cavity antenna structure with a bent channel. A size of a propagation path of the electromagnetic wave is increased, so that a size of the cavity antenna can be effectively reduced, to implement miniaturization of the cavity antenna and enable the cavity antenna to radiate and receive electromagnetic wave signals of more frequencies in a small electronic device.

In a possible implementation, a dielectric surface region is provided on the first surface, the dielectric surface region is adjacent to the metal surface region, and a dielectric slot provided on the first housing plate is located in the dielectric surface region.

In a possible implementation, the second embedded portion includes a second housing plate. A space between an outer wall surface of the second housing plate and the conductive housing is the first sub-cavity. A fourth air vent is provided on the second housing plate. A fifth air vent is provided on the enclosing structure. The second ventilation gap, the first sub-cavity, the fourth air vent, the second sub-cavity, and the fifth air vent are sequentially in communication. The cavity antenna in the notebook computer may be combined with a ventilation structure of a heat dissipation system, to improve space utilization of the structure of the notebook computer.

In a possible implementation, the first housing plate includes a first housing sub-plate and a second housing sub-plate. The first housing sub-plate and the second housing sub-plate are located on two sides of the dielectric slot on the first housing plate. The first housing sub-plate is connected to the second housing plate. The second housing sub-plate is connected to the first embedded portion. Mounting strength of the embedded conductive housing and the circuit board can be improved through the first housing sub-plate and the second housing sub-plate, and an electromagnetic wave may pass through the dielectric slot between the first housing sub-plate and the second housing sub-plate.

In a possible implementation, there are at least two first housing sub-plates. The at least two first housing sub-plates are disposed at spacings along an extension direction of the dielectric slot on the first housing plate. A third through hole is provided between two adjacent first housing sub-plates. The third through hole passes through the first housing plate along a thickness direction of the first housing plate. The third through hole is in one-to-one communication with the fourth air vent. At least a part of the metal surface is located on one side of the third through hole. The metal surface is electrically connected to the at least two first housing sub-plates. In the embedded conductive housing, a plurality of posts are formed on one side, and ends of the posts are bent to form a plurality of first housing sub-plates, to increase a ventilation area. In addition, there are not many corners at a joint between the first housing sub-plate and the circuit board, to prevent dust accumulation in a blind region, for example, a corner of a cavity, during ventilation.

In a possible implementation, there are at least two second housing sub-plates. The at least two second housing sub-plates are disposed at spacings along the extension direction of the dielectric slot on the first housing plate. A fourth through hole is provided between two adjacent second housing sub-plates. The fourth through hole passes through the first housing plate along the thickness direction of the first housing plate. The fourth through hole is in one-to-one communication with the fifth air vent. At least a part of the metal surface is located on one side of the fourth through hole. The metal surface is electrically connected to the at least two second housing sub-plates. In the embedded conductive housing, a plurality of posts are formed on one side, and ends of the posts are bent to form a plurality of second housing sub-plates, to increase a ventilation area. In addition, there are not many corners at a joint between the second housing sub-plate and the circuit board, to prevent dust accumulation in a blind region, for example, a corner of a cavity, during ventilation.

In a possible implementation, there is one first housing sub-plate, and a part of a side edge, on a side near the first sub-cavity, of the first housing sub-plate forms a part of an edge of the fourth air vent, to improve mounting stability of the first housing sub-plate and the circuit board, and improve structural strength of the embedded conductive housing.

In a possible implementation, there is one second housing sub-plate, and a part of a side edge, on a side facing away from the first sub-cavity, of the second housing sub-plate forms a part of an edge of the fifth air vent, to improve mounting stability of the second housing sub-plate and the circuit board, and improve structural strength of the embedded conductive housing.

In a possible implementation, the cavity antenna further includes a feeding unit, and the feeding unit is located in the dielectric surface region to electrically connect the first embedded portion to the second housing plate.

According to a fifth aspect, this application provides a terminal. The terminal is provided with the cavity antenna according to any one of the foregoing implementations. The terminal includes a display, a housing, and a first blocking plate. The housing includes a bezel and a rear housing. The bezel includes a conductive bezel part. The rear housing includes a conductive rear housing part.

The display, the conductive rear housing part, the conductive bezel part, and the first blocking plate constitute the conductive housing, to enclose the dielectric cavity.

The first dielectric slot includes an assembly clearance between the display and the housing.

According to a sixth aspect, this application provides a terminal. The notebook computer is provided with the cavity antenna according to any one of the foregoing implementations.

In a possible implementation, the notebook computer includes a first metal housing, a second metal housing, and a second blocking plate. The first metal housing, the second metal housing, and the second blocking plate constitute a conductive housing, to enclose the dielectric cavity.

A first ventilation gap is provided between the first metal housing and the second metal housing, and the first ventilation gap forms the first dielectric slot.

A first air vent is provided on the second blocking plate. A ventilation channel is provided between the first ventilation gap and the first air vent. The ventilation channel at least partially overlaps the dielectric cavity.

In a possible implementation, the notebook computer includes a filler, a conductive surface, and a conductive enclosing surface. The conductive surface and the conductive enclosing surface jointly enclose the dielectric cavity. The filler fills the dielectric cavity.

The conductive surface includes a first antenna pattern and a second antenna pattern. The first dielectric slot is located on the first antenna pattern. The second slot structure is located on the second antenna pattern.

In a possible implementation, at least one of the filler, the conductive surface, and the conductive enclosing surface is provided with a second air vent, to form a ventilation channel in the conductive housing.

According to a seventh aspect, this application provides a terminal, including a circuit board. The circuit board is provided with the cavity antenna according to any one of the foregoing implementations. At least two layers of plates are disposed on the circuit board. A metal layer is disposed on one side of each of the two layers of plates. A metal via is provided between metal layers of the two layers of plates. The metal layer and the metal via constitute the conductive housing, to enclose the dielectric cavity.

The first dielectric slot is provided on a metal layer of at least one of the two layers of plates, so that an electromagnetic wave enters a space between the two layers of plates through the first dielectric slot.

In a possible implementation, the two layers of plates and a part of the metal via enclose the dielectric cavity, and a remaining part of the metal via divides the dielectric cavity into a plurality of sub-cavities.

In a possible implementation, a feeder is disposed on at least one of the two layers of plates, and the metal layer is electrically connected to the feeder.

In a possible implementation, the electronic device further includes an outer protective housing, the circuit board is located in the outer protective housing, and a second through hole is provided on the outer protective housing.

### BRIEF DESCRIPTION OF DRAWINGS

FIG. 1 is a diagram of a structure of a cavity antenna according to an implementation of this application;
FIG. 2 is a diagram of an internal structure of a cavity antenna according to an implementation of this application;
FIG. 3 is a diagram of a correspondence between a frequency and efficiency of a cavity antenna according to an implementation of this application;
FIG. 4 is a diagram of a conductive spacer layer according to an implementation of this application;
FIG. 5 is a diagram of a manner of fastening a spacer plate according to an implementation of this application;
FIG. 6 is a diagram of a second slot structure disposed on a spacer plate according to an implementation of this application;
FIG. 7 is a diagram of a shape of a first dielectric slot according to an implementation of this application;
FIG. 8 is a diagram of a structure of a nested cavity antenna according to an implementation of this application;
FIG. 9 is a diagram of performing feeding by a cavity antenna on a spacer structure according to an implementation of this application;
FIG. 10 is a diagram of a structure of another nested cavity antenna according to an implementation of this application;
FIG. 11 is a schematic sectional view of another nested cavity antenna according to an implementation of this application;
FIG. 12 is a diagram of another nested cavity antenna used in an electronic device according to an implementation of this application;
FIG. 13a is a first diagram of a structure of a bent channel of a cavity antenna according to an implementation of this application;
FIG. 13b is a second diagram of a structure of a bent channel of a cavity antenna according to an implementation of this application;
FIG. 14 is a diagram of a structure of another cavity antenna according to an implementation of this application;
FIG. 15a is a first diagram of a position of a slot structure of a cavity antenna according to an implementation of this application;
FIG. 15b is a second diagram of a position of a slot structure of a cavity antenna according to an implementation of this application;
FIG. 15c is a third diagram of a position of a slot structure of a cavity antenna according to an implementation of this application;
FIG. 15d is a fourth diagram of a position of a slot structure of a cavity antenna according to an implementation of this application;
FIG. 16 is a diagram of a terminal device according to an implementation of this application;
FIG. 17 is a diagram of a connection between a display and a metal rear cover of a terminal device according to an implementation of this application;
FIG. 18 is a schematic sectional view at A-A in FIG. 16 according to this application;
FIG. 19 is a diagram of a structure of a notebook computer according to an implementation of this application;
FIG. 20 is a schematic sectional view at B-B in FIG. 19 according to this application;
FIG. 21 is a diagram of a correspondence between a frequency and efficiency of a cavity antenna according to an implementation of this application;
FIG. 22 is a diagram of a structure of an air exhaust vent of a notebook computer according to an implementation of this application;
FIG. 23 is a first diagram of a structure of a cavity antenna at a position of an air exhaust vent of a notebook computer according to an implementation of this application;
FIG. 24 is a diagram of a correspondence between a frequency and efficiency of a cavity antenna according to an implementation of this application;
FIG. 25 is a diagram of a structure of a partial region of a circuit board according to an implementation of this application;
FIG. 26 is a diagram of a structure of another side surface of a circuit board according to an implementation of this application;
FIG. 27 is a diagram of a correspondence between a frequency and efficiency of a cavity antenna according to an implementation of this application;
FIG. 28 is a schematic sectional view at C-C in FIG. 25 according to this application;
FIG. 29 is a diagram of an internal structure of a circuit board according to an implementation of this application;
FIG. 30 is a diagram of a partial structure of a keyboard according to an implementation of this application;
FIG. 31a is a frequency-efficiency diagram of an existing cavity antenna of a single-cavity structure;
FIG. 31b is a frequency-efficiency diagram of a dual-cavity structure in which feeding is performed at an intermediate layer according to an implementation of this application;
FIG. 32 is a second diagram of a structure of a cavity antenna at a position of an air exhaust vent of a notebook computer according to an implementation of this application;
FIG. 33 is a diagram of two conductive housings of a cavity antenna that are of a symmetric structure according to an implementation of this application;
FIG. 34 is a schematic sectional view at D-D in FIG. 33 according to this application;
FIG. 35 is a diagram of a correspondence between a frequency and efficiency of a cavity antenna according to an implementation of this application;
FIG. 36 is a diagram of a ventilation structure of a notebook computer according to an implementation of this application;
FIG. 37 is a diagram of a cavity antenna and a hinge cover in a notebook computer that are disposed opposite to each other according to an implementation of this application;
FIG. 38 is a first diagram of positions of a dielectric slot and a projection of a hinge according to an implementation of this application;
FIG. 39 is a second diagram of positions of a dielectric slot and a projection of a hinge according to an implementation of this application;
FIG. 40 is a diagram of a structure of an embedded conductive housing according to an implementation of this application;
FIG. 41a is a first diagram of a first housing sub-plate and a second housing sub-plate according to an implementation of this application;
FIG. 41b is a second diagram of a first housing sub-plate and a second housing sub-plate according to an implementation of this application;
FIG. 41c is a third diagram of a first housing sub-plate and a second housing sub-plate according to an implementation of this application;
FIG. 41d is a fourth diagram of a first housing sub-plate and a second housing sub-plate according to an implementation of this application;
FIG. 42 is a diagram of a position of a cavity antenna combined with a ventilation structure in a notebook computer according to an implementation of this application; and
FIG. 43 is a diagram of second dielectric slots at different positions in a cavity antenna according to an implementation of this application.

### DESCRIPTION OF EMBODIMENTS

The following describes embodiments of this application with reference to the accompanying drawings in embodiments of this application.

For ease of understanding, the following first describes English abbreviations and related technical terms used in embodiments of this application.

Parallelism: Parallelism defined in this application is not limited to absolute parallelism. A definition of the parallelism may be understood as being substantially parallel. Non-absolute parallelism caused by impact of an assembly tolerance, a design tolerance, structural flatness, or other factors is allowed. An error within a small angle range is allowed. For example, non-absolute parallelism within an assembly error range within 10 degrees may be understood as a parallelism relationship.

Perpendicularity: Perpendicularity defined in this application is not limited to an absolute perpendicular intersection (an included angle is 90 degrees) relationship. A non-absolute perpendicular intersection relationship caused by impact of an assembly tolerance, a design tolerance, structural flatness, or other factors is allowed. An error within a small angle range is allowed. For example, a non-absolute perpendicular intersection relationship within an assembly error range of 80 degrees to 100 degrees may be understood as a perpendicularity relationship.

Being connected/Being connected to: The being connected or being connected to may indicate a mechanical connection relationship or a physical connection relationship. To be specific, that A and B are connected or that A is connected to B may indicate that there is a fastening component (for example, a screw, a bolt, or a rivet) between A and B, or A and B are in contact with each other and it is difficult to separate A from B.

Coupling: The coupling may be understood as direct coupling and/or indirect coupling, and a "coupling connection" may be understood as a direct coupling connection and/or an indirect coupling connection. The direct coupling may also be referred to as an "electrical connection", and may be understood as physical contact and electrical conduction between components, or may be understood as a form in which different components in a line structure are connected through a physical line that can transmit an electrical signal, for example, a copper foil or a conducting wire of a printed circuit board (printed circuit board, PCB). The "indirect coupling" may be understood as electrical conduction between two conductors through air or without contact. In an embodiment, the indirect coupling may also be referred to as capacitive coupling. For example, signal transmission is implemented by forming an equivalent capacitor through coupling in a gap between two conducting components that are spaced apart.

Being in communication: That conduction or connection is implemented between two or more components through "electrical connection" or "indirect coupling" for signal or energy transmission may be referred to as being in communication.

Operating frequency band (or referred to as a frequency band for short): An antenna module belongs to a radio frequency system. The radio frequency system needs to operate in a specific frequency range, to communicate with another device. An operating frequency range of the radio frequency system is referred to as an operating frequency band.

Operating resonance (or referred to as a resonance for short): The operating resonance is a resonance generated by an antenna unit on an operating frequency band.

Resonance frequency: The resonance frequency is also referred to as a resonant frequency. The resonance frequency may have a frequency range, to be specific, a frequency range in which a resonance occurs. The resonance frequency may be a frequency range in which a return loss is less than -6 dB. A frequency corresponding to a strongest resonance point is a center frequency. A return loss of the center frequency may be less than -20 dB. It should be understood that, in this application, unless otherwise specified, an antenna or a radiator generates a "resonance", where the resonance should be a fundamental-mode resonance generated by the antenna or the radiator, in other words, a resonance that is generated by the antenna or the radiator and that has a lowest frequency. It should be understood that the antenna or the radiator may generate one or more antenna modes based on a specific design, and one fundamental-mode resonance may be correspondingly generated in each antenna mode.

Resonance frequency band: A range of a resonance frequency is a resonance frequency band, and a return loss of any frequency on the resonance frequency band may be less than -6 dB or -5 dB.

The resonance frequency band may be the same as or partially overlap an operating frequency band. In an embodiment, one or more resonance frequency bands of an antenna may cover one or more operating frequency bands of the antenna.

Ground state: The ground state corresponds to a resonance that is generated by a section of radiator or a radiator in a specific antenna mode and that has a lowest frequency. A "ground-state position" or a "ground-state resonance frequency" is a frequency range or a resonance frequency corresponding to a ground state (for example, a generated resonance with a lowest frequency) of a radiator in a specific antenna mode. The "ground state" may also be referred to as a "fundamental mode". The "ground state" corresponds to a "higher order" or a "higher-order mode or higher-order modality", which may also be referred to as "frequency multiplication" (for example, triple frequency multiplication or quintuple frequency multiplication). Unless otherwise specified, the "resonance" in embodiments of this application is a resonance in the ground state, in other words, a resonance generated in the fundamental mode.

A size of a cavity antenna: A size of a cavity antenna is a span size of an internal cavity of the cavity antenna along different directions, where a cavity size is a size of a cavity enclosed by a conductive surface. For example, when the cavity is in a cuboid shape, the antenna size may be three span sizes of the cuboid: a length, a width, and a height; when the cavity is in a cylindrical shape, the antenna size is a diameter and a height of the cylinder; or when the cavity is in an irregular shape, the antenna size may be a maximum span size along three directions in a three-dimensional rectangular system. Different antenna sizes may enable the cavity antenna to respond to electromagnetic wave signals of different frequencies, where responding to an electromagnetic wave may be receiving the electromagnetic wave, radiating the electromagnetic wave, or the like. In embodiments of this application, different cavities may be arranged to have different antenna sizes, to enable different cavities to respond to electromagnetic wave signals of different frequencies. It should be noted that adjusting the antenna size of the cavity antenna is one of manners of enabling the cavity antenna to respond to electromagnetic wave signals of different frequencies. However, this application is not limited only to responding to different electromagnetic wave signals by adjusting the antenna size of the cavity antenna.

A dielectric, also referred to as a dielectric medium or an insulating medium, is generally an insulating substance that has a high resistivity and that is not good at conducting a current. The dielectric may be in a solid state, a liquid state, or a gas state. For example, the dielectric may be plastic, rubber, ceramic, glass, mineral oil, silicone oil, air, or carbon dioxide.

A wavelength of an electromagnetic wave mentioned in this application is a wavelength calculated or measured when the electromagnetic wave in a free space state.

To make the objectives, technical solutions, and advantages of this application clearer, the following further describes this application in detail with reference to the accompanying drawings.

It should be noted that the described embodiments are merely some but not all of embodiments of this application. All other embodiments obtained by persons of ordinary skill in the art based on embodiments of this application without creative efforts shall fall within the protection scope of this application.

Terms used in embodiments of this application are merely intended to describe specific embodiments, but not to limit this application. The terms "a", "the", and "this" of singular forms used in embodiments of this application and the appended claims are also intended to include plural forms, unless otherwise specified in the context clearly.

The terms "first", "second", and the like mentioned below are merely intended for description, and shall not be understood as an indication or implication of relative importance or an implicit indication of a quantity of indicated technical features. Therefore, a feature defined by "first", "second", or the like may explicitly or implicitly include one or more features. In descriptions of this application, "a plurality of" means two or more, unless otherwise specified.

In addition, in this application, orientation terms such as "above" and "below" are defined relative to placement orientations of components shown in the accompanying drawings. It should be understood that these directional terms are relative concepts that are used for relative description and clarification, and may vary correspondingly based on changes in the placement orientations of the components in the accompanying drawings.

It should be understood that the term "and/or" used in this specification describes only a same field for describing associated objects, and indicates that three relationships may exist. For example, A and/or B may indicate the following three cases: Only A exists, both A and B exist, and only B exists. In addition, the character "/" in this specification usually indicates an "or" relationship between the associated objects.

"Within a range of..." used in this application includes two end values of the range by default, unless it is separately specified that the end values are excluded. For example, being within a range of 1 to 5 includes the two values 1 and 5.

This application provides a cavity antenna, which is applicable to an electronic device and is configured to radiate and receive an electromagnetic wave. The electronic device may be a mobile phone, a tablet computer, a vehicle-mounted computer, an intelligent wearable product, an internet of things (internet of things, IoT), or the like. A specific form of the electronic device is not particularly limited in embodiments of this application.

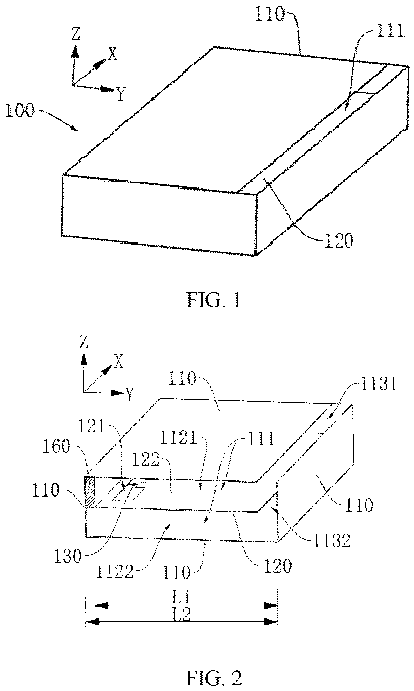

FIG. 1 is a diagram of a structure of a cavity antenna according to an implementation of this application. FIG. 2 is a diagram of an internal structure of a cavity antenna according to an implementation of this application. The cavity antenna 100 includes a conductive housing 110 and a conductive spacer structure 120. The conductive housing 110 encloses a dielectric cavity 111. The conductive spacer structure 120 divides the dielectric cavity 111 into a first sub-cavity 1121 and a second sub-cavity 1122. The first sub-cavity 1121 and the second sub-cavity 1122 have different sizes.

A first dielectric slot 1131 is provided on the conductive housing 110. At least a part of the first dielectric slot 1131 extends along an X direction, and a partial section extending along the X direction is linear. As shown in FIG. 1 and FIG. 2, a second dielectric slot 1132 is formed between a side edge of a conductive spacer layer 122 along a Y direction and the conductive housing 110. At least a part of the second dielectric slot 1132 also extends along the X direction, and the part of the second dielectric slot 1132 that extends along the X direction is parallel to the part of the first dielectric slot 1131 that extends along the X direction.

In this implementation, the cavity antenna is constructed, an antenna cavity in the cavity antenna is divided into the first sub-cavity 1121 and the second sub-cavity 1122 by the conductive spacer structure 120, and antenna widths of the first sub-cavity 1121 and the second sub-cavity 1122 are adjusted to be different, to increase bandwidth of the cavity antenna.

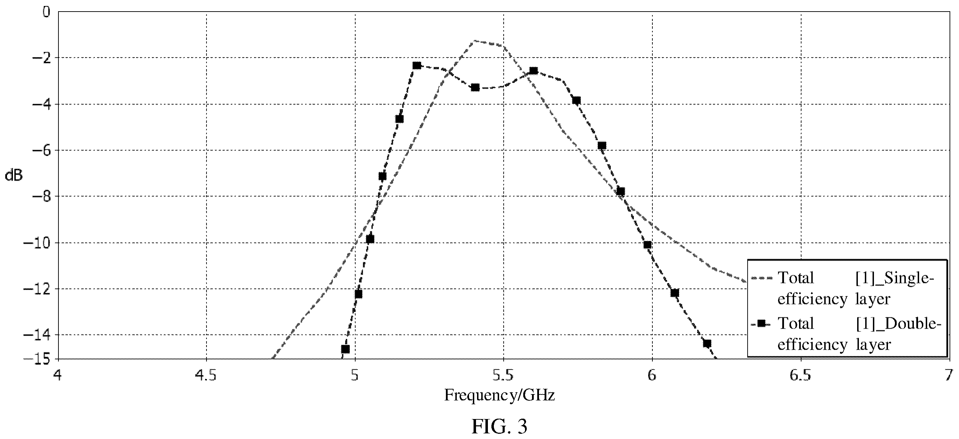

FIG. 3 is a diagram of a correspondence between a frequency and efficiency of a cavity antenna. A dashed line with blocks indicates a correspondence between a frequency and efficiency of an antenna responding to an electromagnetic wave in a double-layer cavity structure. The cavity antenna in this implementation achieves an efficiency of above -6 dB within a frequency range of 5.2 GHz to 5.8 GHz.

In some possible implementations, the conductive housing 110 is made of a conductive metal material. In an embodiment, the conductive housing 110 may be considered as an inner wall surface of a housing made of a metal material, or may be a metal layer applied onto an inner surface of a non-metallic housing.

In an embodiment, a shape of the conductive housing 110 may be a cuboid structure shown in FIG. 1. In an embodiment, a shape of the conductive housing 110 may be a prism, a cylinder, or another structure. In this application, a cuboid-shaped conductive housing 110 is used as an example. In FIG. 1 and FIG. 2, the X direction is consistent with a length direction of the cavity antenna 100, the Y direction is consistent with a width direction of the cavity antenna 100, and a Z direction is consistent with a height direction of the cavity antenna 100. In this application, the length, the width, and the height are merely used to distinguish between different spans of the cavity antenna 100 along three directions that are perpendicular to each other in a perspective shown in FIG. 1 and FIG. 2, but a specific size, shape, and the like of the cavity antenna 100 are not further limited. A width dimension may be greater than a length dimension.

In some possible implementations, the first sub-cavity 1121 and the second sub-cavity 1122 have different antenna sizes. In an embodiment, for example, antenna widths are different. An antenna width is a span size in the cavity on an extension surface perpendicular to a cavity slot. When the cavity slot is of an "L"-shaped structure or another non-linear structure, a slot structure includes some linear sections with a length greater than 1/2 of a wavelength of an electromagnetic wave. The antenna width is a maximum span size in the cavity on an extension surface perpendicular to the linear section. As shown in FIG. 2, an antenna width of the cavity antenna may be a width in the cavity along the Y direction. In an embodiment, only an example in which the two sub-cavities have different antenna widths along the Y direction is described, and an antenna length along the X direction and/or an antenna height along the Z direction may alternatively be adjusted to enable the two sub-cavities to respond to electromagnetic wave signals of different frequencies.

As shown in FIG. 2, an antenna width of the first sub-cavity 1121 is L1, an antenna width of the second sub-cavity 1122 is L2, and the antenna width L1 is less than the antenna width L2. In this implementation, an electromagnetic wave enters the dielectric cavity 111 through the first dielectric slot 1131, a part of the electromagnetic wave enters the first sub-cavity 1121, and the other part of the electromagnetic wave enters the second sub-cavity 1122 through the second dielectric slot 1132. Because the antenna widths of the first sub-cavity 1121 and the second sub-cavity 1122 are different, frequencies of electromagnetic waves in different sub-cavities are different, to enable a same cavity antenna to radiate and receive electromagnetic waves on different frequency bands.

In an embodiment, as shown in FIG. 2, lengths of the first sub-cavity 1121 and the second sub-cavity 1122 along the X direction may be within a range of 15 millimeters to 30 millimeters, and may be 23.9 millimeters; a width of the first sub-cavity 1121 along the Y direction may be within a range of 5 millimeters to 15 millimeters, and may be 8.5 millimeters; a width of the second sub-cavity 1122 along the Y direction may be within a range of 15 millimeters to 30 millimeters, and may be 9.5 millimeters; and heights of the first sub-cavity 1121 and the second sub-cavity 1122 along the Z direction may be within a range of 0 (excluding 0) millimeters to 5 millimeters, and may be 3 millimeters. In this application, the antenna width may be designed, to enable the cavity antenna to radiate and receive both an electromagnetic wave on a 2.4G frequency band and an electromagnetic wave on a 5G frequency band, so that the antenna has higher bandwidth and better performance.

In an embodiment, a length of the first dielectric slot 1131 along the X direction may be within a range of 23 millimeters to 25 millimeters, and may be 24 millimeters; a width of the first dielectric slot 1131 along the Y direction may be within a range of 0.5 millimeter to 1.5 millimeters, and may be 1 millimeter; a length of the second dielectric slot 1132 along the X direction may be within a range of 23 millimeters to 25 millimeters, and may be 24 millimeters; and a width of the second dielectric slot 1132 along the Y direction may be within a range of 0.5 millimeter to 1.5 millimeters, and may be 1 millimeter.

In an embodiment, a first direction is an extension direction of the part of the first dielectric slot 1131 and the part of the second dielectric slot 1132 that are parallel to each other. As shown in FIG. 1, the X direction is the first direction, and the first sub-cavity 1121 and the second sub-cavity 1122 have different sizes in a direction perpendicular to the first direction.

In an embodiment, as shown in FIG. 1 and FIG. 2, the first sub-cavity 1121 and the second sub-cavity 1122 may have different sizes along the Y direction, the Z direction, and/or the like, and have a same size along the first direction (the X direction).

In an embodiment, along the X direction parallel to the first dielectric slot 1131 and the second dielectric slot 1132, the cavity antenna may not be provided with a metal blocking plate. A length of the dielectric cavity 111 along the X direction may be set based on an internal structure of a device in which the cavity antenna is located. A length of the cavity antenna along the X direction is not set based on a parameter of the cavity antenna, and the parameter of the cavity antenna is set only based on a width along the Y direction and a height along the Z direction.

In some possible implementations, the first dielectric slot 1131 may be located on one or more side plates of the conductive housing 110, or may be located at any position on a side plate of the conductive housing 110. In an embodiment, the first dielectric slot 1131 can implement transmission of an electromagnetic wave between the first sub-cavity 1121 and the outside, and the electromagnetic wave can enter the first sub-cavity 1121 through the first dielectric slot 1131. The outside is an external region of the cavity antenna 100, and the outside is an external region of the conductive housing 110.

In an embodiment, the dielectric slot in this application, for example, the first dielectric slot 1131 and the second dielectric slot 1132, may be a through hole that passes through the conductive housing 110 in a physical structure. In this case, there is a medium, for example, air, in the first dielectric slot 1131 and the second dielectric slot 1132. Alternatively, in an embodiment, the first dielectric slot 1131 and the second dielectric slot 1132 are filled with a non-conductive dielectric. For example, a conductive coating is formed on a non-conductive plate, the conductive coating forms the conductive housing 110, and the non-conductive plate has a non-conductive region in a specific shape, to form the first dielectric slot 1131 in this application. An electromagnetic wave can pass through the non-conductive dielectric in the first dielectric slot 1131 and the second dielectric slot 1132.

In some possible implementations, a length of a linear partial section of the second dielectric slot 1132 should be greater than 1/2 of a wavelength of a corresponding electromagnetic wave, to ensure that a transmitted electromagnetic wave can enter the first sub-cavity 1121 through the first dielectric slot 1131. In this embodiment, for example, the first dielectric slot 1131 is overall linear, and the first dielectric slot 1131 is overall parallel to the X direction. In an embodiment, a partial section, extending along the X direction, of the second dielectric slot 1132 is linear. In an embodiment, a length of the linear partial section should be greater than 1/2 of a wavelength of a corresponding electromagnetic wave, to ensure that a transmitted electromagnetic wave can enter the second sub-cavity 1122 through the second dielectric slot 1132. In this embodiment, for example, the second dielectric slot 1132 is overall linear, and the second dielectric slot 1132 is overall parallel to the X direction.

In an embodiment, the second dielectric slot 1132 may be located on the conductive spacer structure 120 (a slot structure is directly formed on the conductive spacer structure 120). In an embodiment, the second dielectric slot 1132 may alternatively be located between the conductive spacer structure 120 and the conductive housing 110 (at least a part of a side edge of the conductive spacer structure 120 is spaced away from the conductive housing 110, to form the second dielectric slot 1132), for example, located on a side plate on a side of the conductive housing 110 along the Z direction. In an embodiment, the second dielectric slot 1132 may be located on one or more side plates of the conductive housing 110, and may be located at any position on the side plate. In an embodiment, the second dielectric slot 1132 can implement transmission of an electromagnetic wave between the second sub-cavity 1122 and the outside, and the electromagnetic wave can enter the second sub-cavity 1122 through the second dielectric slot 1132. The outside is an external region of the cavity antenna, and the outside is an external region of the conductive housing 110. Similarly, the second dielectric slot 1132 may be a through hole that actually passes through the conductive housing 110, or the slot may be filled with a non-conductive dielectric. In an embodiment, feeding may be performed on two sides of the second dielectric slot 1132.

It should be noted that, on a basis of forming the first sub-cavity 1121 and the second sub-cavity 1122, the conductive spacer structure 120 may further form other sub-cavities through division. In this application, there may be two or more sub-cavities.

In an embodiment, sections of the first dielectric slot 1131 and the second dielectric slot 1132 other than the sections extending along the X direction may be in other shapes.

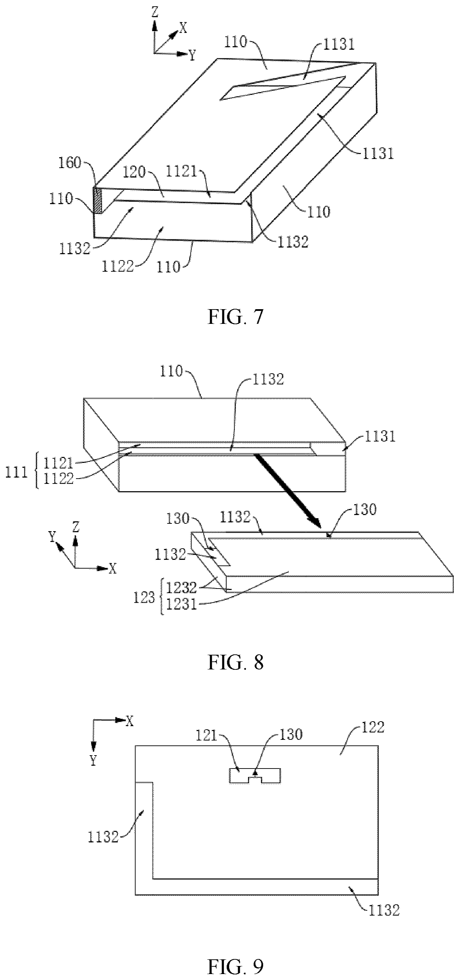

FIG. 7 is a diagram of a shape of a first dielectric slot according to an implementation of this application. The first dielectric slot 1131 may be in an L shape, and the first dielectric slot 1131 includes a section extending along the X direction and another tilt section at an end of the X direction. In an embodiment, the tilt section may extend along an opposite direction of Y, or the tilt section may be bent along a side, toward or away from an opposite direction of X, of an opposite direction of Y.

In an embodiment, the second dielectric slot 1132 may also be in an L shape, and the second dielectric slot 1132 includes a section extending along the X direction and another section at an end of the opposite direction of X. The another section is bent toward a side along the opposite direction of Y.

In some possible implementations, at least a part of the dielectric cavity 111 may be filled with a medium with a specific dielectric constant. In an embodiment of this application, the dielectric cavity 111 is a cavity filled with, for example, air or another gas medium. In an embodiment, an electromagnetic wave can pass through the medium in the dielectric cavity 111 and be reflected by a conductive inner surface of the conductive housing 110.

In some possible implementations, a part of the conductive housing 110 of the cavity antenna on a side along the opposite direction of X is not shown in FIG. 2, to expose a part of an internal structure of the dielectric cavity 111. As shown in FIG. 2, the conductive spacer structure 120 divides the dielectric cavity 111 into the first sub-cavity 1121 and the second sub-cavity 1122, where the first sub-cavity 1121 and the second sub-cavity 1122 are adjacent to each other, to form a double-layer cavity structure.

In an embodiment, the conductive spacer structure 120 may be the conductive spacer layer 122. The conductive spacer layer 122 extends along an XY plane, and may be connected to the conductive housing 110 at three side edges of the conductive spacer layer 122 along the X direction, the opposite direction of X, and the opposite direction of Y.

In an implementation, the conductive spacer layer 122 is made of a metal material, and may be a metal plate, or may be a metal layer applied onto a non-metallic plate layer.

In an embodiment, the conductive spacer layer 122 may be a planar layer or a bent layer. The conductive spacer layer 122 is a conductive layer on two stacked plates.

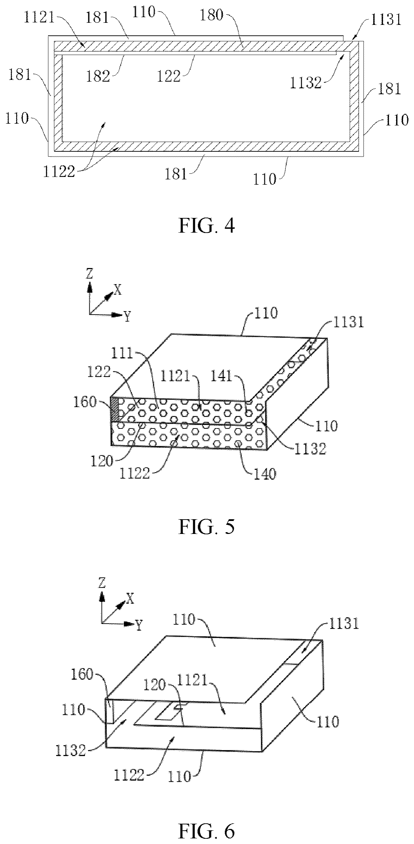

In a possible implementation, the conductive spacer layer 122 may be a conductive layer applied onto a plate. As shown in FIG. 4, the conductive housing 110 and the conductive spacer layer 122 may be located on a same first plate 180, and the first plate 180 is a dielectric plate with a specific thickness, for example, a non-conductive plate. In an embodiment, an electromagnetic wave can pass through the first plate 180.

An outer surface of the first plate 180 is coated with a first metal layer 181, and a specific position is not coated with the first metal layer 181 (for example, is hollowed out), to form the first dielectric slot 1131. A second metal layer 182 is applied onto an inner wall surface of a side plate, coated with the first metal layer 181, of the first plate 180. A part of the second metal layer 182 is electrically connected to the first metal layer 181 through the first plate 180. A non-conductive part of the first plate 180 is located between the first metal layer 181 and the second metal layer 182.

The first metal layer 181 may form the conductive housing 110 in this application. The second metal layer 182 may form the conductive spacer layer 122 in this application. The first plate 180 between the first metal layer 181 and the second metal layer 182 forms the first sub-cavity 1121, and the second sub-cavity 1122 is formed on the other side of the second metal layer 182.

In some possible implementations, as shown in FIG. 2, an adjustment member 160 may be disposed in the first sub-cavity 1121, and/or an adjustment member 160 may be disposed in the second sub-cavity 1122. The adjustment member 160 is disposed, to enable the first sub-cavity 1121 and the second sub-cavity 1122 to have different widths. In an embodiment, the adjustment member 160 may be used as an accessory in the conductive housing 110 of a finalized structure. The adjustment member 160 is placed in the first sub-cavity 1121 or the second sub-cavity 1122, to adjust the first sub-cavity 1121 and the second sub-cavity 1122 to have different antenna widths. When the adjustment member 160 is placed in the first sub-cavity 1121 or the second sub-cavity 1122, after a structure of the cavity antenna is finalized, the adjustment member 160 may not have a deformation or adjustment function.

In an embodiment, the adjustment member 160 may be a solid structure or a hollow structure. In an embodiment, the adjustment member 160 is fastened in the conductive housing 110 and occupies a specific volume of the sub-cavity, and a side surface, located in the dielectric cavity 111, of the adjustment member 160 is a metal surface. In an embodiment, the side surface, located in the dielectric cavity 111, of the adjustment member 160 is coupled to the conductive housing 110 and the conductive spacer structure 120.

In an embodiment, a structure of the conductive housing 110 may alternatively be designed to form a stepped structure on a side plate on a side of the conductive housing 110 along the Y direction, to form the first sub-cavity 1121 and the second sub-cavity 1122 that have different antenna widths.

In a possible implementation, FIG. 5 is a diagram of a manner of fastening a spacer plate according to an implementation of this application. The conductive spacer layer 122 spans in the conductive housing 110, to divide the conductive housing 110 into the first sub-cavity 1121 and the second sub-cavity 1122.

The second dielectric slot 1132 is provided at a side edge on a side of the conductive spacer layer 122 along the Y direction. In an embodiment, an electromagnetic wave can pass through the second dielectric slot 1132 and be transmitted between the second sub-cavity 1122 and the first sub-cavity 1121.

In an embodiment, the conductive spacer layer 122 is fastened to an inner surface of the conductive housing 110, so that the conductive spacer layer 122 can be fastened in the dielectric cavity 111. In an embodiment, the second dielectric slot 1132 is provided on the conductive spacer layer 122, and the conductive spacer layer 122 is in a suspended state, similar to a cantilever, in the dielectric cavity 111. This imposes a higher requirement on connection strength between the conductive spacer layer 122 and the conductive housing 110.

In this embodiment, the cavity antenna 100 further includes a supporting mechanism 140, and the supporting mechanism 140 is disposed on one side of the conductive spacer layer 122. Alternatively, there are two or more supporting mechanisms 140, and the two supporting mechanisms 140 are located on two sides of the conductive spacer layer 122. The supporting mechanism 140 may be located in the first sub-cavity 1121 or the second sub-cavity 1122, or one supporting mechanism 140 may be disposed in each of the first sub-cavity 1121 and the second sub-cavity 1122.

In an embodiment, the supporting mechanism 140 can be connected to the conductive spacer layer 122 and connected to the conductive housing 110 opposite to the conductive spacer layer 122. The supporting mechanism 140 supports and connects the conductive spacer layer 122 and the conductive housing 110, to improve connection strength between the conductive spacer structure and the conductive housing 110. Specifically, the supporting mechanism 140 may be a supporting post, and two ends of the supporting post are respectively connected to the conductive spacer structure and the conductive housing 110. The supporting mechanism 140 may alternatively be of another structure that can support and connect the conductive spacer layer 122 and the conductive housing 110.

In an embodiment, as shown in FIG. 5, the supporting mechanism 140 may be a filler 141, and the filler 141 fills at least a part of a space between the conductive spacer layer 122 and the conductive housing 110. The filler 141 may fill a part or all of the first sub-cavity 1121, or may fill a part or all of the second sub-cavity 1122. As shown in FIG. 5, the filler 141 shown in this implementation fully fills the first sub-cavity 1121 and the second sub-cavity 1122, to support the conductive spacer layer 122 on two sides of the conductive spacer layer 122. In an embodiment, the filler 141 is in contact with the conductive spacer structure 120, or the filler 141 is in contact with the conductive housing 110, or the filler 141 is in contact with both the conductive spacer structure 120 and the conductive housing 110.

In an embodiment, the filler 141 may be made of a non-conductor or an insulator with a dielectric constant of 3 and a dielectric loss of 0.003, for example, plastic or epoxy resin. While supporting the conductive spacer layer 122, the filler 141 can further transmit an electromagnetic wave, to ensure that the electromagnetic wave can be transmitted in the cavity antenna 100.

In this implementation, the supporting mechanism 140 is disposed between the conductive spacer layer 122 and the conductive housing 110, to improve connection strength of the conductive spacer layer 122 in the conductive housing 110.

In an embodiment, the conductive spacer layer 122 may be a metal layer applied onto a surface of plate made of a non-metallic material. Usually, the metal layer may be applied onto a side surface of the non-metallic plate through silver paste or the like, where the non-metallic plate or the filler 141 forms a supporting structure of the metal layer. The cavity antenna has a small size, and the conductive spacer layer 122 can be formed by applying the metal layer, so that manufacturing is simpler.

In an embodiment, when the cavity antenna has a large size, the conductive spacer layer 122 in this application may be formed by bending a metal plate.

In this implementation, the filler 141 supports the conductive spacer layer 122 through wrapping, the filler 141 is made of a non-conductor or an insulator, for example, plastic or epoxy resin, and the filler 141 may alternatively be connected to the conductive spacer layer 122 through bonding, to provide more effective structural support for the metal layer applied onto the conductive spacer layer 122.

In some possible implementations, the first dielectric slot 1131 and the second dielectric slot 1132 may be located on a same side of the cavity antenna. For example, both the first dielectric slot 1131 and the second dielectric slot 1132 shown in FIG. 2 are located on a side of the cavity antenna along the Y direction.

FIG. 6 is a diagram of a second slot structure disposed on a spacer plate according to an implementation of this application. The first dielectric slot 1131 and the second dielectric slot 1132 may alternatively be located on different sides of the cavity antenna. The first dielectric slot 1131 is located on a side of the cavity antenna along the Y direction, and the second dielectric slot 1132 is located on a side of the cavity antenna along the opposite direction of Y. In an embodiment, the different sides may be two sides of an overall span center along the Y direction. In an embodiment, the different sides may be two edges of an overall span along the Y direction.

In this application, the conductive spacer structure 120 divides the dielectric cavity 111 of the cavity antenna 100 into two sub-cavities, and the first dielectric slot 1131 and the second dielectric slot 1132 are provided on different sides, to form a bent channel in the dielectric cavity 111. After passing through the first dielectric slot 1131, an electromagnetic wave is transmitted to the other side of the first sub-cavity 1121, and then enters the second sub-cavity 1122 through the second dielectric slot 1132. A size of a propagation path of the electromagnetic wave is increased. When a size of the dielectric cavity 111 is fixed, the first dielectric slot 1131 and the second dielectric slot 1132 may be provided on different sides to increase a frequency of an electromagnetic wave that can be radiated and received by the sub-cavities. In this way, a cavity antenna with a small size can also radiate a high-frequency electromagnetic wave.

It should be noted that the bent channel described in this application is a connected dielectric path, and an electromagnetic wave may deviate by a specific angle when transmitted in the bent channel. The bent channel may be filled with a dielectric, or may be a cavity channel.

In a possible implementation, in addition to the first dielectric slot 1131 and the second dielectric slot 1132, a fourth dielectric slot may be further provided on the conductive housing 110 and/or the conductive spacer structure 120. A structure of the fourth dielectric slot may be similar to a structure of the first dielectric slot 1131, or may be similar to a structure of the second dielectric slot 1132. However, a size of the fourth dielectric slot is different from a size of the first dielectric slot 1131 and a size of the second dielectric slot 1132.

In an embodiment, a maximum size of the fourth dielectric slot is less than 1/2 of a wavelength of an electromagnetic wave that the cavity antenna is designed to radiate. For example, when the cavity antenna is designed to radiate an electromagnetic wave on a 5 GHz frequency band, the maximum size of the fourth dielectric slot is less than 1/2 of a wavelength corresponding to the electromagnetic wave on the 5 GHz frequency band. The maximum size of the fourth dielectric slot is a maximum span along an extension direction of the first dielectric slot 1131. In an embodiment, a total length of the fourth dielectric slot along the extension direction of the first dielectric slot 1131 is less than (70%×1/2) of the wavelength of the electromagnetic wave, for example, is less than or equal to 1/4 of the wavelength. The fourth dielectric slot less than 1/2 of the wavelength has small impact on electromagnetic wave transmission of the cavity antenna.

In a possible implementation, FIG. 8 is a diagram of a structure of a nested cavity antenna according to an implementation of this application. A conductive housing 110 encloses a dielectric cavity 111. A conductive spacer structure includes an embedded conductive housing 123, and a second dielectric slot 1132 is formed on the embedded conductive housing 123.

The embedded conductive housing 123 is made of a metal material, or metal layers are pasted to an inner surface and an upper surface of the embedded conductive housing 123. The embedded conductive housing 123 includes an intermediate layer 1231 and a bottom housing 1232, and the second dielectric slot 1132 is provided on one side of the intermediate layer 1231.

The embedded conductive housing 123 is embedded into the dielectric cavity 111 of the conductive housing 110. The intermediate layer 1231 spans in the middle of the dielectric cavity 111 to divide the dielectric cavity 111 into two sub-cavities. A first sub-cavity 1121 is on a side of the intermediate layer 1231 along a Z direction, and a cavity in the embedded conductive housing 123 is a second sub-cavity 1122.

The second dielectric slot 1132 may be located on an edge side of the intermediate layer 1231, or may be located at a middle position of the intermediate layer 1231. At least a part of a first dielectric slot 1131 on the conductive housing 110 is parallel to at least a part of the second dielectric slot 1132.

In an embodiment, the bottom housing 1232 and a conductive spacer layer 122 may be metal layers applied, through silver paste, onto side surfaces of a plate made of a non-metallic material.

This implementation is suitable for modifying a designed cavity antenna in an electronic device, to dispose an embedded conductive housing 123 in an original dielectric cavity 111, to modify a single-band cavity antenna into a dual-band cavity antenna.

In an embodiment, the cavity antenna in this implementation may alternatively be filled with a filler 141, and the filler 141 fills at least a part of a space between the intermediate layer 1231 and the conductive housing 110. The filler 141 may fill a part or all of the first sub-cavity 1121, or may fill a part or all of the second sub-cavity 1122. In an embodiment, the filler 141 may be made of a non-conductor or an insulator with a dielectric constant of 3 and a dielectric loss of 0.003, for example, plastic or epoxy resin. In this way, while supporting the intermediate layer 1231, the filler 141 can further transmit an electromagnetic wave, to ensure that the electromagnetic wave can be reflected in the cavity antenna 100.

In an embodiment, the second dielectric slot 1132 provided on the intermediate layer 1231 and the first dielectric slot 1131 provided on the conductive housing 110 may be located on different sides. For example, the first dielectric slot 1131 is located on a side of the cavity antenna 100 along an opposite direction of Y, and the second dielectric slot 1132 is located on a side of the cavity antenna 100 along the Y direction. A bent channel is formed in the dielectric cavity 111. After passing through the first dielectric slot 1131, an electromagnetic wave is transmitted to the other side of the first sub-cavity 1121, and then enters the second sub-cavity 1122 through the second dielectric slot 1132. When the cavity antenna is used in an electronic device, the cavity antenna may be disposed in an existing cavity, for example, a ventilation channel, of the electronic device, and a first dielectric slot 1131 is formed by a housing assembly clearance of the electronic device. The cavity antenna is constructed by using a built-in embedded conductive housing 123, and the first dielectric slot 1131 and a second dielectric slot 1132 are provided on different sides to form a bent channel. A size of a propagation path of an electromagnetic wave is increased, so that a size of the cavity antenna can be effectively reduced, to implement miniaturization of the cavity antenna and enable the cavity antenna to radiate and receive electromagnetic wave signals of more frequencies in a small electronic device. In an embodiment, a miniaturized cavity antenna may be an antenna part corresponding to the second sub-cavity 1122. In an embodiment, in a miniaturized structure of the second sub-cavity 1122, the first sub-cavity 1121 may alternatively be configured to radiate an electromagnetic wave of another frequency; or only the second sub-cavity 1122 may radiate an electromagnetic wave, and the first sub-cavity 1121 does not radiate an electromagnetic wave.

In an embodiment, as shown in FIG. 8, a feeding unit 130 may perform feeding on two sides of the second dielectric slot 1132. The second dielectric slot 1132 shown in FIG. 8 is L-shaped. The feeding unit 130 may be disposed in a section, extending along an X direction, of the second dielectric slot 1132. Alternatively, the feeding unit 130 may be disposed in a section, extending along the Y direction, of the second dielectric slot 1132.

FIG. 8 shows two feeding units 130 to show different positions at which feeding may be performed. In an embodiment, for one cavity antenna, only one feeding unit 130 may be disposed.

In a possible implementation, in addition to the first dielectric slot 1131 and the second dielectric slot 1132, a fourth dielectric slot may be further provided on the conductive housing 110 and/or the embedded conductive housing 123. A structure of the fourth dielectric slot may be similar to a structure of the first dielectric slot 1131, or may be similar to a structure of the second dielectric slot 1132. However, a size of the fourth dielectric slot is different from a size of the first dielectric slot 1131 and a size of the second dielectric slot 1132.

In an embodiment, a maximum size of the fourth dielectric slot is less than 1/2 of a wavelength of an electromagnetic wave that the cavity antenna is designed to radiate. For example, when the cavity antenna is designed to radiate an electromagnetic wave on a 5 GHz frequency band, the maximum size of the fourth dielectric slot is less than 1/2 of a wavelength corresponding to the electromagnetic wave on the 5 GHz frequency band. The maximum size of the fourth dielectric slot is a maximum span along an extension direction of the first dielectric slot 1131. In an embodiment, a total length of the fourth dielectric slot along the extension direction of the first dielectric slot 1131 is less than (70%×1/2) of the wavelength of the electromagnetic wave, for example, is less than or equal to 1/4 of the wavelength. The fourth dielectric slot less than 1/2 of the wavelength has small impact on electromagnetic wave transmission of the cavity antenna.

In a possible implementation, refer to FIG. 2 and FIG. 9. FIG. 9 is a diagram of performing feeding by a cavity antenna on a spacer structure according to an implementation of this application. The cavity antenna in this application further includes a feeding unit 130, and the feeding unit 130 is located in the dielectric cavity.

The feeding unit 130 may perform feeding on the conductive spacer structure 120, for example, perform feeding on the conductive spacer layer 122 between the first sub-cavity 1121 and the second sub-cavity 1122, to implement double resonances of the cavity antenna, and improve resonance effect and frequency bandwidth based on the dual-cavity structure in this application.

In an embodiment, a wire hole is provided on the conductive housing 110. A feeder of the feeding unit 130 may be led out of the antenna cavity through the wire hole, and the feeder led out is connected to a reception mechanism, to convert a received electromagnetic wave signal into an electrical signal. In addition, the feeder led out is grounded, and may be connected to a circuit board to implement grounding.

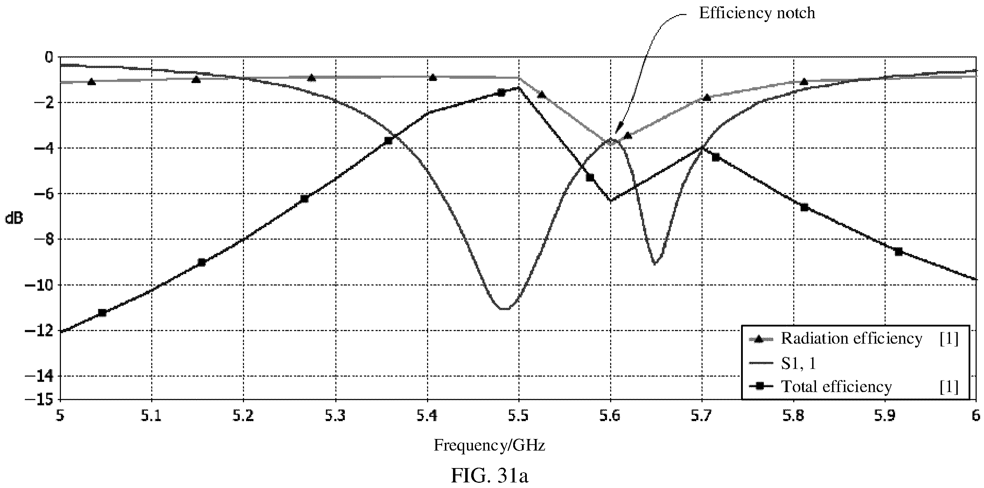

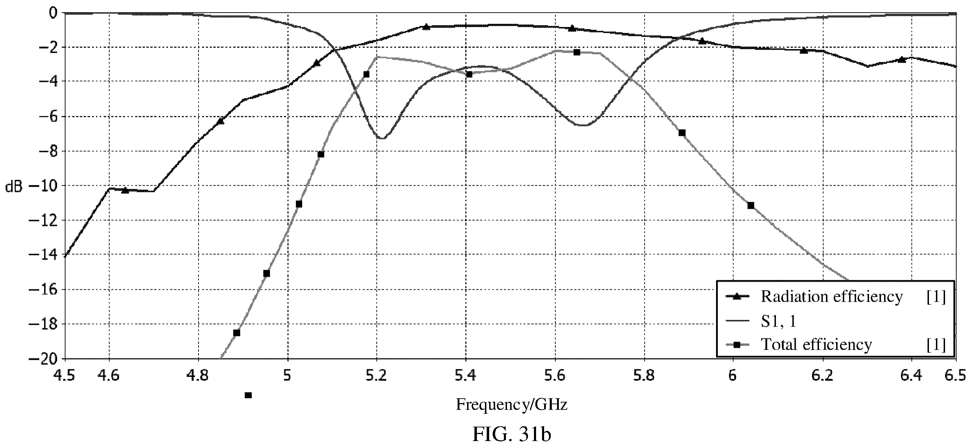

As shown in FIG. 2 and FIG. 9, a first through hole 121 may be provided on the conductive spacer layer 122, the first through hole 121 is in communication with the first sub-cavity 1121 and the second sub-cavity 1122 that are adjacent to each other, the feeding unit 130 performs feeding on two sides of the first through hole 121, and a feeding direction is from a side edge on one side of the first through hole 121 to another side edge. For example, on the conductive spacer layer 122 shown in FIG. 9, the feeding direction may be from a side of the first through hole 121 along the Y direction to a side along the opposite direction of Y. During feeding through an intermediate layer between the first sub-cavity 1121 and the second sub-cavity 1122, double resonances may occur, and compatibility between two higher-order-mode resonances of the cavity antenna on a corresponding frequency band is improved, without an efficiency notch. In an embodiment, FIG. 31a is a frequency-efficiency diagram of an existing cavity antenna of a single-cavity structure, and FIG. 31b is a frequency-efficiency diagram of a dual-cavity structure in which feeding is performed at an intermediate layer according to an implementation of this application, and a frequency-efficiency diagram of a case in which feeding is performed on a conductive spacer structure. As shown in FIG. 31a, when no dual-cavity structure is formed and no feeding is performed at an intermediate layer, radiation efficiency has a significant efficiency notch at approximately 5.6 GHz, and the efficiency notch may appear in both a fundamental mode and a higher-order mode. As shown in FIG. 31b, when feeding is performed at the intermediate layer between the two sub-cavities, double resonances occur, and corresponding radiation efficiency has no efficiency notch within a range of approximately 5 GHz.

The first through hole 121 passes through the conductive spacer layer 122, so that the first sub-cavity 1121 and the second sub-cavity 1122 are not conductive in a region in which the conductive spacer layer 122 is located. When the conductive spacer layer 122 is a metal layer applied onto a non-conductive plate, the non-conductive plate may not pass through the non-conductive plate in a region in which the conductive spacer layer 122 is located.

In an embodiment, the first dielectric slot 1131 is configured to radiate an electromagnetic wave in the first sub-cavity 1121 and an electromagnetic wave in the second sub-cavity 1122, and the second dielectric slot 1132 is configured to radiate the electromagnetic wave in the second sub-cavity 1122.

The feeding unit 130 is located in the first through hole 121 of the conductive spacer layer 122. Both the electromagnetic wave radiated in the first sub-cavity 1121 and the electromagnetic wave radiated in the second sub-cavity 1122 are in direct contact with the feeding unit 130. The first dielectric slot 1131 is configured to radiate a first electromagnetic wave, and the second dielectric slot 1132 is configured to radiate a second electromagnetic wave. The first electromagnetic wave is related to a first resonance, and the second electromagnetic wave is related to a second resonance.

In an embodiment, the first sub-cavity 1121 is configured to generate the first resonance, a frequency of the first resonance is related to a size of the first sub-cavity 1121, the second sub-cavity 1122 is configured to generate the second resonance, and a frequency of the second resonance is related to a size of the second sub-cavity.

In an embodiment, the frequency of the first resonance is related to the size of the first sub-cavity 1121, but the frequency of the first resonance is not limited to being related only to the size of the first sub-cavity 1121. Both the sizes of the first sub-cavity 1121 and the second sub-cavity 1122 affect the frequency of the first resonance. Being related may be understood as being mainly related, and indicates that the size of the first sub-cavity 1121 mainly affects the frequency of the first resonance, and the size of the first sub-cavity 1121 has greatest impact on the frequency of the first resonance.

In an embodiment, the frequency of the second resonance is related to the size of the second sub-cavity 1122, but the frequency of the second resonance is not limited to being related only to the size of the second sub-cavity 1122. Both the size of the first sub-cavity 1121 and the size of the second sub-cavity 1122 affect the frequency of the second resonance. Being related may be understood as being mainly related, and indicates that the size of the second sub-cavity 1122 mainly affects the frequency of the second resonance, and the size of the second sub-cavity 1122 has greatest impact on the frequency of the second resonance.

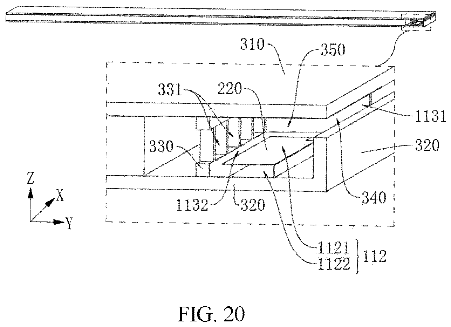

In an embodiment, the first sub-cavity 1121 and the second sub-cavity 1122 are configured to generate the first resonance, and a frequency of the first resonance is related to both a size of the first sub-cavity 1121 and a size of the second sub-cavity 1122. The first resonance in this embodiment may be understood as a resonance on an operating frequency band that the cavity antenna is designed to use during actual application. In this case, both the size of the first sub-cavity 1121 and the size of the second sub-cavity 1122 affect the frequency of the first resonance. The size of the first sub-cavity 1121 and the size of the second sub-cavity 1122 may have different degrees of impact on the frequency of the first resonance. One of the sizes may have main impact, and the other may have minor impact. In an embodiment, the size of the first sub-cavity 1121 may be different from the size of the second sub-cavity 1122. When the sizes are the same or a size difference is small, both the size of the first sub-cavity 1121 and the size of the second sub-cavity 1122 affect the frequency of the first resonance. However, when a size difference between the first sub-cavity 1121 and the second sub-cavity 1122 is large, for example, as shown in FIG. 20, the first sub-cavity 1121 needs a large size as a ventilation channel, and the second sub-cavity 1122 has a small size to radiate and receive a high-frequency electromagnetic wave, although the size of the first sub-cavity 1121 is large, a resonance still occurs. Because the size of the first sub-cavity 1121 is large, the resonance is within a low frequency range. The first resonance in this embodiment may not include the resonance within the low frequency range. In this case, the size of the first sub-cavity 1121 is large, the size of the second sub-cavity 1122 is small, and the size of the second sub-cavity 1122 has main impact on a resonance on the operating frequency band that the cavity antenna in this embodiment is designed to use, to implement miniaturization of a conductive housing corresponding to the second sub-cavity 1122. Alternatively, when the size of the second sub-cavity 1122 is the same (including some size deviations caused by a process error) as the size of the first sub-cavity 1121, the first resonance may be designed to be within a low frequency range.

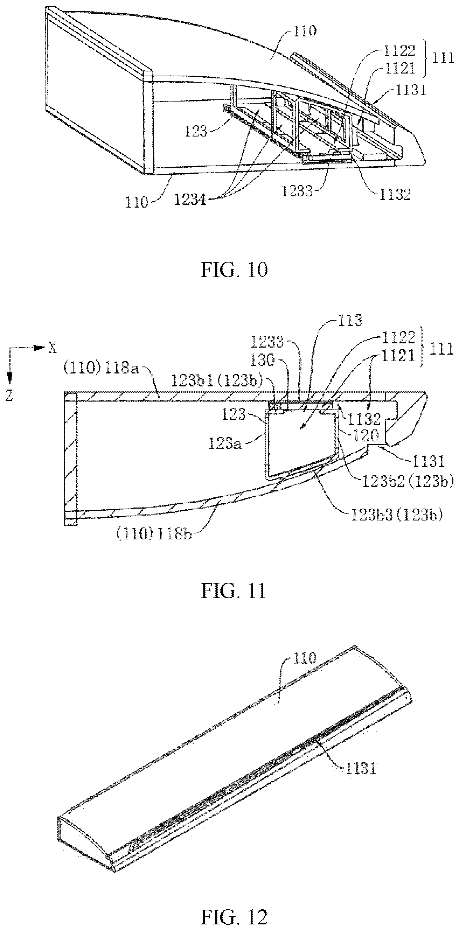

In a possible implementation, as shown in FIG. 10, FIG. 11, and FIG. 12, a conductive housing 110 in this implementation may be a part of a metal housing of an electronic device, or a metal coating on a surface of a non-metallic housing of an electronic device forms a conductive housing 110, and a dielectric cavity 111 is provided in the conductive housing 110.

An air intake duct may be provided on the housing of the electronic device, and the air intake duct forms a first dielectric slot 1131 in this implementation.

An embedded conductive housing 123 is disposed in the dielectric cavity 111, and the embedded conductive housing 123 divides the dielectric cavity 111 into a first sub-cavity 1121 and a second sub-cavity 1122.

As shown in FIG. 11, a second dielectric slot 1132 is provided at the top of the embedded conductive housing 123, and a dielectric structure 1233 is disposed above the embedded conductive housing 123. The dielectric structure 1233 may be a circuit board or another structure.

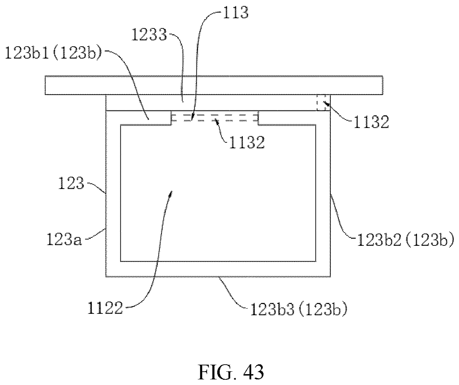

In an embodiment, as shown in FIG. 43, the second dielectric slot 1132 may be formed by the embedded conductive housing 123, or may be formed by both the embedded conductive housing 123 and the conductive housing 110. In FIG. 43, the embedded conductive housing 123 is provided with a gap at a position close to the dielectric structure 1233 (a position indicated by a dashed-line box in FIG. 43 is a position of the gap). The gap may be the second dielectric slot 1132. The second dielectric slot 1132 is adjacent to the dielectric structure 1233. Tuning may be performed by adjusting a size of the gap at the position. Alternatively, as indicated by the dashed-line box in FIG. 43, a gap between the embedded conductive housing 123 on one side of the dielectric structure 1233 and the conductive housing 110 on the other side may form the second dielectric slot 1132. A part of the dielectric structure 1233 is located in the second dielectric slot 1132. In this case, a width of the second dielectric slot 1132 may be adjusted by adjusting a thickness of the dielectric structure 1233, to perform tuning. In an embodiment, an electromagnetic wave enters the first sub-cavity 1121 through the first dielectric slot 1131, and enters the second sub-cavity 1122 through the dielectric structure 1233 and the second dielectric slot 1132. In addition, after entering the first sub-cavity 1121, the electromagnetic wave travels by a specific distance and then enters the second sub-cavity 1122. The first dielectric slot 1131 and the second dielectric slot 1132 are located on different sides, to form a bent channel in the dielectric cavity 111. After passing through the first dielectric slot 1131, the electromagnetic wave is transmitted to the other side of the first sub-cavity 1121, and then enters the second sub-cavity 1122 through the second dielectric slot 1132. A size of a propagation path of the electromagnetic wave is increased, so that a size of the cavity antenna can be effectively reduced, to implement miniaturization of the cavity antenna and enable the cavity antenna to radiate and receive electromagnetic wave signals of more frequencies in a small electronic device.

In an embodiment, the cavity antenna 100 may be combined with a ventilation channel of the electronic device, and the first dielectric slot 1131 may be an air intake vent or an air exhaust vent provided on the housing of the electronic device. A third air vent 1234 is provided on the embedded conductive housing 123, and a total length of the third air vent 1234 along an extension direction of the second dielectric slot 1132 is less than 1/2 of a wavelength of an electromagnetic wave. In an embodiment, a total length of the third air vent 1234 along an extension direction of the second dielectric slot 1132 is less than (70%×1/2) of a wavelength of an electromagnetic wave, for example, is less than or equal to 1/4 of the wavelength. The third air vent 1234 less than 1/2 of the wavelength has small impact on electromagnetic wave transmission of the cavity antenna. In an embodiment, with the first dielectric slot 1131 and the third air vent 1234, the dielectric cavity 111 may be reused as a cavity for ventilation, to improve utilization of an internal space of the electronic device.

In an embodiment, the embedded conductive housing 123 may be embedded in the ventilation channel through embedding to implement two sub-cavities; or a conductive spacer layer (not shown in FIG. 10 or FIG. 11) may be disposed in the ventilation channel to divide the ventilation channel into a first sub-cavity and a second sub-cavity.

In an embodiment, a spacing distance between the first dielectric slot 1131 and the second dielectric slot 1132 is greater than a shortest distance between the first dielectric slot 1131 and the conductive spacer structure 120.

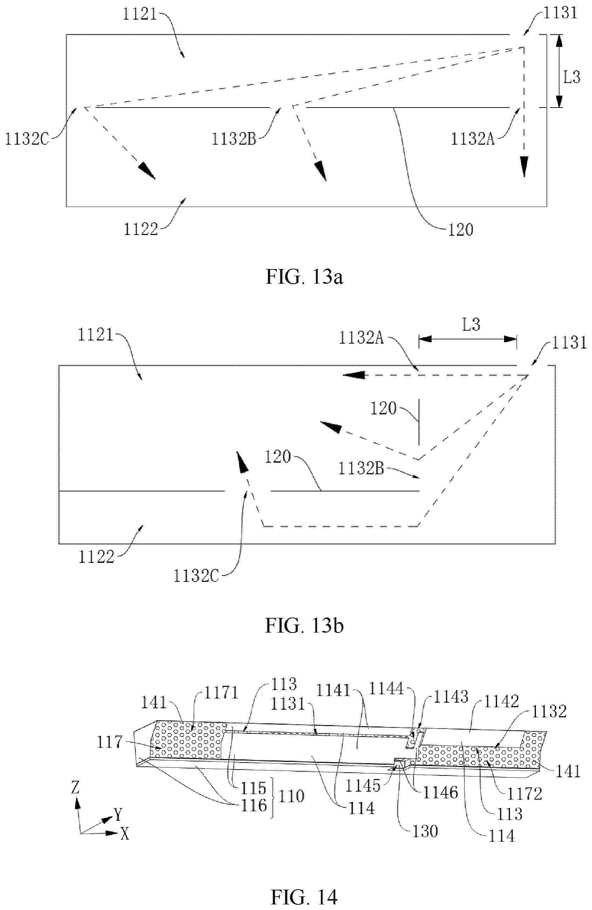

FIG. 13a is a first diagram of a structure of a bent channel of a cavity antenna according to an implementation of this application. L3 is the shortest distance between the first dielectric slot 1131 and the conductive spacer structure 120, and may be a shortest distance between the conductive spacer structure 120 and an edge, close to the conductive spacer structure 120, of the first dielectric slot 1131. When the second dielectric slot 1132 is located at a position of a second dielectric slot 1132A, a spacing distance between the first dielectric slot 1131 and the second dielectric slot 1132A is approximately equal to L3. In this case, after passing through the first dielectric slot 1131, an electromagnetic wave passes through the second dielectric slot 1132 along a short travel path (refer to a dashed line with an arrow in FIG. 13a).

When the second dielectric slot 1132 is located at a position of a second dielectric slot 1132B or 1132C, a spacing distance between the first dielectric slot 1131 and the second dielectric slot 1132B is greater than L3, and a spacing distance between the first dielectric slot 1131 and the second dielectric slot 1132C is greater than L3. After passing through the first dielectric slot 1131, an electromagnetic wave travels by a specific distance, and then passes through the second dielectric slot 1132B or 1132C and enters the second sub-cavity 1122. A bent channel is formed in the dielectric cavity 111, and a length of a travel path of the electromagnetic wave is increased, so that a size of the cavity antenna can be effectively reduced, to implement miniaturization of the cavity antenna and enable the cavity antenna to radiate and receive electromagnetic wave signals of more frequencies in a small electronic device. It should be noted that FIG. 13a is intended to show different positions of the second dielectric slot 1132, and the cavity antenna 100 is not limited to including a plurality of second dielectric slots 1132. The second dielectric slot 1132 may be any one of 1132A, 1132B, and 1132C. In this implementation, the second dielectric slot 1132 may be 1132B or 1132C, to form a bent channel.

In an embodiment, as shown in FIG. 11, feeding may be performed on the intermediate conductive spacer structure 120 on which the second dielectric slot 1132 is formed. Both the feeding unit 130 and the first sub-cavity 1121 are in direct contact with the second sub-cavity 1122. Feeding is performed at an intermediate layer between the first sub-cavity 1121 and the second sub-cavity 1122, to generate double resonances, so that compatibility between two resonances of the cavity antenna on a corresponding frequency band is improved, without an efficiency notch.

In an embodiment, as shown in FIG. 13b, the conductive spacer structure 120 may be an L-shaped conductive spacer plate, or may be an embedded conductive housing, to form an embedded cavity. L3 is the shortest distance between the first dielectric slot 1131 and the conductive spacer structure 120, and may be a shortest distance between the conductive spacer structure 120 and an edge, close to the conductive spacer structure 120, of the first dielectric slot 1131. When the second dielectric slot 1132 is located at a position of a second dielectric slot 1132A, a spacing distance between the first dielectric slot 1131 and the second dielectric slot 1132A is approximately equal to L3. In this case, after passing through the first dielectric slot 1131, an electromagnetic wave passes through the second dielectric slot 1132A along a short travel path (refer to a dashed line with an arrow in FIG. 13b).

When the second dielectric slot 1132 is located at a position of a second dielectric slot 1132B, a spacing distance between the first dielectric slot 1131 and the second dielectric slot 1132B is greater than L3. After passing through the first dielectric slot 1131, an electromagnetic wave travels by a specific distance, and then passes through the second dielectric slot 1132B and enters the second sub-cavity 1122. A bent channel is formed in the dielectric cavity 111, and a length of a travel path of the electromagnetic wave is increased, so that a size of the cavity antenna can be effectively reduced, to implement miniaturization of the cavity antenna and enable the cavity antenna to radiate and receive electromagnetic wave signals of more frequencies in a small electronic device.

The second dielectric slot 1132 may alternatively be located at a position of a second dielectric slot 1132C. A spacing distance between the first dielectric slot 1131 and the second dielectric slot 1132C is greater than L3. After passing through the first dielectric slot 1131, an electromagnetic wave travels through a section of bent channel, and then passes through the second dielectric slot 1132C and enters the second sub-cavity 1122. A bent channel is formed in the dielectric cavity 111, and a length of a travel path of the electromagnetic wave is increased, so that a size of the cavity antenna can be effectively reduced, to implement miniaturization of the cavity antenna and enable the cavity antenna to radiate and receive electromagnetic wave signals of more frequencies in a small electronic device.

It should be noted that FIG. 13b is intended to show different positions of the second dielectric slot 1132, and the cavity antenna 100 is not limited to including a plurality of second dielectric slots 1132. The second dielectric slot 1132 may be any one of 1132A, 1132B, and 1132C. In this implementation, the second dielectric slot 1132 may be 1132B or 1132C, to form a bent channel.

In an embodiment, in a cavity antenna structure in which a bent channel is formed, a conductive spacer layer 122 may be disposed in a cavity antenna to divide a dielectric cavity 111 into at least two sub-cavities with different sizes. In an embodiment, in a cavity antenna structure in which a bent channel is formed, an embedded conductive housing 123 may be disposed in a cavity antenna to form a miniaturized cavity antenna. In an embodiment, in a cavity antenna structure in which a bent channel is formed, an embedded conductive housing 123 may be disposed in a cavity antenna to form a miniaturized cavity antenna, and the embedded conductive housing 123 may divide a conductive housing 110 into two sub-cavities. In an embodiment, in a cavity antenna structure in which a bent channel is formed, feeding may be performed on a conductive spacer layer 122 or an embedded conductive housing 123 that separates two sub-cavities, to generate double resonances.

In an embodiment, as shown in FIG. 11, FIG. 12, and FIG. 40, the embedded conductive housing 123 in the electronic device may be of a hollow structure, and may include a first embedded portion 123a and a second embedded portion 123b. The first embedded portion 123a and the second embedded portion 123b enclose a structure similar to a pipe. The first embedded portion 123a may be a vertical spacer plate on a side, away from the first dielectric slot 1131, of the embedded conductive housing 123. The first embedded portion 123a and the conductive housing 110 jointly enclose the dielectric cavity 111. For example, in FIG. 11, the first embedded portion 123a may be a vertical spacer plate on a side of the embedded conductive housing 123 along an opposite direction of X. The first embedded portion 123a may be a metal plate, or may be provided with a metal surface on an inner surface facing the cavity.

The second embedded portion 123b and the first embedded portion 123a are fastened to each other or of an integrated structure. The second embedded portion 123b divides the dielectric cavity 111 into the first sub-cavity 1121 and the second sub-cavity 1122. The first sub-cavity 1121 and the second sub-cavity 1122 may have different sizes. A space between the conductive housing 110 and an outer wall surface of the second embedded portion 123b is the first sub-cavity 1121. An inner cavity enclosed by the first embedded portion 123a and the second embedded portion 123b is the second sub-cavity 1122. The first dielectric slot 1131 is provided on a part, corresponding to the first sub-cavity 1121, of the conductive housing 110.

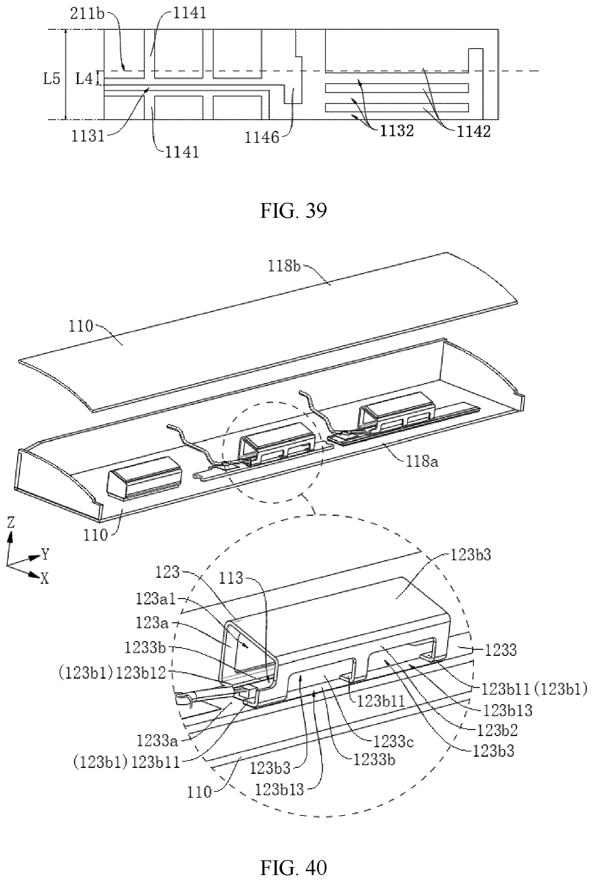

In an embodiment, as shown in FIG. 11 and FIG. 40, the second embedded portion 123b includes a first housing plate 123b1. The first housing plate 123b1 may be a bottom plate of the embedded conductive housing 123, for example, a horizontal plate on a side along an opposite direction of Z in FIG. 40. The first housing plate 123b1 may be a metal plate, or may be provided with a metal surface on an inner surface facing the cavity. The dielectric structure 1233 is disposed between the first housing plate 123b1 and the conductive housing 110, and the dielectric structure 1233 may be a circuit board or another structure. A dielectric slot 113 may be provided on the first housing plate 123b1, and the dielectric structure 1233 is configured to allow an electromagnetic wave to pass.

The electromagnetic wave may enter the first sub-cavity 1121 through the first dielectric slot 1131. The electromagnetic wave in the first sub-cavity 1121 may pass through the dielectric structure 1233, and enter the second sub-cavity 1122 through the dielectric slot 113 provided on the first housing plate 123b1. It should be noted that the dielectric slot 113 provided on the first housing plate 123b1 may be considered as the second dielectric slot 1132 corresponding to the second sub-cavity 1122 in this embodiment. In an embodiment, a gap (the gap may be filled with the dielectric structure 1233) between the first housing plate 123b1 and a bottom conductive housing 110 may alternatively be considered as the second dielectric slot 1132 corresponding to the second sub-cavity 1122, and tuning may be performed by adjusting a width of the gap, for example, tuning is performed by adjusting a thickness of the dielectric structure 1233.

In an embodiment, as shown in FIG. 40, a surface, attached to the first housing plate 123b1, of the dielectric structure 1233 is a first surface 1233a, and the first surface 1233a may be a surface on a side of the dielectric structure 1233 along a Z direction. A metal surface region 1233b is provided on the first surface 1233a, and the first housing plate 123b1 is electrically connected to the metal surface region 1233b. The dielectric slot 113 provided on the first housing plate 123b1 may pass through the entire first housing plate 123b1 along a Y direction. The dielectric slot 113 may divide the first housing plate 123b1 into two parts, and the two parts are located on two sides of the dielectric slot 113 along the X direction and the opposite direction of X. There may be two metal surface regions 1233b. The two metal surface regions 1233b may be located on two sides of the dielectric slot 113. The two parts obtained by separating the first housing plate 123b1 are respectively electrically connected to the two metal surface regions 1233b.

In an embodiment, as shown in FIG. 40, a dielectric surface region 1233c is provided on the first surface 1233a, and the dielectric surface region 1233c is adjacent to the metal surface region 1233b. There may be two metal surface regions 1233b, and the two metal surface regions 1233b may be located on two sides of the dielectric surface region 1233c along the X direction and the opposite direction of X. In an embodiment, the dielectric slot 113 on the first housing plate 123b1 and the dielectric surface region 1233c are arranged opposite to each other. An electromagnetic wave in the first sub-cavity 1121 may sequentially pass through the dielectric surface region 1233c and the dielectric slot 113 on the first housing plate 123b1, and enter the second sub-cavity 1122. An electromagnetic wave in the second sub-cavity 1122 may also sequentially pass through the dielectric slot 113 on the first housing plate 123b1 and the dielectric surface region 1233c, and enter the first sub-cavity 1121.

In a possible implementation, FIG. 14 is a diagram of a structure of another cavity antenna according to an implementation of this application. A conductive housing 110 includes a plurality of dielectric spaces 117. In FIG. 14, two dielectric spaces 117 are used as an example. The conductive housing 110 includes a conductive surface 115. A plurality of dielectric slots 113 are provided on the conductive surface 115. In FIG. 14, two dielectric slots 113 are used as an example. Each dielectric space 117 corresponds to at least one of the plurality of dielectric slots 113.

It should be noted that, in this embodiment of this application, a conductive surface and a conductive enclosing surface may be located on a same plane. In addition, there may be no structural boundary between the conductive surface and the conductive enclosing surface, and the conductive surface and the conductive enclosing surface are merely located in different regions on a same plane.

In an embodiment, the conductive surface 115 may be a plane, the plurality of dielectric slots 113 are located on the plane, and the plurality of dielectric spaces 117 are arranged side by side along the plane.

In this implementation, for example, two dielectric spaces 117 are provided in the conductive housing 110. The conductive housing 110 includes the conductive surface 115 and a conductive enclosing surface 116. The conductive enclosing surface 116 is of a groove structure, and the conductive surface 115 is provided at a groove opening of the conductive enclosing surface 116, to enclose a dielectric cavity 111. A mechanical plate on which the conductive surface 115 and the conductive enclosing surface 116 are located may be a metal plate, and the conductive surface 115 and the conductive enclosing surface 116 are surfaces of the metal plate. Alternatively, a mechanical plate on which the conductive surface 115 and the conductive enclosing surface 116 are located may be a non-metallic non-conductive plate, and the conductive surface 115 and the conductive enclosing surface 116 are metal layers applied onto a surface of the non-conductive plate.

An antenna pattern 114 is provided on the conductive surface 115. The antenna pattern 114 includes a first antenna pattern 1141 and a second antenna pattern 1142. The first antenna pattern 1141 and the second antenna pattern 1142 are located on a same conductive surface 115, and a gap 1143 may be provided between the first antenna pattern 1141 and the second antenna pattern 1142, so that the first antenna pattern 1141 and the second antenna pattern 1142 are isolated from each other at the gap 1143.

A first dielectric slot 1131 is provided on the first antenna pattern 1141, and a second dielectric slot 1132 is provided on the second antenna pattern 1142. The first dielectric slot 1131 and the second dielectric slot 1132 each include a section extending along an X direction, to ensure that an electromagnetic wave can enter the dielectric cavity 111 through the first dielectric slot 1131 and the second dielectric slot 1132.

In the cavity antenna in this embodiment of this application, a conductive surface and a conductive enclosing surface can enclose a dielectric space, at least two conductive surfaces are provided to correspond to at least two dielectric slots, and antenna radiation and tuning are performed through different dielectric slots, to enable the cavity antenna to radiate electromagnetic waves on different frequency bands, and ensure good operating efficiency (for example, both operating efficiency within a frequency range of 2.4 GHz to 2.5 GHz and operating efficiency within a frequency range of 5.2 GHz to 5.8 GHz may be greater than -3 dB). In addition, the cavity antenna in this embodiment of this application may be combined with a ventilation structure of an electronic device, to improve utilization of a device space. An internal cavity space may be used as both a radiation cavity and a ventilation cavity.

In an embodiment, a plurality of dielectric slots are in a one-to-one correspondence with a plurality of dielectric spaces. In an embodiment, one dielectric slot may correspond to a plurality of dielectric spaces, or dielectric slots respectively corresponding to two dielectric spaces are in communication with each other to form a structural slot. For example, the first dielectric slot 1131 may correspond to two dielectric spaces, and both of the two dielectric spaces radiate and receive electromagnetic waves of specific frequencies through the first dielectric slot 1131. In an embodiment, two dielectric spaces corresponding to a same first dielectric slot 1131 have different antenna sizes, to radiate and receive electromagnetic waves of different frequencies.

In an embodiment, a conductive spacer structure 120 may include a gap space 1144. The gap space 1144 is a space, extending into the dielectric cavity 111, of the gap 1143. The gap space 1144 is a part of the dielectric cavity 111. In this implementation, a first dielectric space 1171 and a second dielectric space 1172 are in structural communication with each other, and the dielectric cavity 111 is divided into the first dielectric space 1171 and the second dielectric space 1172 based on regions covered by the first antenna pattern 1141 and the second antenna pattern 1142. It can be understood that the first dielectric space 1171 and the second dielectric space 1172 are two regions in a cavity of the conductive housing 110.

The first dielectric space 1171 and the second dielectric space 1172 that are in communication with each other may be filled with a filling medium of an integrated structure. For example, the conductive housing 110 may be filled with a filler 141, to fasten the conductive surface 115 and the conductive enclosing surface 116, improve structural strength of the conductive housing 110, and prevent the conductive surface 115 and the conductive enclosing surface 116 from being deformed. In an embodiment, the filler 141 may be made of a non-conductor or an insulator with a dielectric constant of 3 and a dielectric loss of 0.003, for example, plastic or epoxy resin. In this way, while supporting a conductive spacer layer 122, the filler 141 can further transmit an electromagnetic wave, to ensure that the electromagnetic wave can be reflected in the cavity antenna 100.

In this implementation, two antenna patterns are provided, to form two antenna dielectric spaces based on the two antenna patterns. The two antenna dielectric spaces may be in structural communication with each other, or may be in communication with an external environment along the X direction. Two cavities for radiating and receiving electromagnetic wave signals of different frequencies are mainly enclosed by the antenna patterns and the conductive enclosing surface 116. A frequency of an electromagnetic wave to be received and radiated by the cavity antenna may be adjusted based on lengths of dielectric slots provided on the two antenna patterns. For example, as shown in FIG. 14, when a length of the first dielectric slot 1131 along the X direction is 40.5 mm, the first dielectric slot 1131 may be configured to radiate and receive a 2.4 GHz electromagnetic wave signal; and when a length of the second dielectric slot 1132 along the X direction is 21.6 mm, the second dielectric slot 1132 may be configured to radiate and receive a 5 GHz electromagnetic wave signal. In this implementation, the two dielectric spaces have same sizes along a Y direction and a Z direction. In an embodiment, the two dielectric spaces may have different sizes along the Y direction and the Z direction. Electromagnetic wave signals of different frequencies may be radiated and received by adjusting sizes of the two dielectric spaces, or electromagnetic wave signals of different frequencies may be radiated and received by adjusting the lengths of the dielectric slots.

In an embodiment, the conductive housing 110 (including the conductive surface 115 and the conductive surface 115) of the cavity antenna may further include a fourth dielectric slot. The fourth dielectric slot is a dielectric slot other than the first dielectric slot 1131, the second dielectric slot 1132, and a third dielectric slot 1133. A slot size of the first dielectric slot 1131 and a slot size of the second dielectric slot 1132 should be greater than or equal to 1/2 of a wavelength corresponding to a frequency of an electromagnetic wave radiated and received by the first dielectric slot 1131 and 1/2 of a wavelength corresponding to a frequency of an electromagnetic wave radiated and received by the second dielectric slot 1132 respectively. A maximum slot size (the slot size is a size related to a frequency of a received electromagnetic wave signal) of the fourth dielectric slot should be less than 1/2 of a wavelength corresponding to a frequency of an electromagnetic wave radiated and received by the cavity antenna.

In an embodiment, the conductive housing 110 is provided with a metal conductive surface in both an extension direction of the first dielectric slot 1131 and a direction perpendicular to the extension direction of the first dielectric slot 1131. As shown in FIG. 1 and FIG. 8, the conductive housing 110 is provided with a metal conductive surface on all of a side along the X direction, a side along the Y direction, a side along the Z direction, a side along an opposite direction of X, a side along an opposite direction of Y, and a side along an opposite direction of Z. The cavity antenna 100 forms a sealed space in all directions (the sealed space means that the space is sealed for an electromagnetic wave radiated and received by the cavity antenna, but may not be structurally sealed). In an embodiment, a slot and a through hole may be provided on a side surface along one direction, and sizes of the slot and the through hole along an extension direction of the slot should be less than 1/2 of a wavelength corresponding to a frequency of an electromagnetic wave that the cavity antenna is designed to radiate and receive.

In an embodiment, as shown in FIG. 8, both the first dielectric slot 1131 and the second dielectric slot 1132 extend along the X direction. The conductive housing 110 is provided with a metal housing on all of the side along the Y direction, the side along the Z direction, the side along the opposite direction of Y, and the side along the opposite direction of Z, and may not be provided with a metal housing on the side along the X direction and/or the side along the opposite direction of X. The cavity antenna 100 is of an open structure on the side along the X direction and the side along the opposite direction of X.

In an embodiment, the first antenna pattern 1141 is provided with an extension plate 1146 on a side close to the second antenna pattern 1142, and the extension plate 1146 may be connected to the second antenna pattern 1142 or isolated from the second antenna pattern 1142.

A groove 1145 is provided on a lower side surface, located on a lower side of the extension plate 1146, of the conductive housing 110. A feeding unit 130 may be disposed in the groove 1145. A side, along the opposite direction of Z, of the extension plate 1146 is bent into the groove 1145. The feeding unit 130 is electrically connected to the extension plate 1146 in the groove 1145, so that the feeding unit 130 can perform feeding at a position of the extension plate 1146. The extension plate 1146 is a part of the first antenna pattern 1141, and the feeding unit 130 is directly electrically connected to the first antenna pattern 1141 for direct feeding. There is a gap between the extension plate 1146 and the second antenna pattern 1142, and the gap may be a part of the second dielectric slot 1132. The feeding unit 130 may feed the second antenna pattern 1142 through coupling. It should be noted that this implementation shows only feeding through coupling. The extension plate 1146 may alternatively be directly connected to the second antenna pattern 1142 for direct feeding. In this case, the first antenna pattern 1141 and the second antenna pattern 1142 are electrically connected through the extension plate 1146.

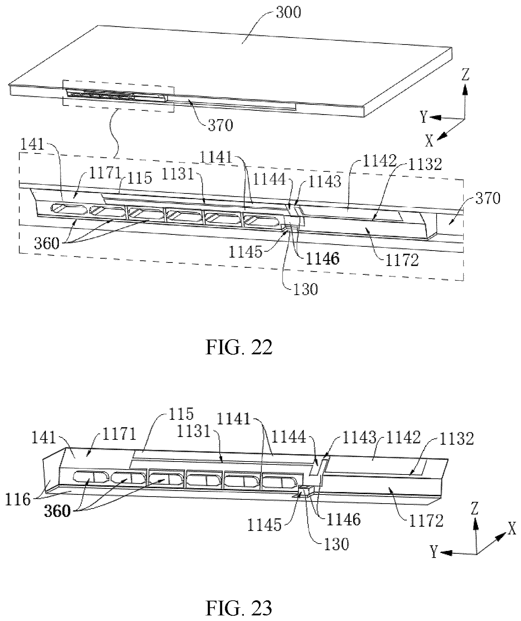

In an embodiment, as shown in FIG. 22, both the second dielectric slot 1132 and the feeding unit 130 are located on a same side of the second antenna pattern 1142 along a width direction of the second dielectric slot 1132. The second dielectric slot 1132 is located on a side of the second antenna pattern 1142 along the opposite direction of Z, and the feeding unit 130 is located on the side of the second antenna pattern 1142 along the opposite direction of Z. In an embodiment, the second dielectric slot 1132 and the feeding unit 130 may be located on two sides of the second antenna pattern 1142 along a width direction of the second dielectric slot 1132. The second dielectric slot 1132 may be located on a side of the second antenna pattern 1142 along the Z direction or the opposite direction of Z, and the feeding unit 130 is located on the other side of the second antenna pattern 1142 relative to the second dielectric slot 1132.

In an embodiment, the extension plate 1146 may alternatively be an extension plate of the second antenna pattern 1142 toward the first antenna pattern 1141. The extension plate 1146 is directly connected to the second antenna pattern 1142, and there is a gap between the extension plate 1146 and the first antenna pattern 1141. Alternatively, the extension plate 1146 is connected to the first antenna pattern 1141, and the extension plate 1146 may also be connected to the second antenna pattern 1142.

As shown in FIG. 14, the conductive surface 115 and the conductive enclosing surface 116 are not sealed, and a through hole for communication is formed on the conductive housing 110. The first dielectric slot 1131 and the second dielectric slot 1132 may be a part of the through hole. A shape and a size of a part of the through hole other than the first dielectric slot 1131 and the second dielectric slot 1132 are different from shapes and sizes of the first dielectric slot 1131 and the second dielectric slot 1132, to distinguish the first dielectric slot 1131 and the second dielectric slot 1132 from another region of the through hole, so that different through holes can radiate electromagnetic wave signals on different frequency bands. In this application, the sizes of the first dielectric slot 1131 and the second dielectric slot 1132 may be designed into corresponding sizes that support radiation and reception of 2.4 GHz and 5 GHz, and through holes with other sizes do not affect the first dielectric slot 1131 or the second dielectric slot 1132 in radiation of signals of corresponding frequencies.

As shown in FIG. 14, a length of the first antenna pattern 1141 along the X direction may be within a range of 40 millimeters to 41 millimeters, and may be 40.5 millimeters; a length of the second antenna pattern 1142 along the X direction may be within a range of 21 millimeters to 22 millimeters, and may be 21.6 millimeters; a height of the conductive enclosing surface 116 along the Z direction may be within a range of 7.5 millimeters to 8.5 millimeters, and may be 7.9 millimeters; a length of the conductive enclosing surface 116 along the X direction may be within a range of 85 millimeters to 90 millimeters, or may be 88.8 millimeters; and a width of the conductive enclosing surface 116 along the Y direction may be within a range of 5 millimeters to 10 millimeters. In this implementation, an outer surface of the cavity antenna on the side along the Y direction may match an outer surface of the electronic device. For example, in this implementation, the outer surface on the side along the Y direction may be a curved surface or an arc surface.

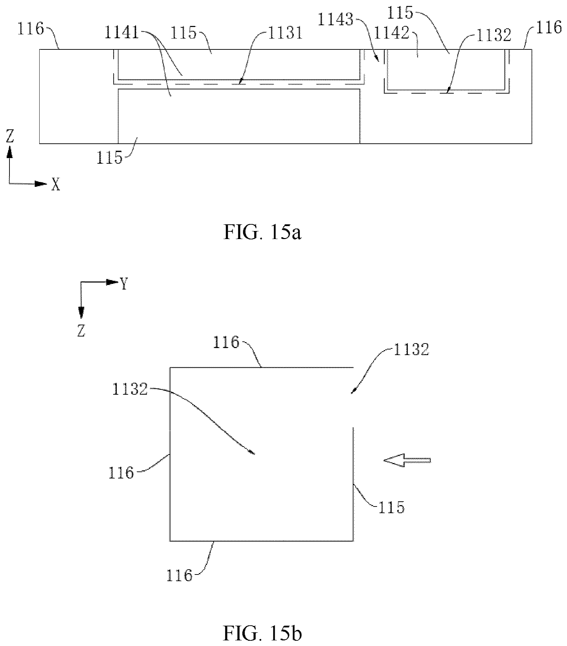

In an embodiment, FIG. 15a is a first diagram of a position of a slot structure of a cavity antenna according to an implementation of this application. The slot structure shown in this implementation is a slot between two conductive points. To be specific, two ends of the slot structure need to be connected to conductors. The dielectric slot 113 may extend along a path indicated by a dashed line on the left in FIG. 15a. The first dielectric slot 1131 includes a section extending along the X direction and sections extending along the Z direction on two sides, and top ends of the sections extending along the Z direction are connected to the conductive enclosing surface 116. The second dielectric slot 1132 extends along a path indicated by a dashed line on the right in FIG. 15a. The second dielectric slot 1132 includes a section extending along the X direction and sections extending along the Z direction on two sides, and top ends of the sections extending along the Z direction are connected to the conductive enclosing surface 116.

In an embodiment, the conductive spacer structure 120 may be the gap space 1144, extending into the dielectric cavity 111, of the gap 1143, or may be the conductive spacer layer 122. The conductive spacer layer 122 extends along a YZ plane, and structurally divides the dielectric cavity 111 into the first dielectric space 1171 and the second dielectric space 1172.

In an embodiment, in the cavity antenna shown in FIG. 14, when an external structure is a tetragonal prism-like structure, the conductive enclosing surface 116 may include three side surfaces along the Z direction, the opposite direction of Z, and the opposite direction of Y. In an embodiment, the conductive enclosing surface 116 may be provided on both of two side surfaces along the X direction and the opposite direction of X, to enclose the two side surfaces of the cavity along the X direction and the opposite direction of X. In an embodiment, the conductive enclosing surface 116 is provided only on one of a side surface on the side along the X direction and a side surface on the side along the opposite direction of X, and no conductive enclosing surface 116 is provided on the other side surface, to form a partially through structure. In addition, a size of a through hole at this position is greatly different from a size of a dielectric slot of the cavity antenna, so that frequencies of electromagnetic waves radiated by the through hole and the dielectric slot are different, and an electromagnetic wave on a target frequency band in the cavity antenna is controlled to be radiated only at the dielectric slot. In an embodiment, the conductive enclosing surface 116 is provided on neither of a side surface on the side along the X direction and a side surface on the side along the opposite direction of X, and a size of a through hole at this position is greatly different from a size of a dielectric slot of the cavity antenna, so that frequencies of electromagnetic waves radiated by the through hole and the dielectric slot are different, and an electromagnetic wave on a target frequency band in the cavity antenna is controlled to be radiated only at the dielectric slot.

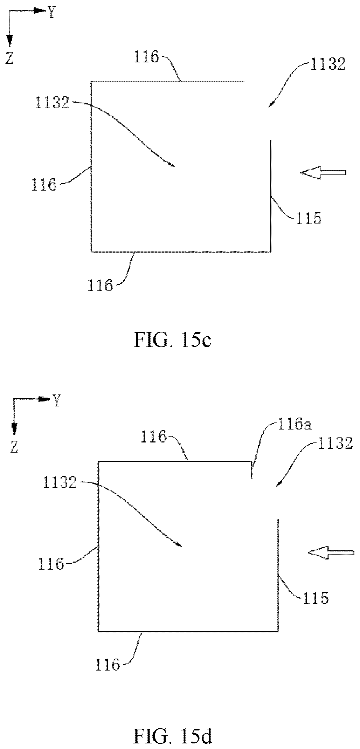

In an embodiment, as shown in FIG. 14 and FIG. 15b, the conductive surface 115 is a side surface of the cavity antenna on the side along the Y direction, and a dielectric slot provided on the conductive surface 115 may be entirely on a surface on which the conductive surface 115 is located. For example, both an upper side edge and a lower side edge of the second dielectric slot 1132 (the second dielectric slot is used as an example, but the second dielectric slot does not constitute a limitation) shown in FIG. 15b are on the surface on which the conductive surface 115 is located. In an embodiment, as shown in FIG. 15c, for the second dielectric slot 1132 provided on the conductive surface 115, an upper edge of the second dielectric slot 1132 is located on a plane on which the conductive surface 115 is located, and a lower edge of the second dielectric slot 1132 is located on the conductive enclosing surface 116 on the side along the opposite direction of Z. The formed second dielectric slot 1132 is an inclined opening relative to the conductive surface 115. However, shapes in views along directions of arrows shown in FIG. 15b and FIG. 15c are the same as a shape shown in FIG. 15a. As shown in FIG. 15d, one end, along the Y direction, of the conductive enclosing surface 116 on the side along the opposite direction of Z has a partial flipped surface 116a. For the second dielectric slot 1132 provided on the conductive surface 115, an upper edge of the second dielectric slot 1132 is located on a plane on which the conductive surface 115 is located, and a lower edge of the second dielectric slot 1132 is a side edge on one side of the flipped surface 116a. The formed second dielectric slot 1132 is an inclined opening relative to the conductive surface 115. Shapes in views along directions of arrows shown in FIG. 15b, FIG. 15c, and FIG. 15d are the same as a shape shown in FIG. 15a.

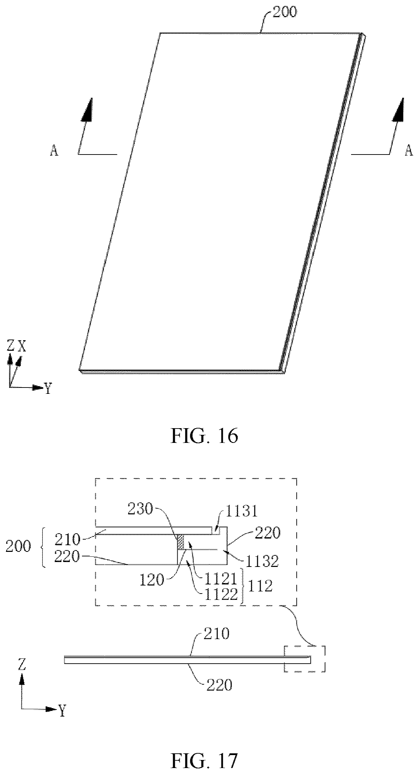

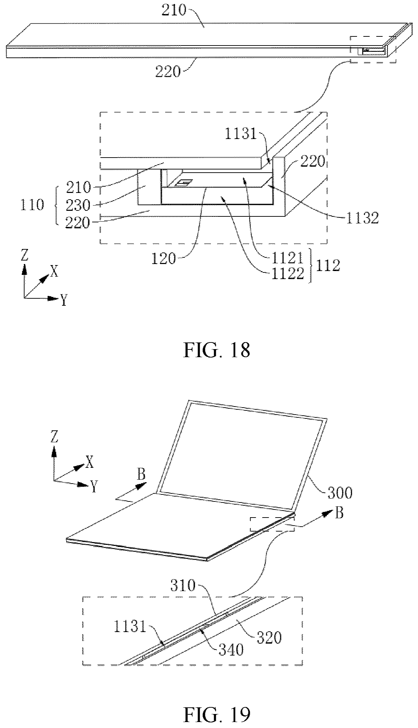

In a possible implementation, as shown in FIG. 16 to FIG. 18, based on the foregoing cavity antenna structure, this implementation proposes application of a cavity antenna in a terminal. The terminal may be an electronic device, for example, a mobile phone or a tablet computer. In this implementation, the mobile phone is used as an example. FIG. 16 is a diagram of a terminal device according to an implementation of this application. FIG. 17 is a diagram of a connection between a display and a metal rear cover of a terminal device according to an implementation of this application. FIG. 18 is a schematic sectional view at A-A in FIG. 16.

The terminal 200 mainly includes a display and a housing 220. A middle frame may be further disposed between the display 210 and the housing 220. FIG. 18 is merely an example diagram showing related positions of the display 210 and the housing 220. The implementation shown in FIG. 18 cannot limit a specific structural form of the display 210 or the housing 220.

The display 210 is configured to display an image. In some embodiments of this application, the display 210 includes a liquid crystal display (liquid crystal display, LCD) module and a backlight module (backlight unit, BLU). Alternatively, in some other embodiments of this application, the display 210 may be an organic light-emitting diode (organic light-emitting diode, OLED) display.

In the implementation shown in FIG. 17, a conductive layer is provided on an inner surface, facing the housing 220, of the display 210. The conductive layer may be made of a metal material. The conductive layer may alternatively be a shield layer of the display 210, to prevent another component in the terminal 200 from interfering with the display 210.

The display 210 and the housing 220 constitute a conductive housing 110. The housing 220 and the display 210 jointly enclose a dielectric cavity 111 of the terminal 200. In a specific implementation, the housing 220 is of an integrated metal structure. In another implementation, the housing 220 may alternatively include a non-metallic body that may be made of plastic or another non-metallic material, and a metal layer is provided on an inner surface of the non-metallic body of the housing 220. The metal layer may be a partial region of the housing 220, for example, an edge region of the housing 220.

When the terminal is provided with the middle frame (not shown in the figure), the middle frame includes a conductive bezel. In some embodiments, the conductive bezel may be a conductive bezel that is integrally formed on a middle frame body. It should be understood that, in some other embodiments, the conductive bezel and the middle frame body may alternatively be independent of each other. For example, the conductive bezel and the middle frame body may be separately formed by using different materials. For example, the conductive bezel is formed by using a conductive material, and the middle frame body is formed by using a non-conductive material.

As shown in FIG. 17 and FIG. 18, the terminal 200 further includes a first blocking plate 230, and the first blocking plate 230 extends along a Z direction. The conductive housing 110 includes the display 210 (the conductive layer on the inner surface), the housing 220, and the first blocking plate 230, to enclose the dielectric cavity 111.

In an embodiment, in a mobile phone, there is an assembly clearance between a display 210 and a housing 220, and the assembly clearance is an inevitable slot formed during assembly of two components. In an embodiment, a first dielectric slot 1131 includes the assembly clearance. In an embodiment, a first dielectric slot 1131 includes a non-display border (for example, a black border) on the display 210. An electromagnetic wave may enter a dielectric cavity 111 in the mobile phone through the first dielectric slot 1131.

In the dielectric cavity 111, a conductive spacer structure 120 divides the dielectric cavity 111 into a first sub-cavity 1121 and a second sub-cavity 1122, and a second dielectric slot 1132 is provided on the conductive spacer structure 120, to enable the electromagnetic wave that enters the dielectric cavity 111 to enter the second sub-cavity 1122. In addition, antenna widths of the first sub-cavity 1121 and the second sub-cavity 1122 are adjusted, to enable the terminal 200 to radiate and receive dual-band signals.

In an embodiment, a first blocking plate 230 is disposed in the terminal 200, to form the dielectric cavity 111 together with the display 210 and the housing 220 that are included in the conductive housing 110. A conductive spacer structure 120 is disposed in the dielectric cavity 111, to divide the dielectric cavity 111 into a first sub-cavity 1121 and a second sub-cavity 1122, and antenna widths of the first sub-cavity 1121 and the second sub-cavity 1122 are adjusted, to enable the terminal 200 to radiate and receive dual-band signals, and increase bandwidth of the terminal 200 on a frequency band. Sizes of the sub-cavities may be set to support radiation and reception of both a 2G signal and a 5G signal.

In an embodiment, a through hole may be provided on the conductive spacer structure 120 of the terminal 200, and a feeding unit performs feeding on two sides of the through hole, to improve compatibility between two higher-order-mode resonances and/or two fundamental-mode resonances on a specific frequency band, and eliminate an efficiency notch.

In an embodiment, this implementation may alternatively be applied to a terminal device like a tablet computer. The tablet computer is also provided with a display 210 and a housing 220. A first dielectric slot 1131 may also include a structural gap between the display 210 and the housing 220, and/or a black border on the display 210 (the black border is a black non-real region, around the display 210, that is adjacent to a middle frame). In addition, in a dielectric cavity 111 enclosed by the display 210, the housing 220, and a first blocking plate 230, a conductive spacer structure 120 divides the dielectric cavity 111 into a first sub-cavity 1121 and a second antenna sub-cavity 112, to implement radiation and reception of dual-band signals.

In a possible implementation, based on the foregoing cavity antenna structure, this implementation proposes application of a cavity antenna in a terminal. The terminal may be a notebook computer, a desktop computer, or an integrated computer (a display and a main body are of an integrated structure). In this implementation, the notebook computer is used as an example.

The notebook computer in this implementation may include the cavity antenna in any one of the foregoing implementations. For example, a first dielectric slot 1131 in the notebook computer includes an assembly clearance between a display and a metal rear housing, and a first blocking plate is disposed between the display and the metal rear housing, to enclose a dielectric cavity 111. In the dielectric cavity 111, a conductive spacer structure 120 divides the dielectric cavity 111 into a first sub-cavity 1121 and a second antenna sub-cavity 112, to implement radiation and reception of dual-band signals.

In an embodiment, a conductive housing 110 of the notebook computer includes a metal middle frame and a metal rear housing, and a first dielectric slot 1131 includes an assembly clearance between the metal middle frame and the metal rear housing. As shown in FIG. 19 and FIG. 20, a slot width of the first dielectric slot 1131 along a Z direction is within a range of 1.2 millimeters to 1.8 millimeters, and may be 1.5 millimeters. The cavity antenna in this application may be used in any electronic device of a structure with two metal layers.

The notebook computer in this embodiment may have a heat dissipation mechanism, and air outside the notebook computer may circulate in a heat dissipation channel of the notebook computer through a fan. The circulating air carries away heat generated by an electronic component, to dissipate heat for the electronic component in the computer.

Refer to FIG. 19 and FIG. 20. FIG. 19 is a diagram of a structure of a notebook computer according to an implementation of this application. A keyboard in FIG. 19 is not shown. FIG. 19 is a diagram of a notebook computer 300 in an open state, with a partially enlarged view. The notebook computer 300 includes a first metal housing 310, a second metal housing 320, and a second blocking plate 330. A conductive housing 110 includes the first metal housing 310, the second metal housing 320, and the second blocking plate 330, to enclose a dielectric cavity 111. Specifically, the first metal housing 310 may be a cover, and a keyboard, a touchpad, and other structures may be disposed on the cover. The second metal housing 320 may be a bottom plate, and electronic components such as a circuit board are mounted in a space between the cover and the bottom plate. Both the cover and the bottom plate are made of metal materials, or metal layers are applied onto inner surfaces of the cover and the bottom plate.

FIG. 20 is a schematic sectional view at B-B in FIG. 19 according to this application. A first ventilation gap 340 is provided between the first metal housing 310 and the second metal housing 320, and the first ventilation gap 340 may be located at a side edge of the notebook computer. The first dielectric slot 1131 in this implementation includes the first ventilation gap 340. A first air vent 331 is provided on the second blocking plate 330. A ventilation channel 350 is provided between the first air vent 331 and the first ventilation gap 340. The first ventilation gap 340, the ventilation channel 350, and the first air vent 331 are in communication with each other, to form an air intake duct or an air exhaust duct of the notebook computer 300. In this implementation, an air intake duct at a position of a side edge of the notebook computer is used as an example.

In an embodiment, a maximum span of the first air vent 331 is less than 1/2 of a wavelength of an electromagnetic wave. In an embodiment, a total length of the first air vent 331 along an extension direction of the first dielectric slot 1131 is less than (70%×1/2) of a wavelength of an electromagnetic wave, for example, is less than or equal to 1/4 of the wavelength. The first air vent 331 less than 1/2 of the wavelength has small impact on electromagnetic wave transmission of the cavity antenna. A maximum span of an air vent is a distance between two points farthest away from each other on an inner wall of a through hole in a single first air vent 331 (a plurality of first air vents 331 may be provided on the second blocking plate 330). For example, when the first air vent 331 is a circular hole, the maximum span is an inner diameter of the hole; or when the first air vent 331 is a square hole, the maximum span is a length of a diagonal line.

The conductive spacer structure 120 may include a conductive spacer layer 122. The conductive spacer layer 122 extends along an XY plane, to divide the dielectric cavity 111 into a first sub-cavity 1121 and a second sub-cavity 1122. A second dielectric slot 1132 is provided on the conductive spacer layer 122, and the second dielectric slot 1132 is in communication with the ventilation channel 350.

The ventilation channel 350 in this implementation may completely overlap the dielectric cavity 111; or the ventilation channel 350 overlaps only the first sub-cavity 1121, and air entering the notebook computer does not flow through the second sub-cavity 1122.

In this implementation, as shown in FIG. 20, a height of the dielectric cavity 111 between the first metal housing 310 and the second metal housing 320 along the Z direction is within a range of 2 millimeters to 10 millimeters, and may be 4.6 millimeters; a height of the second sub-cavity 1122 along the Z direction is within a range of 0 (excluding 0) millimeters to 5 millimeters, and may be 1 millimeter; both a length of the first sub-cavity 1121 and a length of the second sub-cavity 1122 along an X direction may be within a range of 10 millimeters to 60 millimeters, and may be 41 millimeters; a width of the second sub-cavity 1122 along a Y direction may be within a range of 3 millimeters to 20 millimeters, and may be 5 millimeters; and a width of the first sub-cavity 1121 along the Y direction may be designed based on an internal structure of the notebook computer, and may be 8 millimeters in this implementation.

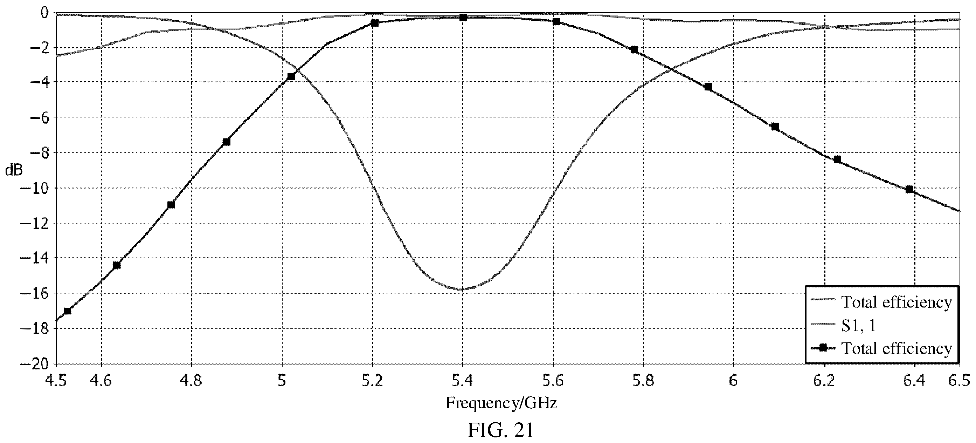

The notebook computer 300 is provided with an air intake vent. In this implementation, the air intake vent is located at a side edge of the notebook computer 300. However, in this application, the air intake vent is not limited to being located only at the side edge of the notebook computer 300, and may alternatively be located at the bottom of the notebook computer 300. In this state, the first dielectric slot 1131 may include the first ventilation gap 340 provided on the second metal housing 320, and the second blocking plate 330 is connected between the first metal housing 310 and the second metal housing 320. The second blocking plate 330 may have four side surfaces. Two side surfaces extend along an XZ plane, and two side surfaces extend along a YZ plane, to connect the first metal housing 310 and the second metal housing 320 to enclose the dielectric cavity 111. The first air vent 331 may be provided on one side plate of the second blocking plate 330, or the first air vent 331 may be provided on a plurality of side plates, to form the ventilation channel 350. As shown in FIG. 21, operating efficiency of the cavity antenna in this implementation within a frequency range of 5.2 GHz to 5.8 GHz is above -3 dB.

In a possible implementation, as shown in FIG. 10, FIG. 11, FIG. 12, and FIG. 40, this implementation provides another implementation of a cavity antenna in a notebook computer. Structures shown in FIG. 11, FIG. 12, and FIG. 40 may be diagrams of partial structures of an air intake vent, an air exhaust vent, or other positions in the notebook computer.

In an embodiment, as shown in FIG. 10, FIG. 11, and FIG. 12, a part of a conductive housing 110 in this implementation may include a part of a housing of the notebook computer, and further include an enclosing structure. The part of the housing of the notebook computer and the enclosing structure enclose a dielectric cavity of the cavity antenna. The housing may be a metal housing of the notebook computer, or a metal coating on a surface of a non-metallic housing of the notebook computer forms the conductive housing 110. As shown in FIG. 40, the notebook computer may include a first computer housing 118a, a second computer housing 118b, and an enclosing structure. The first computer housing 118a may be a case C of the notebook computer, and the second computer housing 118b may be a case D of the notebook computer. The enclosing structure may be a separate spacer plate, or may be a first embedded portion 123a of an embedded conductive housing 123 shown in FIG. 40. The first computer housing 118a, the second computer housing 118b, and the first embedded portion 123a enclose a dielectric cavity 111. There is a second ventilation gap at a joint between the first computer housing 118a and the second computer housing 118b, and the second ventilation gap may form a first dielectric slot 1131 in this implementation. When the notebook computer is placed on a desktop with a front side up, the first computer housing 118a may be located above the second computer housing 118b.

In an embodiment, at least one of the first computer housing 118a and the second computer housing 118b may be electrically connected to the embedded conductive housing 123 through conductive foam, to implement grounding of the embedded conductive housing 123.

The dielectric cavity 111 is provided between the first computer housing 118a and the second computer housing 118b, the embedded conductive housing 123 is disposed in the dielectric cavity 111, and the embedded conductive housing 123 divides the dielectric cavity 111 into a first sub-cavity 1121 and a second sub-cavity 1122. The embedded conductive housing 123 may be electrically connected to the first computer housing 118a and the second computer housing 118b directly or through coupling.

It should be noted that an electrical connection includes a direct connection and a coupling connection. The coupling connection may be a phenomenon that two or more circuit elements or electrical networks closely cooperate with and affect each other in input and output, so that energy is transmitted from one side to another side through interaction. The direct connection may be physical contact and electrical conduction between components, or may be a form in which different components in a line structure are connected through a physical line that can transmit an electrical signal, for example, a copper foil or a conducting wire of a printed circuit board (Printed Circuit Board, PCB).

A second dielectric slot 1132 is provided at the bottom of the embedded conductive housing 123, and a dielectric structure 1233 is disposed below the embedded conductive housing 123. The dielectric structure 1233 may be a circuit board or another structure. The second dielectric slot 1132 is adjacent to the dielectric structure 1233. In an embodiment, an electromagnetic wave enters the first sub-cavity 1121 through the first dielectric slot 1131, and enters the second sub-cavity 1122 through the dielectric structure 1233 and the second dielectric slot 1132. In addition, after entering the first sub-cavity 1121, the electromagnetic wave travels by a specific distance and then enters the second sub-cavity 1122. The first dielectric slot 1131 and the second dielectric slot 1132 are located on different sides, to form a bent channel in the dielectric cavity 111. After passing through the first dielectric slot 1131, the electromagnetic wave is transmitted to the other side of the first sub-cavity 1121, and then enters the second sub-cavity 1122 through the second dielectric slot 1132. A size of a propagation path of the electromagnetic wave is increased, so that a size of the cavity antenna can be effectively reduced, to implement miniaturization of the cavity antenna and enable the cavity antenna to radiate and receive electromagnetic wave signals of more frequencies in a small electronic device.

In an embodiment, a spacing distance between the first dielectric slot 1131 and the second dielectric slot 1132 is greater than a shortest distance between the first dielectric slot 1131 and a conductive spacer structure 120.

FIG. 13a is a first diagram of a structure of a bent channel of a cavity antenna. L3 is the shortest distance between the first dielectric slot 1131 and the conductive spacer structure 120, and may be a shortest distance between the conductive spacer structure 120 and an edge, close to the conductive spacer structure 120, of the first dielectric slot 1131. When the second dielectric slot 1132 is located at a position of a second dielectric slot 1132A, a spacing distance between the first dielectric slot 1131 and the second dielectric slot 1132A is approximately equal to L3. In this case, after passing through the first dielectric slot 1131, an electromagnetic wave passes through the second dielectric slot 1132 along a short travel path (refer to a dashed line with an arrow in FIG. 13a).

When the second dielectric slot 1132 is located at a position of a second dielectric slot 1132B or 1132C, a spacing distance between the first dielectric slot 1131 and the second dielectric slot 1132B is greater than L3, and a spacing distance between the first dielectric slot 1131 and the second dielectric slot 1132C is greater than L3. After passing through the first dielectric slot 1131, an electromagnetic wave travels by a specific distance, and then passes through the second dielectric slot 1132B or 1132C and enters the second sub-cavity 1122. A bent channel is formed in the dielectric cavity 111, and a length of a travel path of the electromagnetic wave is increased, so that a size of the cavity antenna can be effectively reduced, to implement miniaturization of the cavity antenna and enable the cavity antenna to radiate and receive electromagnetic wave signals of more frequencies in a small electronic device. It should be noted that FIG. 13a is intended to show different positions of the second dielectric slot 1132, and the cavity antenna 100 is not limited to including a plurality of second dielectric slots 1132. The second dielectric slot 1132 may be any one of 1132A, 1132B, and 1132C. In this implementation, the second dielectric slot 1132 may be 1132B or 1132C, to form a bent channel.

In an embodiment, as shown in FIG. 11, feeding may be performed on the intermediate conductive spacer structure 120 on which the second dielectric slot 1132 is formed. Both a feeding unit 130 and the first sub-cavity 1121 are in direct contact with the second sub-cavity 1122. Feeding is performed at an intermediate layer between the first sub-cavity 1121 and the second sub-cavity 1122, to generate double resonances, so that compatibility between two resonances of the cavity antenna on a corresponding frequency band is improved, without an efficiency notch.

In an embodiment, as shown in FIG. 13b, the conductive spacer structure 120 may be an L-shaped conductive spacer plate, or may be an embedded conductive housing, to form an embedded cavity. L3 is the shortest distance between the first dielectric slot 1131 and the conductive spacer structure 120, and may be a shortest distance between the conductive spacer structure 120 and an edge, close to the conductive spacer structure 120, of the first dielectric slot 1131. When the second dielectric slot 1132 is located at a position of a second dielectric slot 1132A, a spacing distance between the first dielectric slot 1131 and the second dielectric slot 1132A is approximately equal to L3. In this case, after passing through the first dielectric slot 1131, an electromagnetic wave passes through the second dielectric slot 1132A along a short travel path (refer to a dashed line with an arrow in FIG. 13b).

When the second dielectric slot 1132 is located at a position of a second dielectric slot 1132B, a spacing distance between the first dielectric slot 1131 and the second dielectric slot 1132B is greater than L3. After passing through the first dielectric slot 1131, an electromagnetic wave travels by a specific distance, and then passes through the second dielectric slot 1132B and enters the second sub-cavity 1122. A bent channel is formed in the dielectric cavity 111, and a length of a travel path of the electromagnetic wave is increased, so that a size of the cavity antenna can be effectively reduced, to implement miniaturization of the cavity antenna and enable the cavity antenna to radiate and receive electromagnetic wave signals of more frequencies in a small electronic device.

The second dielectric slot 1132 may alternatively be located at a position of a second dielectric slot 1132C. A spacing distance between the first dielectric slot 1131 and the second dielectric slot 1132C is greater than L3. After passing through the first dielectric slot 1131, an electromagnetic wave travels through a section of bent channel, and then passes through the second dielectric slot 1132C and enters the second sub-cavity 1122. A bent channel is formed in the dielectric cavity 111, and a length of a travel path of the electromagnetic wave is increased, so that a size of the cavity antenna can be effectively reduced, to implement miniaturization of the cavity antenna and enable the cavity antenna to radiate and receive electromagnetic wave signals of more frequencies in a small electronic device. It should be noted that FIG. 13b is intended to show different positions of the second dielectric slot 1132, and the cavity antenna 100 is not limited to including a plurality of second dielectric slots 1132. The second dielectric slot 1132 may be any one of 1132A, 1132B, and 1132C. In this implementation, the second dielectric slot 1132 may be 1132B or 1132C, to form a bent channel.

In an embodiment, in a cavity antenna structure in which a bent channel is formed, an embedded conductive housing 123 may be disposed in a cavity antenna to form a miniaturized cavity antenna. In an embodiment, in a cavity antenna structure in which a bent channel is formed, an embedded conductive housing 123 may be disposed in a cavity antenna to form a miniaturized cavity antenna, and the embedded conductive housing 123 may divide a conductive housing 110 into two sub-cavities. In an embodiment, in a cavity antenna structure in which a bent channel is formed, feeding may be performed on a conductive spacer layer 122 or an embedded conductive housing 123 that separates two sub-cavities, to generate double resonances.

In an embodiment, as shown in FIG. 11, FIG. 12, and FIG. 40, the embedded conductive housing 123 in the electronic device may be of a hollow structure, and may include a first embedded portion 123a and a second embedded portion 123b. The first embedded portion 123a and the second embedded portion 123b enclose a structure similar to a pipe. In an embodiment, ports of the embedded conductive housing 123 that are at an end of a Y direction and an end of an opposite direction of Y may be of an open structure, and a size of a through hole in the open structure needs to be significantly different from a size of a dielectric slot, to prevent interference with a target radiation frequency of the cavity antenna. In an embodiment, ports of the embedded conductive housing 123 that are at an end of a Y direction and an end of an opposite direction of Y may be of a sealed structure, and a dielectric structure may be used for structural sealing, or a metal material or the like may be used for structural sealing and electromagnetic wave sealing. The first embedded portion 123a may be a vertical spacer plate on a side, away from the first dielectric slot 1131, of the embedded conductive housing 123. The first embedded portion 123a is an enclosing structure. The first embedded portion 123a, the first computer housing 118a, and the second computer housing 118b jointly enclose the dielectric cavity 111. The second embedded portion 123b is a conductive spacer structure for dividing the dielectric cavity into the first sub-cavity 1121 and the second sub-cavity 1122. Specifically, the first embedded portion 123a is disposed between the first computer housing 118a and the second computer housing 118b, and the first embedded portion 123a, the first computer housing 118a, and the second computer housing 118b may jointly enclose the dielectric cavity 111. For example, in FIG. 11, the first embedded portion 123a may be a vertical spacer plate on a side of the embedded conductive housing 123 along an opposite direction of X. The first embedded portion 123a may be a metal plate, or may be provided with a metal surface on an inner surface facing the cavity.

The second embedded portion 123b and the first embedded portion 123a are fastened to each other or of an integrated structure. The second embedded portion 123b divides the dielectric cavity 111 into the first sub-cavity 1121 and the second sub-cavity 1122. The first sub-cavity 1121 and the second sub-cavity 1122 may have different sizes. A space between the conductive housing 110 and an outer wall surface of the second embedded portion 123b is the first sub-cavity 1121. An inner cavity enclosed by the first embedded portion 123a and the second embedded portion 123b is the second sub-cavity 1122. The first dielectric slot 1131 is provided on a part, corresponding to the first sub-cavity 1121, of the conductive housing 110.

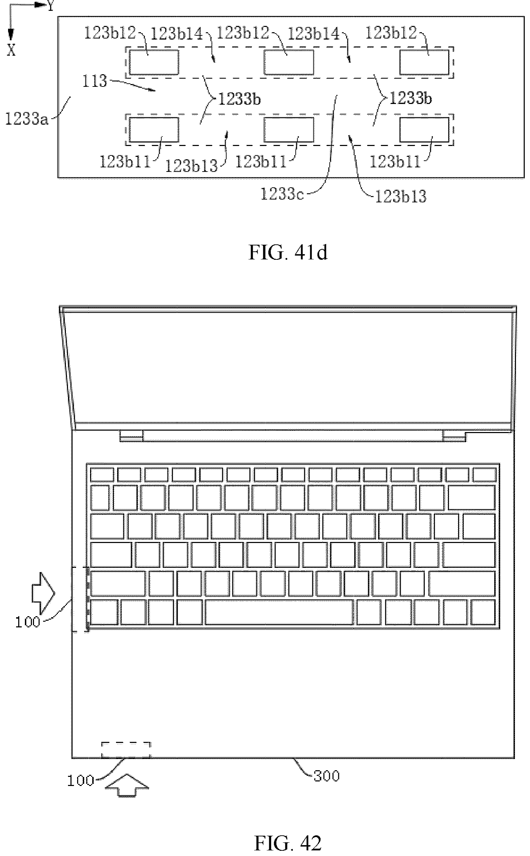

In an embodiment, as shown in FIG. 42, the cavity antenna 100 may be combined with a ventilation channel of the notebook computer, and the first dielectric slot of the cavity antenna 100 may be an air intake vent or an air exhaust vent provided on a housing of the electronic device. A direction indicated by an arrow in FIG. 42 may be an air intake vent or an air exhaust vent of the notebook computer 300. The direction of the arrow merely indicates a position of an air vent, but constitutes no limitation on air exhaust and air intake. A third air vent 1234 is provided on the embedded conductive housing 123. The third air vent 1234 is provided on both the first embedded portion 123a and a second housing plate 123b2. As shown in FIG. 40, the third air vent 1234 may include a fourth air vent 123b3 provided on the second housing plate 123b2 and a fifth air vent 123a1 provided on the first embedded portion 123a (enclosing structure). The second ventilation gap (the first dielectric slot 1131, where in this case, the first dielectric slot 1131 is not filled with another solid or liquid dielectric material), the first sub-cavity 1121, the fourth air vent 123b3, the second sub-cavity 1122, and the fifth air vent 123a1 are sequentially in communication, to implement a ventilation function and a heat dissipation function of the notebook computer. The dielectric cavity 111 may be reused as a cavity for ventilation, to improve utilization of an internal space of the electronic device.

In an embodiment, both a length of the fourth air vent 123b3 and a length of the fifth air vent 123a1 along an extension direction of the first dielectric slot 1131 are less than 1/2 of a wavelength of an electromagnetic wave. In an embodiment, a total length of at least one of the fourth air vent 123b3 and the fifth air vent 123a1 along the extension direction of the first dielectric slot 1131 is less than (70%×1/2) of a wavelength of an electromagnetic wave, for example, is less than or equal to 1/4 of the wavelength. The air vent less than 1/2 of the wavelength has small impact on electromagnetic wave transmission of the cavity antenna.

In an embodiment, as shown in FIG. 11 and FIG. 40, the second embedded portion 123b includes a first housing plate 123b1. The first housing plate 123b1 may be a bottom plate of the embedded conductive housing 123, for example, a horizontal plate on a side along an opposite direction of Z in FIG. 40. The first housing plate 123b1 may be a metal plate, or may be provided with a metal surface on an inner surface facing the cavity. The dielectric structure 1233 is disposed between the first housing plate 123b1 and the conductive housing 110, and the dielectric structure 1233 may be a circuit board or another structure. A dielectric slot 113 may be provided on the first housing plate 123b1, and the dielectric structure 1233 is configured to allow an electromagnetic wave to pass.

The electromagnetic wave may enter the first sub-cavity 1121 through the first dielectric slot 1131. The electromagnetic wave in the first sub-cavity 1121 may pass through the dielectric structure 1233, and enter the second sub-cavity 1122 through the dielectric slot 113 provided on the first housing plate 123b1. It should be noted that the dielectric slot 113 provided on the first housing plate 123b1 may be considered as the second dielectric slot 1132 corresponding to the second sub-cavity 1122 in this embodiment. In an embodiment, a gap (the gap may be filled with the dielectric structure 1233) between the first housing plate 123b1 and a bottom conductive housing 110 may alternatively be considered as the second dielectric slot 1132 corresponding to the second sub-cavity 1122, and tuning may be performed by adjusting a width of the gap, for example, tuning is performed by adjusting a thickness of the dielectric structure 1233.

In an embodiment, as shown in FIG. 40, a surface, attached to the first housing plate 123b1, of the dielectric structure 1233 is a first surface 1233a, and the first surface 1233a may be a surface on a side of the dielectric structure 1233 along a Z direction. A metal surface region 1233b is provided on the first surface 1233a, and the first housing plate 123b1 is electrically connected to the metal surface region 1233b. The dielectric slot 113 provided on the first housing plate 123b1 may pass through the entire first housing plate 123b1 along a Y direction. The dielectric slot 113 may divide the first housing plate 123b1 into two parts, and the two parts are located on two sides of the dielectric slot 113 along the X direction and the opposite direction of X. There may be two metal surface regions 1233b. The two metal surface regions 1233b may be located on two sides of the dielectric slot 113. The two parts obtained by separating the first housing plate 123b1 are respectively electrically connected to the two metal surface regions 1233b.

In an embodiment, as shown in FIG. 40, a dielectric surface region 1233c is provided on the first surface 1233a, and the dielectric surface region 1233c is adjacent to the metal surface region 1233b. There may be two metal surface regions 1233b, and the two metal surface regions 1233b may be located on two sides of the dielectric surface region 1233c along the X direction and the opposite direction of X. In an embodiment, the dielectric slot 113 on the first housing plate 123b1 and the dielectric surface region 1233c are arranged opposite to each other. An electromagnetic wave in the first sub-cavity 1121 may sequentially pass through the dielectric surface region 1233c and the dielectric slot 113 on the first housing plate 123b1, and enter the second sub-cavity 1122. An electromagnetic wave in the second sub-cavity 1122 may also sequentially pass through the dielectric slot 113 on the first housing plate 123b1 and the dielectric surface region 1233c, and enter the first sub-cavity 1121.

In an embodiment, as shown in FIG. 40, the first housing plate 123b1 may include a first housing sub-plate 123b11 and a second housing sub-plate 123b12. The first housing sub-plate 123b11 and the second housing sub-plate 123b12 are located on two sides (the two sides along the X direction and the opposite direction of X in FIG. 40) of the dielectric slot 113 on the first housing plate 123b1. The first housing sub-plate 123b11 is connected to the second housing plate 123b2, and the second housing sub-plate 123b12 is connected to the first embedded portion 123a. In an embodiment, the embedded conductive housing 123 may form a pipe structure of the first housing sub-plate 123b11, the second housing plate 123b2, a top plate (for connecting to the second computer housing 118b), the first embedded portion 123a, and the second housing sub-plate 123b12 through sequential bending of plates.

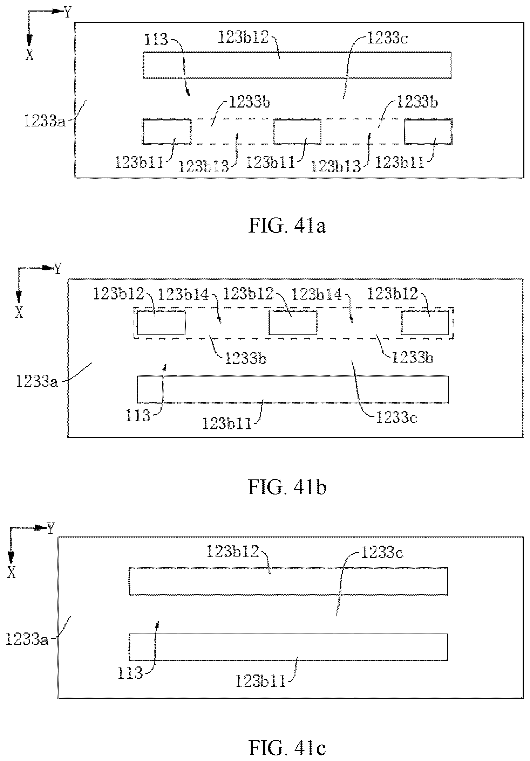

In an embodiment, refer to FIG. 40 and FIG. 41a. FIG. 41a is a first diagram of a first housing sub-plate and a second housing sub-plate according to an implementation of this application. There are at least two first housing sub-plates 123b11. The at least two first housing sub-plates 123b11 are disposed at spacings along an extension direction of the dielectric slot on the first housing plate 123b1. A third through hole 123b13 is provided between two adjacent first housing sub-plates 123b11. The third through hole 123b13 passes through the first housing plate 123b1 along a thickness direction of the first housing plate 123b1. The third through hole 123b13 is in one-to-one communication with the fourth air vent 123b3. At least a part of the metal surface is located on one side of the third through hole 123b13. The metal surface is electrically connected to the at least two first housing sub-plates 123b11.

In this embodiment, three first housing sub-plates 123b11 are used as an example. The three first housing sub-plates 123b11 are arranged at spacings along the Y direction, and the dielectric slot 113 extends along the Y direction. The third through hole 123b13 is provided between two adjacent first housing sub-plates 123b11. In this embodiment, there may be two third through holes 123b13. The three first housing sub-plates 123b11 are isolated from each other through the third through hole 123b13. The third through hole 123b13 is in communication with the fourth air vent 123b3 on the side along the Z direction. This may also be understood as that the third through hole 123b13 is a part of the fourth air vent 123b3.

The metal surface region 1233b is provided on one side of the three first housing sub-plates 123b11, and the metal surface region 1233b covers one side of the three first housing sub-plates 123b11 and the two third through holes 123b13, to implement an electrical connection between the three first housing sub-plates 123b11, and implement a closed electrical connection of the cavity antenna. This facilitates feeding.

In an embodiment, there may be at least two second housing sub-plates 123b12. The at least two second housing sub-plates 123b12 are disposed at spacings along the extension direction of the dielectric slot on the first housing plate 123b1. A fourth through hole 123b14 is provided between two adjacent second housing sub-plates 123b12. The fourth through hole 123b14 passes through the first housing plate 123b1 along the thickness direction of the first housing plate 123b1. The fourth through hole 123b14 is in one-to-one communication with the fifth air vent 123a1. At least a part of the metal surface is located on one side of the fourth through hole 123b14. The metal surface is electrically connected to the at least two second housing sub-plates 123b12.

FIG. 41b is a second diagram of a first housing sub-plate and a second housing sub-plate according to an implementation of this application. Similar to that there are at least two first housing sub-plates 123b11, in this embodiment, three second housing sub-plates 123b12 are used as an example. The three second housing sub-plates 123b12 are arranged at spacings along the Y direction, and the dielectric slot 113 extends along the Y direction. The fourth through hole 123b14 is provided between two adjacent second housing sub-plates 123b12. In this embodiment, there may be two fourth through holes 123b14. The three first housing sub-plates 123b11 are isolated from each other through the fourth through-hole 123b14. The fourth through-hole 123b14 is in communication with the fifth air vent 123a1 on the side along the Z direction. This may also be understood as that the fourth through-hole 123b14 is a part of the fifth air vent 123a1.

The metal surface region 1233b is provided on one side of the three second housing sub-plates 123b12, and the metal surface region 1233b covers one side of the three second housing sub-plates 123b12 and the two third through holes 123b13, to implement an electrical connection between the three second housing sub-plates 123b12, and implement a closed electrical connection of the cavity antenna. This facilitates feeding.

In an embodiment, as shown in FIG. 41c, there may be only one first housing sub-plate 123b11 and one second housing sub-plate 123b12, and on a side facing the first surface 1233a, both the first housing sub-plate 123b11 and the second housing sub-plate 123b12 are directly attached to the dielectric surface region 1233c. In an embodiment, on a side facing the first surface 1233a, the first housing sub-plate 123b11 and the second housing sub-plate 123b12 may alternatively be attached to the metal surface region 1233b.

In an embodiment, as shown in FIG. 41d, there may be at least two first housing sub-plates 123b11 and at least two second housing sub-plates 123b12, and a quantity of first housing sub-plates 123b11 may be the same as or different from a quantity of second housing sub-plates 123b12. On a side facing the first surface 1233a, both the first housing sub-plate 123b11 and the second housing sub-plate 123b12 may be attached to the metal surface region 1233b.

In an embodiment, there may be one first housing sub-plate 123b11, and a partial side edge, on a side close to the first sub-cavity 1121, of the first housing sub-plate 123b11 forms a partial edge of the fourth air vent 123b3. The partial side edge, on the side close to the first sub-cavity 1121, of the first housing sub-plate 123b11 is an entire side edge, on a side facing the first surface 1233a, of the fourth air vent 123b3, and the first surface 1233a no longer forms an edge of the fourth air vent 123b3.

In an embodiment, there may be one second housing sub-plate 123b12, and a partial side edge, on a side facing away from the first sub-cavity 1121, of the second housing sub-plate 123b12 forms a partial edge of the fifth air vent 123a1. The partial side edge, on the side facing away from the first sub-cavity 1121, of the second housing sub-plate 123b12 is an entire side edge, on a side facing the first surface 1233a, of the fifth air vent 123a1, and the first surface 1233a no longer forms an edge of the fifth air vent 123a1.

In an embodiment, the cavity antenna further includes a feeding unit, and the feeding unit is located in the dielectric surface region to electrically connect the first embedded portion 123a and the second housing plate 123b2, to implement feeding of the cavity antenna.

In a possible implementation, as shown in FIG. 22 and FIG. 23, this implementation provides another implementation of a cavity antenna in a notebook computer. The cavity antenna may be located at an air intake vent or an air exhaust vent of the notebook computer. FIG. 22 is a diagram of a structure of an air exhaust vent of a notebook computer according to an implementation of this application. FIG. 22 does not show a display, but shows only a main part including a keyboard. An air intake vent may be located on a side, close to the display (not shown in the figure), of the main part. FIG. 23 is a diagram of a structure of a cavity antenna at a position of an air exhaust vent of a notebook computer according to an implementation of this application.

In an embodiment, an assembly slot 370 is provided at the air intake vent or the air exhaust vent of the notebook computer 300, and the cavity antenna is mounted in the assembly slot 370. As shown in FIG. 14, FIG. 15a, FIG. 22, and FIG. 23, the cavity antenna includes a conductive housing 110, and the conductive housing 110 includes a conductive surface 115 and a conductive enclosing surface 116. The conductive enclosing surface 116 is of a groove structure, and the conductive surface 115 is provided at a groove opening of the conductive enclosing surface 116, to enclose a dielectric cavity 111. The conductive enclosing surface 116 includes at least a part of an inner wall of the assembly slot 370. The inner wall of the assembly slot 370 is made of a metal material, or a metal layer is attached to the inner wall of the assembly slot 370. Alternatively, the conductive enclosing surface 116 is a separate plate, the conductive housing 110 is entirely placed in the assembly slot 370, and the conductive enclosing surface 116 is connected to the inner wall of the assembly slot 370. For example, the conductive enclosing surface 116 may be fastened to the inner wall of the assembly slot 370 by using a screw, to fasten the conductive housing 110 in the assembly slot 370.

The conductive surface 115 includes a first antenna pattern 1141 and a second antenna pattern 1142. The first antenna pattern 1141 and the second antenna pattern 1142 are located on a same plane, and a gap 1143 is provided between the first antenna pattern 1141 and the second antenna pattern 1142, so that the first antenna pattern 1141 and the second antenna pattern 1142 are isolated from each other at the gap 1143.

A first dielectric slot 1131 is provided on the first antenna pattern 1141, and a second dielectric slot 1132 is provided on the second antenna pattern 1142. The first dielectric slot 1131 and the second dielectric slot 1132 each include a section extending along an X direction, to ensure that an electromagnetic wave can enter the dielectric cavity 111 through the first dielectric slot 1131 and the second dielectric slot 1132.

A conductive spacer structure 120 may include a gap space 1144. The gap space 1144 is a space, extending into the dielectric cavity 111, of the gap 1143. The gap space 1144 is a part of the dielectric cavity 111. In this implementation, a first dielectric space 1171 and a second dielectric space 1172 are in structural communication with each other, and the dielectric cavity 111 is divided into the first dielectric space 1171 and the second dielectric space 1172 based on regions covered by the first antenna pattern 1141 and the second antenna pattern 1142.

The first antenna pattern 1141 is provided with an extension plate 1146 on a side close to the second antenna pattern 1142, and the extension plate 1146 may be connected to the second antenna pattern 1142 or isolated from the second antenna pattern 1142.

A groove 1145 is provided on a lower side surface, located on the extension plate 1146, of the conductive housing 110. A feeding unit 130 may be disposed in the groove 1145. A side, along an opposite direction of Z, of the extension plate 1146 is bent into the groove 1145. The feeding unit 130 is electrically connected to the extension plate 1146 in the groove 1145, so that the feeding unit 130 can perform feeding at a position of the extension plate 1146. The extension plate 1146 is a part of the first antenna pattern 1141, and the feeding unit 130 is directly electrically connected to the first antenna pattern 1141 for direct feeding. There is a gap between the extension plate 1146 and the second antenna pattern 1142, and the gap may be a part of the second dielectric slot 1132. The feeding unit 130 may feed the second antenna pattern 1142 through coupling.

The extension plate 1146 may alternatively be an extension plate of the second antenna pattern 1142 toward the first antenna pattern 1141. The extension plate 1146 is directly connected to the second antenna pattern 1142, and there is a gap between the extension plate 1146 and the first antenna pattern 1141. Alternatively, the extension plate 1146 is connected to the first antenna pattern 1141, and the extension plate 1146 may also be connected to the second antenna pattern 1142.

As shown in FIG. 14, the conductive surface 115 and the conductive enclosing surface 116 are not sealed, and a through hole for communication is formed on the conductive housing 110. The first dielectric slot 1131 and the second dielectric slot 1132 may be a part of the through hole. A shape and a size of a part of the through hole other than the first dielectric slot 1131 and the second dielectric slot 1132 are different from shapes and sizes of the first dielectric slot 1131 and the second dielectric slot 1132, to distinguish the first dielectric slot 1131 and the second dielectric slot 1132 from another region of the through hole.

Specifically, as shown in FIG. 15a, the slot structure shown in this implementation is also a slot between two conductive points. To be specific, two ends of the slot structure need to be connected to conductors. The first dielectric slot 1131 may extend along a path indicated by a dashed line on the left in FIG. 15a. The first dielectric slot 1131 includes a section extending along the X direction and sections extending along the Z direction on two sides, and top ends of the sections extending along the Z direction are connected to the conductive enclosing surface 116. The second dielectric slot 1132 extends along a path indicated by a dashed line on the right in FIG. 15a. The second dielectric slot 1132 includes a section extending along the X direction and sections extending along the Z direction on two sides, and top ends of the sections extending along the Z direction are connected to the conductive enclosing surface 116.

In this implementation, the conductive spacer structure 120 may be the gap space 1144, extending into the dielectric cavity 111, of the gap 1143, or may be a conductive spacer layer 122. The conductive spacer layer 122 extends along a YZ plane, and divides the dielectric cavity 111 into the first dielectric space 1171 and the second dielectric space 1172.

In the cavity antenna in this implementation, the conductive housing 110 may be filled with a filler 141, to fasten the conductive surface 115 and the conductive enclosing surface 116, improve structural strength of the conductive housing 110, and prevent the conductive surface 115 and the conductive enclosing surface 116 from being deformed. Specifically, the filler 141 may be made of a non-conductor or an insulator with a dielectric constant of 3 and a dielectric loss of 0.003, for example, plastic or epoxy resin. In this way, while supporting the conductive spacer layer 122, the filler 141 can further transmit an electromagnetic wave, to ensure that the electromagnetic wave can be reflected in the cavity antenna 100.

The cavity antenna in this implementation is disposed at the air intake vent or the air exhaust vent of the notebook computer. The conductive surface 115 is provided at the air exhaust vent, and the first dielectric slot 1131 is provided on the conductive surface 115.

As shown in FIG. 22 and FIG. 23, a second air vent 360 is further provided on the cavity antenna. In this implementation, along the X direction, the second air vent 360 passes through the filler 141, passes through a part of the first antenna pattern 1141, and passes through a side wall of the conductive enclosing surface 116 on a side along an opposite direction of X, to form a through hole that passes through the cavity antenna along the X direction. An air vent in communication with the second air vent 360 is provided on the inner wall of the assembly slot 370, so that air can pass through the cavity antenna and the inner wall of the assembly slot 370 to form circulating air, to dissipate heat for an electronic component that generates heat in the notebook computer 300.

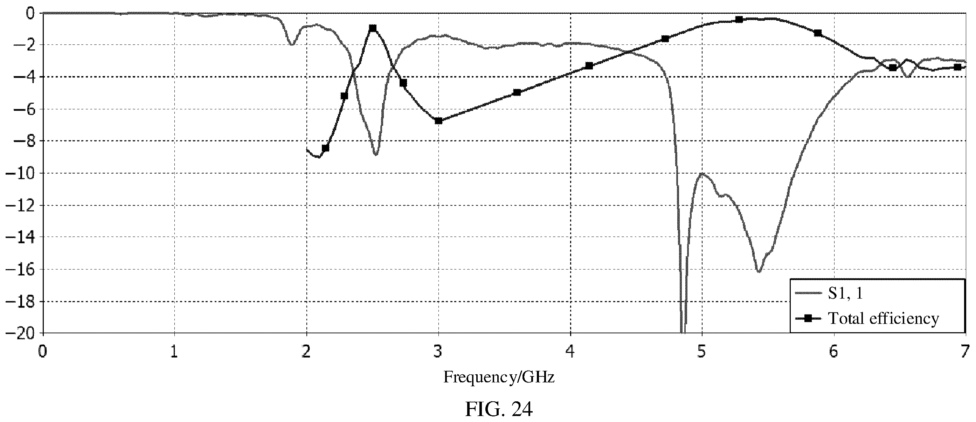

In the notebook computer in this implementation, the cavity antenna is combined with a ventilation structure, and a ventilation channel overlaps the dielectric cavity 111. This simplifies an internal structure of the notebook computer, optimizes a structural design of the notebook computer, and implements multi-functional utilization of a single channel. As shown in FIG. 24, operating efficiency of the cavity antenna in this implementation within both a frequency range of 2.4 GHz to 2.5 GHz and a frequency range of 5.2 GHz to 5.8 GHz is above -3 dB.

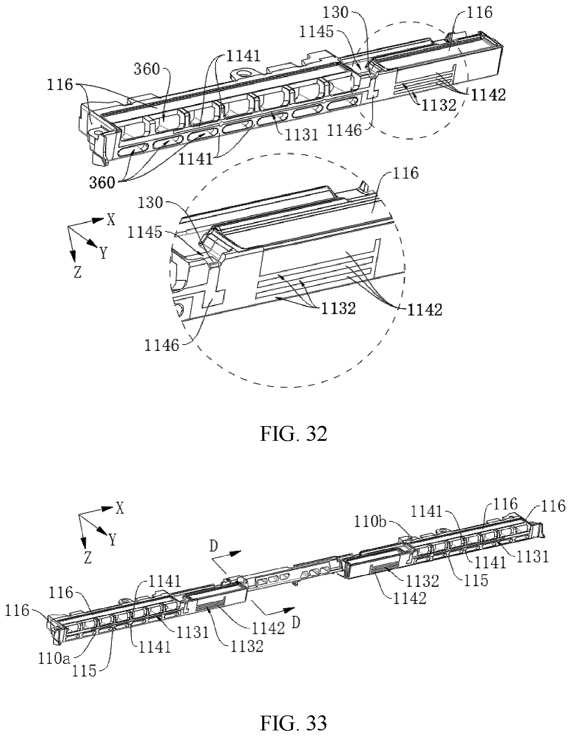

In some possible implementations, as shown in FIG. 32, the cavity antenna may include two rows of second air vents 360, a connection region is provided between the two rows of second air vents 360, and a first dielectric slot 1131 may be provided in the connection region between an upper row of second air vents 360 and a lower row of second air vents 360. A part of the first antenna pattern 1141 may be located around the upper row of second air vents 360, and the other part is located around the lower row of second air vents 360. The first dielectric slot 1131 is formed between the upper part of the first antenna pattern 1141 and the lower part of the first antenna pattern 1141. A length and a width of the first dielectric slot 1131 and a size of a cavity corresponding to the first dielectric slot 1131 are designed, to enable the first dielectric slot 1131 to radiate an electromagnetic wave of a frequency of approximately 2.4 GHz.

The first antenna pattern 1141 and the second antenna pattern 1142 are located on a same plane, and a gap 1143 is provided between the first antenna pattern 1141 and the second antenna pattern 1142, so that the first antenna pattern 1141 and the second antenna pattern 1142 are isolated from each other at the gap 1143. The first antenna pattern 1141 is provided with an extension plate 1146 on a side close to the second antenna pattern 1142, and the extension plate 1146 may be connected to the second antenna pattern 1142 or isolated from the second antenna pattern 1142.

A second dielectric slot 1132 is provided on the second antenna pattern 1142, and the second dielectric slot 1132 may be located on one side of the second antenna pattern 1142. A side edge of the second dielectric slot 1132 on a side along a width direction (a Z direction in FIG. 32) is a side edge on a side of the second antenna pattern 1142, and the other side is a side edge of the conductive enclosing surface 116 on a side along the Z direction.

The first dielectric slot 1131 and the second dielectric slot 1132 each include a section extending along an X direction, to ensure that an electromagnetic wave can enter the dielectric cavity 111 through the first dielectric slot 1131 and the second dielectric slot 1132.

In an embodiment, a groove 1145 is provided on an upper side surface, located on the extension plate 1146, of the conductive housing 110. A feeding unit 130 may be disposed in the groove 1145. A side, along an opposite direction of Z, of the extension plate 1146 is bent into the groove 1145. The feeding unit 130 is electrically connected to the extension plate 1146 in the groove 1145, so that the feeding unit 130 can perform feeding at a position of the extension plate 1146. The extension plate 1146 is a part of the first antenna pattern 1141, and the feeding unit 130 is directly electrically connected to the first antenna pattern 1141 for direct feeding. There is a gap between the extension plate 1146 and the second antenna pattern 1142, and the gap may be a part of the second dielectric slot 1132. The feeding unit 130 may feed the second antenna pattern 1142 through coupling. The feeding unit 130 is electrically connected to the first antenna pattern 1141 and the second antenna pattern 1142, and the electrical connection includes a direct electrical connection, a coupling electrical connection, and the like.

In an embodiment, there may be one or at least two second dielectric slots 1132. As shown in FIG. 32, there may be three second dielectric slots 1132. Edges of the three dielectric slots 1132 are connected in series through the second antenna pattern 1142. Specifically, in this embodiment, there may be three second antenna patterns 1142. An uppermost second antenna pattern 1142 has a largest area. A second antenna pattern 1142 in the middle is located at a lower end of the uppermost second antenna pattern 1142, and there is a gap between the two second antenna patterns 1142. The gap forms a second dielectric slot 1132. A lowermost second antenna pattern 1142 is located at a lower end of the second antenna pattern 1142 in the middle, and there is a gap between the two second antenna patterns 1142. The gap forms another second dielectric slot 1132. A third second dielectric slot 1132 is formed between the lowermost second antenna pattern 1142 and the conductive enclosing surface 116 at the bottom. A plurality of dielectric slots are provided, and a specific quantity of suspended stubs are added, to reduce a directivity coefficient of the cavity antenna to radiate an electromagnetic wave, and improve product performance.

In an embodiment, length dimensions and width dimensions of the three second dielectric slots 1132 are set, to enable the three second dielectric slots to radiate electromagnetic waves of a same frequency, for example, radiate electromagnetic waves of a frequency of 5.2 GHz. It should be noted that, in an actual design, radiated electromagnetic waves are on one frequency band, for example, within a range of 4.8 GHz to 5.6 GHz, and are electromagnetic waves of a same frequency. This is different from electromagnetic waves of two different frequencies: 2.4 GHz and 5.2 GHz.

As shown in FIG. 32 and FIG. 14, the conductive surface 115 and the conductive enclosing surface 116 are not sealed, and a through hole for communication is formed on the conductive housing 110. The first dielectric slot 1131 and the second dielectric slot 1132 may be a part of the through hole. A shape and a size of a part of the through hole other than the first dielectric slot 1131 and the second dielectric slot 1132 are different from shapes and sizes of the first dielectric slot 1131 and the second dielectric slot 1132, to distinguish the first dielectric slot 1131 and the second dielectric slot 1132 from another region of the through hole.

The dielectric slot structure shown in this implementation is also a slot between two conductive points. To be specific, two ends of the slot structure need to be connected to conductors. The first dielectric slot 1131 may extend along a path indicated by a dashed line on the left in FIG. 15a. The first dielectric slot 1131 includes a section extending along the X direction and sections extending along the Z direction on two sides, and top ends of the sections extending along the Z direction are connected to the conductive enclosing surface 116. The second dielectric slot 1132 extends along a path indicated by a dashed line on the right in FIG. 15a. The second dielectric slot 1132 includes a section extending along the X direction and sections extending along the Z direction on two sides, and top ends of the sections extending along the Z direction are connected to the conductive enclosing surface 116.

The cavity antenna in this implementation is disposed at the air intake vent or the air exhaust vent of the notebook computer. The conductive surface 115 is provided at the air exhaust vent, and the first dielectric slot 1131 is provided on the conductive surface 115.

In an embodiment, as shown in FIG. 32, there are at least two conductive housings, including at least a first conductive housing 110a and a second conductive housing 110b. The first conductive housing 110a and the second conductive housing 110b may be connected to each other through a connection frame 110c to form an integrated structure. The first conductive housing 110a and the second conductive housing 110b each include a conductive enclosing surface 116 and a conductive surface 115. A dielectric slot is provided on the conductive surface 115. The dielectric slot may include a first dielectric slot 1131 and a second dielectric slot 1132. The first conductive housing 110a and the second conductive housing 110b each are provided with a second air vent 360. For structures of conductive patterns, dielectric slot, second air vents 360, and the like that are provided on the first conductive housing 110a and the second conductive housing 110b, refer to the foregoing embodiments. In an embodiment, a dielectric slot on the first conductive housing 110a and a dielectric slot on the second conductive housing 110b are of a symmetric structure, and specifically, may be of a symmetric structure along a YZ plane. In an embodiment, two independent cavity antennas may be formed by two symmetrically disposed conductive housings, to improve communication efficiency of an electronic device corresponding to the cavity antennas.

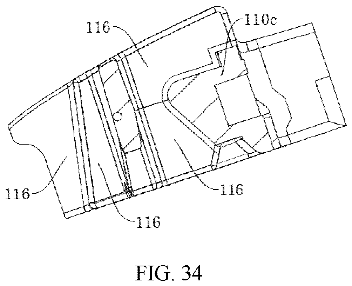

In an embodiment, the conductive enclosing surface 116 may be provided at an end of the first conductive housing 110a along an X direction. The end of the first conductive housing 110a along the X direction is connected to the connection frame 110c, and the connection frame 110c may be made of a plastic material or the like. Therefore, a part connected to the connection frame 110c may not be provided with a conductive structure. FIG. 34 is a schematic sectional view at D-D in FIG. 33. As shown in FIG. 34, only a part of a surface of the first conductive housing 110a along the X direction is a conductive surface, the conductive surface may form a conductive enclosing surface 116 of the side surface, and the other part is a part connected to the connection frame 110c. The part connected to the connection frame 110c may alternatively be considered as a part of a dielectric slot of the cavity antenna. To be specific, the part, connected to the connection frame 110c, of the first conductive housing 110a may also radiate an electromagnetic wave. A size (for example, a height and a width) and other parameters of this part of slot are set, to enable this part of slot to radiate an electromagnetic wave of a frequency different from frequencies of electromagnetic waves radiated by the first dielectric slot and the second dielectric slot, to prevent interference between electromagnetic waves radiated by the cavity antenna.

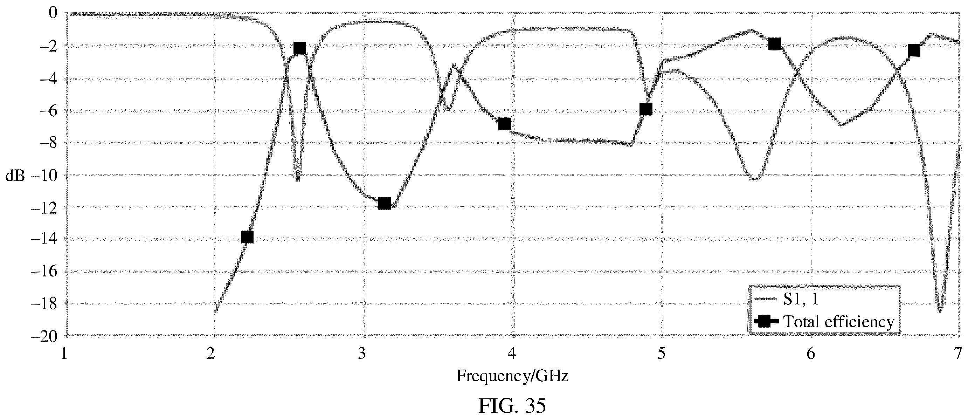

In an embodiment, as shown in FIG. 35, operating efficiency of the cavity antenna in this implementation within both a frequency range of 2.4 GHz to 2.5 GHz and a frequency range of 5.2 GHz to 5.8 GHz is above -3 dB.

In a possible implementation, based on the foregoing cavity antenna structure, this implementation proposes application of a cavity antenna in a notebook computer.

As shown in FIG. 36, the notebook computer includes a display 210 (a function is similar to a function of a display of a terminal like a mobile phone, but a structure may be different) and a body 240. The display 210 and the body 240 may be opened and closed along a direction of an arrow in FIG. 36.

FIG. 37 is a diagram of a cavity antenna and a hinge cover in a notebook computer that are disposed opposite to each other according to an implementation of this application. The display 210 is connected to the body 240 through a hinge (not shown in FIG. 37). The hinge cover 211 is disposed on the display 210, and the hinge is disposed in the hinge cover 211.

The cavity antenna is disposed in the body 240, and specifically, may be the cavity antenna with a dielectric slot in any one of the foregoing implementations. As shown in FIG. 37 and FIG. 38, the cavity antenna structure shown in FIG. 32 or FIG. 33 is used as an example in this embodiment. The cavity antenna 100 may be disposed on a rear side of the body 240. A second air vent 360 of the cavity antenna 100 may form an air exhaust vent or an air intake vent on the rear side of the body 240. A conductive surface 115 of the cavity antenna is arranged opposite to the hinge cover 211.

In an embodiment, as shown in FIG. 36 and FIG. 37, the hinge cover 211 has an edge structure 211a, and an edge of the edge structure 211a extends along an axial direction of the hinge, in other words, extends along a lateral direction of the notebook computer.

A sharp corner of the edge structure 211a faces a side of the cavity antenna 100. A projection of a position at a shortest distance between the edge structure 211a and the cavity antenna 100 is flush with a projection line 211b in FIG. 36, and a height of the projection is the same as a height of the projection line 211b. As shown in FIG. 37, the projection line 211b in FIG. 37 is a position at which the sharp corner of the edge structure 211a is projected onto the cavity antenna 100 along a direction with a shortest distance from the cavity antenna 100. At least one dielectric slot is provided on the conductive surface 115 of the cavity antenna 100. A distance, along a width direction of the at least one dielectric slot on the conductive surface, between the dielectric slot and the projection of the position at the shortest distance between the edge structure and the cavity antenna is less than 20% of a total length of the dielectric slot and an adjacent antenna image along the width direction.

For example, for a first dielectric slot 1131 shown in FIG. 37, a distance between the first dielectric slot 1131 and the projection line 211b is L4. The projection line 211b in FIG. 37 passes through the first dielectric slot 1131. Therefore, the distance L4 is 0. A total width of the first dielectric slot 1131 and a first antenna pattern 1141 is L5. L4 needs to be less than 20% of L5.

As shown in FIG. 38, the first dielectric slot 1131 may be entirely located below the projection line 211b, and the length L4 is 20% of the length L5. In an embodiment, the first dielectric slot 1131 may be located above a position shown in FIG. 38. In an embodiment, when the first dielectric slot 1131 may be entirely located above the projection line 211b, the distance L4 between the first dielectric slot 1131 and the projection line 211b is less than 20% of L5.

In the notebook computer in this implementation, a relative positional relationship between the first dielectric slot 1131 and the projection of the edge structure 211a on the cavity antenna is set, to enable an electromagnetic wave radiated by the cavity antenna 100 to be radiated to an upper side and a lower side relative to the edge structure 211a, as indicated by directions of arrows shown in FIG. 37, to increase a radiation range of the cavity antenna and increase a quantity of radiation directions.

In an embodiment, as shown in FIG. 38, there may be at least two second dielectric slots 1132. For example, three second dielectric slots 1132 are shown in FIG. 38. A distance between at least one of the three second dielectric slots 1132 and the projection line 211b is less than 20% of a total width of the three second dielectric slots 1132 and a second antenna pattern 1142. A distance between an uppermost second dielectric slot 1132 and the projection line 211b in FIG. 38 is less than 20% of the total width of the three second dielectric slots 1132 and the second antenna pattern 1142, so that an electromagnetic wave radiated by the uppermost second dielectric slot 1132 can be radiated outward on the upper side and the lower side of the edge structure 211a.

In an embodiment, the first dielectric slot 1131 may overlap the projection line 211b, and the projection line 211b passes through the first dielectric slot 1131. In an embodiment, as shown in FIG. 39, the first dielectric slot 1131 may be located below the projection line 211b, and "below" may indicate a bottom direction of the notebook computer when the notebook computer is placed on a desktop. In addition, a distance between the first dielectric slot 1131 and the projection line 211b is less than 20% of a total length of the dielectric slot and an adjacent antenna image along a width direction, so that an electromagnetic wave radiated by the first dielectric slot 1131 can be radiated outward on the upper side and the lower side of the edge structure 211a.

In an embodiment, as shown in FIG. 39, the uppermost second dielectric slot 1132 among the three second dielectric slots 1132 may be located below the projection line 211b, and "below" may indicate a bottom direction of the notebook computer when the notebook computer is placed on a desktop. In addition, a distance between the uppermost second dielectric slot 1132 and the projection line 211b is less than 20% of a total length of the uppermost second dielectric slot 1132 and the second antenna pattern 1142 along a width direction, so that an electromagnetic wave radiated by the second dielectric slot 1132 can be radiated outward on the upper side and the lower side of the edge structure 211a.

In a possible implementation, based on the foregoing cavity antenna structure, this implementation proposes application of a cavity antenna in a terminal. The terminal may be an electronic device with a circuit board. This implementation provides a specific implementation of constructing a cavity antenna on the circuit board.

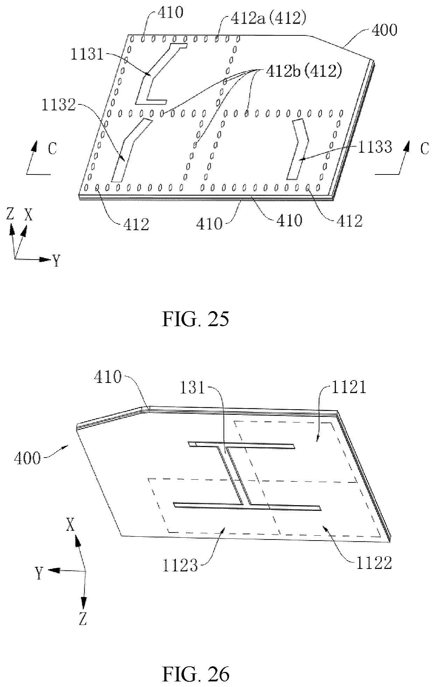

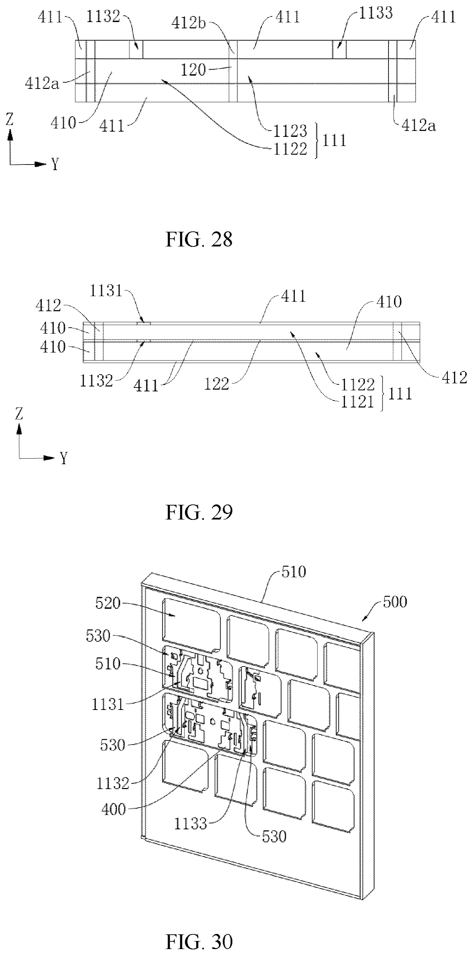

FIG. 25 is a diagram of a structure of a partial region of a circuit board according to an implementation of this application. FIG. 26 is a diagram of a structure of another side surface of a circuit board according to an implementation of this application. FIG. 28 is a schematic sectional view at C-C in FIG. 25 according to this application.

The circuit board in this implementation is a multilayer circuit board 400 including at least two layers of second plates 410. A metal via 412 is provided between the two layers of second plates 410. A first metal via 412a vertically passes through the two layers of second plates 410 to enclose a cavity. A dielectric cavity 111 includes the cavity. Metal layers are provided on inner surfaces (on a side close to the cavity) of the two layers of second plates 410, and the metal layers may be shielding masks between layers of the circuit board. A conductive housing 110 includes the two layers of second plates 410 and the first metal via 412a, and the dielectric cavity 111 includes an enclosed cavity. At least one of the two layers of second plates 410 is provided with a first dielectric slot 1131, so that an electromagnetic wave can enter the dielectric cavity 111 through the first dielectric slot 1131.

This implementation further includes a second metal via 412b, and the second metal via 412b divides the dielectric cavity 111 into three sub-cavities. As shown in FIG. 28, the second metal via 412b forms a conductive spacer structure in this implementation, to divide the dielectric cavity 111 into a first sub-cavity 1121 (not shown in FIG. 28), a second sub-cavity 1122, and a third sub-cavity 1123. The first metal via 412a and the second metal via 412b are of a same structure, and are provided at different positions, so that the first metal via 412a is used to form the conductive housing 110, and the second metal via 412b is used to form a conductive spacer structure 120. Uniform reference numerals are used in embodiments of this application and the accompanying drawings. The first sub-cavity 1121 (not shown in FIG. 28), the second sub-cavity 1122, and the third sub-cavity 1123 are located at a same layer, and different sub-cavities are formed by using a part of the metal via 412. In addition, different sub-cavities have different cavity sizes, for example, different lengths along an opposite direction of X and/or different widths along an opposite direction of Y, so that different sub-cavities correspond to electromagnetic wave signals of different frequencies. There may be two partial metal vias 412 between two adjacent sub-cavities. Metal vias 412 at peripheries of different sub-cavities do not overlap each other. The conductive spacer structure 120 includes a part of the second metal via 412b, to divide the dielectric cavity 111 into at least two sub-cavities. Alternatively, two adjacent sub-cavities may share a part of the second metal via 412b, and the part of the second metal via 412b forms the conductive spacer structure 120 in this implementation, to divide the dielectric cavity 111 into at least two sub-cavities.

In an embodiment, the conductive spacer structure 120 may include a metal plate vertically disposed between the two layers of second plates 410, or a metal cylinder may be provided between the second plates 410 through a via process to form the metal via 412, and further form the conductive spacer structure 120. When the metal via 412 is a metal cylinder, a spacing between cylinders should be far less than 1/2 of a wavelength of an electromagnetic wave, for example, may be less than 1/4 of the wavelength, to prevent interference between electromagnetic waves.

As shown in FIG. 25, FIG. 26, and FIG. 28, in this implementation, a dielectric cavity 111 is formed between two adjacent layers of second plates 410, and no conductive spacer structure 120 is disposed in the dielectric cavity 111 to further divide the cavity. In this implementation, a first dielectric slot 1131 is provided on a second plate 410 corresponding to a first sub-cavity 1121, a second dielectric slot 1132 is provided on a second plate 410 corresponding to a second sub-cavity 1122, and a third dielectric slot 1133 is provided on a second plate 410 corresponding to a third sub-cavity 1123. Each sub-cavity corresponds to a slot structure, so that an electromagnetic wave enters a corresponding sub-cavity through the slot structure. The first dielectric slot 1131, the second dielectric slot 1132, and the third dielectric slot 1133 respectively include sections that are parallel to each other, so that the first sub-cavity 1121, the second sub-cavity 1122, and the third sub-cavity 1123 radiate electromagnetic wave signals along a same direction.

As shown in FIG. 26, a feeder 131 is disposed on an outer surface on a side of the second plate 410 of the circuit board 400 along a Z direction (an outer surface on another side on which a slot structure is disposed). The feeder 131 in this implementation may be in a bent shape, to connect to the first sub-cavity 1121, the second sub-cavity 1122, and the third sub-cavity 1123 across the sub-cavities. The feeder 131 passes through the second plate 410 and is electrically connected to an inner surface of the dielectric cavity in the dielectric cavity. The feeder 131 is electrically connected to an inner surface of the first sub-cavity 1121, an inner surface of the second sub-cavity 1122, and an inner surface of the third sub-cavity 1123, to implement feeding of the three sub-cavities. In an embodiment, the feeder 131 may be in an I shape.

In the circuit board in this implementation, an inter-layer structure of the circuit board is used to form an antenna cavity, and the antenna cavity may be divided into a plurality of sub-cavities through a via process. Different sub-cavities have different cavity sizes, and frequencies of electromagnetic waves in different sub-cavities are different, to enable a same cavity antenna to radiate and receive electromagnetic waves on different frequency bands. For example, an antenna width may be designed, to enable the cavity antenna to radiate and receive both an electromagnetic wave on a 2.4G frequency band and an electromagnetic wave on a 5G frequency band, so that the antenna has higher bandwidth and better performance.

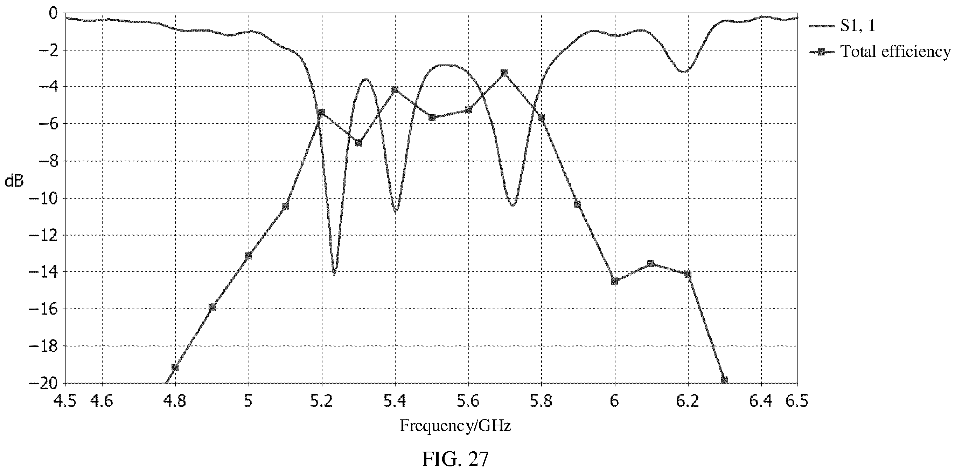

It should be noted that this embodiment merely shows an example in which the metal via 412 is formed through the via process and the metal via 412 divides the dielectric cavity 111 into a plurality of sub-cavities at a same layer. FIG. 29 is a diagram of an internal structure of a circuit board according to an implementation of this application. In the circuit board in this implementation, three metal layers 411 are provided on two layers of second plates 410, a dielectric cavity 111 is formed between two outer metal layers 411, and a conductive spacer structure 120 includes a metal layer 411 in the middle. In addition, a first dielectric slot 1131 is formed at an uppermost metal layer 411, and a second dielectric slot 1132 is formed on at the metal layer 411 in the middle, to form a dual-cavity structure including a first sub-cavity 1121 and a second sub-cavity 1122. As shown in FIG. 27, operating efficiency of the cavity antenna in this implementation on a 5G signal frequency band of 5.2 GHz to 5.8 GHz is mostly above -6 dB.

In a possible implementation, based on the foregoing cavity antenna structure, this implementation proposes application of a cavity antenna in a terminal. The terminal may be an electronic device with a circuit board, and the electronic device includes a keyboard. The circuit board in the foregoing implementation may be used in any electronic device with the circuit board.

FIG. 30 is a diagram of a partial structure of a keyboard 500. In this implementation, the keyboard 500 is used as an example to show a structure of the circuit board 400 in an electronic device. The circuit board 400 may be disposed in a peripheral housing 510 of the keyboard 500, and the peripheral housing 510 protects the circuit board 400. In this implementation, a plurality of keycap mounting holes 520 are provided on the peripheral housing 510 of the keyboard 500 for mounting keycaps (not shown in the figure). A keycap may partially pass through the keycap mounting hole 520 and be mounted to the circuit board 400. A second through hole 530 is provided on the peripheral housing 510. The second through hole 530 in this implementation is a part of the keycap mounting hole 520. A second through hole 530 outside the keyboard may pass through the second through hole 530 to enter a first dielectric slot 1131, a second dielectric slot 1132, and a third dielectric slot 1133, and pass through the dielectric slot to enter the dielectric cavity 111.

The foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions in embodiments of this application. These modifications and replacements shall fall within the protection scope of this application.

## Claims

1. A cavity antenna, comprising a conductive housing, wherein the conductive housing comprises a conductive surface and a conductive enclosing surface, the conductive surface and the conductive enclosing surface jointly enclose a plurality of dielectric spaces, a plurality of dielectric slots are provided on the conductive surface, and each dielectric space corresponds to at least one of the plurality of dielectric slots; and
an antenna pattern is provided on the conductive surface, the antenna pattern comprises a first antenna pattern and a second antenna pattern, the plurality of dielectric spaces comprise a first dielectric space and a second dielectric space, the first antenna pattern and the conductive enclosing surface enclose the first dielectric space, the second antenna pattern and the conductive enclosing surface enclose the second dielectric space, a first dielectric slot is provided on the first antenna pattern, and a second dielectric slot is provided on the second antenna pattern.

2. The cavity antenna according to claim 1, wherein at least a part of at least two of the plurality of dielectric slots are parallel to each other.

3. The cavity antenna according to claim 1 or 2, wherein the cavity antenna further comprises a feeding unit, and the feeding unit is configured to feed the first antenna pattern and the second antenna pattern.

4. The cavity antenna according to claim 3, wherein the feeding unit feeds the first antenna pattern through contact or coupling, and/or the feeding unit feeds the second antenna pattern through contact or coupling.

5. The cavity antenna according to any one of claims 1 to 4, wherein at least a part of adjacent antenna patterns are directly connected to each other, and/or there is a gap between at least a part of adjacent antenna patterns.

6. The cavity antenna according to any one of claims 1 to 5, wherein at least one of the first dielectric space and the second dielectric space corresponds to at least two dielectric slots, and the at least two dielectric slots are arranged at spacings along a width direction.

7. The cavity antenna according to any one of claims 1 to 6, wherein dielectric slots corresponding to at least two dielectric spaces are arranged in a staggered manner along a width direction of one of the dielectric slots.

8. The cavity antenna according to any one of claims 1 to 7, wherein the conductive housing comprises at least a first conductive housing and a second conductive housing, and a dielectric slot on the first conductive housing and a dielectric slot on the second conductive housing are of a symmetric structure.

9. The cavity antenna according to any one of claims 1 to 8, wherein at least a part of the plurality of dielectric slots have different lengths.

10. The cavity antenna according to any one of claims 1 to 9, wherein among the plurality of dielectric spaces, at least a part of adjacent dielectric spaces are in communication with each other, and/or there is a conductive spacer structure between at least a part of adjacent dielectric spaces.

11. The cavity antenna according to any one of claims 1 to 10, wherein the cavity antenna further comprises the feeding unit, the feeding unit extends to a conductive surface corresponding to at least one dielectric space, and the feeding unit is configured to feed the conductive surface.

12. A notebook computer, comprising a display and a body, wherein the display is rotatably connected to the body, and the cavity antenna according to any one of claims 1 to 11 is disposed in the body.

13. The notebook computer according to claim 12, wherein the body and the display are rotatably connected through a hinge, the body has a hinge cover, the hinge is disposed in the hinge cover, and a conductive surface of the cavity antenna is arranged opposite to the hinge cover.

14. The notebook computer according to claim 13, wherein the hinge cover has an outer surface opposite to the cavity antenna, and a distance, along a width direction of at least one dielectric slot on the conductive surface, between the dielectric slot and a projection region, on the conductive surface along a shortest distance direction, of a position that is on the outer surface and that is closest to the conductive surface, is less than 1/15 of a wavelength of an electromagnetic wave radiated by the dielectric slot.

15. The notebook computer according to claim 14, wherein the outer surface has an edge structure, an edge of the edge structure extends along an axial direction of the hinge, and the edge is the position that is on the outer surface and that is closest to the conductive surface.

16. The notebook computer according to any one of claims 13 to 15, wherein a radio frequency chip is disposed in the notebook computer, a feeding unit is disposed on the cavity antenna, and the feeding unit is electrically connected to the radio frequency chip and a conductive surface of the cavity antenna.

17. A cavity antenna, comprising a conductive housing and a conductive spacer structure, wherein a dielectric cavity is provided in the conductive housing, a first dielectric slot is provided on the conductive housing, the conductive spacer structure divides the dielectric cavity into a first sub-cavity and a second sub-cavity, a second dielectric slot is provided on the conductive spacer structure, an extension direction of at least a part of the first dielectric slot is parallel to an extension direction of at least a part of the second dielectric slot, and the first sub-cavity and the second sub-cavity have different sizes.

18. The cavity antenna according to claim 17, wherein a first direction is an extension direction of the part of the first dielectric slot and the part of the second dielectric slot that are parallel to each other, and the first sub-cavity and the second sub-cavity have different sizes along a direction perpendicular to the first direction.

19. The cavity antenna according to claim 18, wherein the cavity antenna comprises an adjustment member, a side surface, located in the dielectric cavity, of the adjustment member is a metal surface, the adjustment member is located in the first sub-cavity or the second sub-cavity, and the side surface of the adjustment member is coupled to the conductive housing and the conductive spacer structure.

20. The cavity antenna according to any one of claims 17 to 19, wherein the cavity antenna further comprises a feeding unit, a first through hole is provided on the conductive spacer structure, the first through hole is in communication with the first sub-cavity and the second sub-cavity, and the feeding unit is coupled to the conductive spacer structure at two side edges of the first through hole.

21. The cavity antenna according to any one of claims 17 to 20, wherein the first dielectric slot is configured to radiate an electromagnetic wave in the first sub-cavity and an electromagnetic wave in the second sub-cavity; and
the second dielectric slot is configured to radiate the electromagnetic wave in the second sub-cavity.

22. The cavity antenna according to any one of claims 17 to 21, wherein the first sub-cavity is configured to generate a first resonance, a frequency of the first resonance is related to a size of the first sub-cavity, the second sub-cavity is configured to generate a second resonance, and a frequency of the second resonance is related to a size of the second sub-cavity.

23. The cavity antenna according to any one of claims 17 to 20, wherein the cavity antenna comprises an embedded conductive housing, the embedded conductive housing comprises a first embedded portion and a second embedded portion, the first embedded portion and a part of the conductive housing jointly enclose the dielectric cavity, the second embedded portion is the conductive spacer structure for dividing the dielectric cavity into the first sub-cavity and the second sub-cavity, a space between the conductive housing and an outer wall surface of the second embedded portion is the first sub-cavity, and an inner cavity enclosed by the first embedded portion and the second embedded portion is the second sub-cavity.

24. The cavity antenna according to claim 23, wherein the second embedded portion comprises a first housing plate, a dielectric structure is disposed between the first housing plate and the conductive housing, a dielectric slot is provided on the first housing plate, and the dielectric structure is configured to allow an electromagnetic wave to pass.

25. The cavity antenna according to claim 24, wherein a surface, attached to the first housing plate, of the dielectric structure is a first surface, a metal surface region is provided on the first surface, and the first housing plate is electrically connected to the metal surface region.

26. The cavity antenna according to claim 25, wherein a dielectric surface region is provided on the first surface, the dielectric surface region is adjacent to the metal surface region, and a dielectric slot on the first housing plate is arranged opposite to the dielectric surface region.

27. The cavity antenna according to any one of claims 23 to 26, wherein the first sub-cavity and the second sub-cavity are configured to generate a first resonance, and a frequency of the first resonance is related to both a size of the first sub-cavity and a size of the second sub-cavity.

28. The cavity antenna according to any one of claims 17 to 27, wherein a spacing distance between the first dielectric slot and the second dielectric slot is greater than a shortest distance between the first dielectric slot and the conductive spacer structure, and the first dielectric slot, the first sub-cavity, the second dielectric slot, and the second sub-cavity are sequentially in communication to form a bent channel of the dielectric cavity.

29. The cavity antenna according to any one of claims 17 to 28, wherein the conductive spacer structure is electrically connected to an inner surface of the conductive housing.

30. The cavity antenna according to any one of claims 17 to 29, wherein a fourth dielectric slot is further provided on the conductive housing, and a maximum size of the fourth dielectric slot is less than 1/2 of a wavelength of an electromagnetic wave radiated by the cavity antenna.

31. The cavity antenna according to any one of claims 17 to 30, wherein the conductive housing is provided with a metal conductive surface in both an extension direction of the first dielectric slot and a direction perpendicular to the extension direction of the first dielectric slot.

32. A notebook computer, comprising the cavity antenna according to any one of claims 17 to 31, wherein a conductive housing of the cavity antenna comprises a first computer housing and a second computer housing, the cavity antenna further comprises an enclosing structure, the enclosing structure, the first computer housing, and the second computer housing enclose a dielectric cavity of the cavity antenna, a second ventilation gap is provided at a joint between the first computer housing and the second computer housing, and the second ventilation gap is a first dielectric slot of the cavity antenna.

33. The notebook computer according to claim 32, wherein the cavity antenna comprises an embedded conductive housing, the embedded conductive housing comprises a first embedded portion and a second embedded portion, the first embedded portion is located on a side, away from the second ventilation gap, of the second embedded portion, the first embedded portion is the enclosing structure, the second embedded portion is the conductive spacer structure for dividing the dielectric cavity into the first sub-cavity and the second sub-cavity, a space between the conductive housing and an outer wall surface of the second embedded portion is the first sub-cavity, an inner cavity enclosed by the first embedded portion and the second embedded portion is the second sub-cavity, and at least one of the first computer housing and the second computer housing is electrically connected to the embedded conductive housing.

34. The notebook computer according to claim 33, wherein a circuit board is disposed in the notebook computer, the second embedded portion comprises a first housing plate, at least a part of the circuit board is located between the first housing plate and the conductive housing, a surface, attached to the first housing plate, of the circuit board is a first surface, a metal surface region is provided on the first surface, the metal surface region is electrically connected to the first housing plate, a dielectric slot is provided on the first housing plate, and the circuit board and the dielectric slot are configured to allow an electromagnetic wave to pass.

35. The notebook computer according to claim 34, wherein a dielectric surface region is provided on the first surface, the dielectric surface region is adjacent to the metal surface region, and a dielectric slot provided on the first housing plate is located in the dielectric surface region.

36. The notebook computer according to claim 34 or 35, wherein the second embedded portion comprises a second housing plate, a space between an outer wall surface of the second housing plate and the conductive housing is the first sub-cavity, a fourth air vent is provided on the second housing plate, a fifth air vent is provided on the enclosing structure, and the second ventilation gap, the first sub-cavity, the fourth air vent, the second sub-cavity, and the fifth air vent are sequentially in communication.

37. The notebook computer according to claim 36, wherein the first housing plate comprises a first housing sub-plate and a second housing sub-plate, the first housing sub-plate and the second housing sub-plate are located on two sides of the dielectric slot on the first housing plate, the first housing sub-plate is connected to the second housing plate, and the second housing sub-plate is connected to the first embedded portion.

38. The notebook computer according to claim 37, wherein there are at least two first housing sub-plates, the at least two first housing sub-plates are disposed at spacings along an extension direction of the dielectric slot on the first housing plate, a third through hole is provided between two adjacent first housing sub-plates, the third through hole passes through the first housing plate along a thickness direction of the first housing plate, the third through hole is in one-to-one communication with the fourth air vent, at least a part of the metal surface is located on one side of the third through hole, and the metal surface is electrically connected to the at least two first housing sub-plates.

39. The notebook computer according to claim 37 or 38, wherein there are at least two second housing sub-plates, the at least two second housing sub-plates are disposed at spacings along the extension direction of the dielectric slot on the first housing plate, a fourth through hole is provided between two adjacent second housing sub-plates, the fourth through hole passes through the first housing plate along the thickness direction of the first housing plate, the fourth through hole is in one-to-one communication with the fifth air vent, at least a part of the metal surface is located on one side of the fourth through hole, and the metal surface is electrically connected to the at least two second housing sub-plates.

40. The notebook computer according to claim 37, wherein there is one first housing sub-plate, and a part of a side edge, on a side near the first sub-cavity, of the first housing sub-plate forms a part of an edge of the fourth air vent.

41. The notebook computer according to claim 37 or 40, wherein there is one second housing sub-plate, and a part of a side edge, on a side facing away from the first sub-cavity, of the second housing sub-plate forms a part of an edge of the fifth air vent.

42. The notebook computer according to any one of claims 36 to 41, wherein the cavity antenna further comprises a feeding unit, and the feeding unit is located in the dielectric surface region to electrically connect the first embedded portion to the second housing plate.

43. A terminal, wherein the terminal is provided with the cavity antenna according to any one of claims 17 to 31, the terminal comprises a display, a housing, and a first blocking plate, the housing comprises a bezel and a rear housing, the bezel comprises a conductive bezel part, and the rear housing comprises a conductive rear housing part;
the conductive housing comprises the display, the conductive rear housing part, the conductive bezel part, and the first blocking plate, to enclose the dielectric cavity; and
the first dielectric slot comprises an assembly clearance between the display and the housing.

44. A terminal, wherein the terminal is provided with the cavity antenna according to any one of claims 17 to 31, the terminal comprises a first metal housing, a second metal housing, and a second blocking plate, and the conductive housing comprises the first metal housing, the second metal housing, and the second blocking plate, to enclose the dielectric cavity;
a first ventilation gap is provided between the first metal housing and the second metal housing, and the first dielectric slot comprises at least a part of the first ventilation gap; and
a first air vent is provided on the second blocking plate, a ventilation channel is provided between the first ventilation gap and the first air vent, and the ventilation channel at least partially overlaps the dielectric cavity.

45. The terminal according to claim 44, wherein the terminal comprises a filler, a conductive surface, and a conductive enclosing surface, the conductive surface and the conductive enclosing surface jointly enclose the dielectric cavity, and the filler fills the dielectric cavity; and
the conductive surface comprises a first antenna pattern and a second antenna pattern, the first dielectric slot is located on the first antenna pattern, and the second slot structure is located on the second antenna pattern.

46. The terminal according to claim 45, wherein at least one of the filler, the conductive surface, and the conductive enclosing surface is provided with a second air vent, to form a ventilation channel in the conductive housing.

47. A terminal, comprising a circuit board, wherein the circuit board is provided with the cavity antenna according to any one of claims 17 to 31, at least two layers of first plates are disposed on the circuit board, a metal layer is disposed on a surface of each of the two layers of first plates, a first metal via is provided between metal layers of the two layers of first plates, and the conductive housing comprises the metal layer and the first metal via, to enclose the dielectric cavity; and
the first dielectric slot is provided on a metal layer of at least one of the two layers of first plates.

48. The terminal according to claim 47, further comprising a second metal via, wherein the second metal via divides the dielectric cavity into a plurality of sub-cavities.

49. The terminal according to claim 47 or 48, wherein a feeder is disposed on at least one of the two layers of first plates, and the metal layer is electrically connected to the feeder.

50. The terminal according to any one of claims 47 to 49, wherein the electronic device further comprises an outer protective housing, the circuit board is located in the outer protective housing, and a second through hole is provided on the outer protective housing.
